(19) **Europäisches Patentamt / European Patent Office / Office européen des brevets**

(11) **EP 4 455 951 A1**

(12) # EUROPEAN PATENT APPLICATION
published in accordance with Art. 153(4) EPC

(43) Date of publication:
**30.10.2024 Bulletin 2024/44**

(21) Application number: **23777912.9**

(22) Date of filing: **21.03.2023**

(51) International Patent Classification (IPC):
***G06N 20/00*** (2019.01)

(52) Cooperative Patent Classification (CPC):
**G06F 9/48; G06F 9/50; G06N 20/00**

(86) International application number:
**PCT/CN2023/082652**

(87) International publication number:
**WO 2023/185539 (05.10.2023 Gazette 2023/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **28.03.2022 CN 202210311612**

(71) Applicant: **Huawei Technologies Co., Ltd.
Shenzhen, Guangdong 518129 (CN)**

(72) Inventors:
• **SHAO, Yunfeng
Shenzhen, Guangdong 518129 (CN)**
• **GUO, Kaiyang
Shenzhen, Guangdong 518129 (CN)**
• **WU, Jun
Shenzhen, Guangdong 518129 (CN)**

(74) Representative: **Grünecker Patent- und Rechtsanwälte
PartG mbB
Leopoldstraße 4
80802 München (DE)**

(54) **MACHINE LEARNING MODEL TRAINING METHOD, SERVICE DATA PROCESSING METHOD, APPARATUSES, AND SYSTEMS**

(57) This application provides a machine learning model training method, a service data processing method, and an apparatus, which are applied to the artificial intelligence field. In a training phase, a cloud server sends a machine learning submodel to an edge server. The edge server performs federated learning with client devices in a management domain of the edge server based on the obtained machine learning submodel, to obtain a trained machine learning submodel, and sends the trained machine learning submodel to the cloud server. The cloud server fuses obtained different trained machine learning submodels, to obtain a machine learning model. According to this solution, training efficiency of the machine learning model can be improved. In an inference phase, the client device processes service data by using the trained machine learning submodel. According to this solution, prediction efficiency of the machine learning model can be improved.

FIG. 1b

FIG. 2

EP 4 455 951 A1

**Description**

This application claims priority to Chinese Patent Application No. CN202210311612.7, filed with the China National Intellectual Property Administration on March 28, 2022 and entitled "MACHINE LEARNING MODEL TRAINING METHOD, SERVICE DATA PROCESSING METHOD, APPARATUS, AND SYSTEM", which is incorporated herein by reference in its entirety.

**TECHNICAL FIELD**

This application relates to the field of artificial intelligence technologies, and in particular, to a machine learning model training method, a service data processing method, an apparatus, and a system.

**BACKGROUND**

Federated learning (federated learning) is a distributed machine learning technology. Federated learning client (federated learning client, FLC) devices (for example, federated learning apparatuses 1, 2, 3, ..., and k) perform model training by using local computational resources and local network service data, and send, to a federated learning server (federated learning server, FLS), model parameter update information $\Delta\omega$ (for example, $\Delta\omega1$, $\Delta\omega2$, $\Delta\omega3$, ..., and $\Delta\omega k$) generated in a local training process. The federated learning server performs model fusion based on $\Delta\omega$ by using a fusion algorithm, to obtain a fused machine learning model. The fused machine learning model is used as an initial model for model training performed by the federated learning apparatus next time. The federated learning apparatus and the federated learning server perform the foregoing model training process multiple times, and stop training until an obtained fused machine learning model meets a preset condition.

Federated learning enables the federated learning client devices to collaborate to build a general-purpose, more robust machine learning model without sharing data. In an increasingly strict data supervision environment, federated learning can resolve key problems such as data ownership, data privacy, and data access rights, and has a great business value.

How to improve model training efficiency becomes a problem to be resolved.

**SUMMARY**

Embodiments of this application provide a machine learning model training method, a service data processing method, an apparatus, and a system. According to the solutions, training efficiency of a machine learning model can be improved in a training phase, and prediction efficiency of the machine learning model can be improved in an inference phase.

To achieve the foregoing objectives, embodiments of this application provide the following technical solutions.

According to a first aspect, an embodiment of this application provides a machine learning model training method, applied to an edge server. The edge server belongs to a management domain of a cloud server. The management domain of the cloud server may be understood as a set of servers or client devices managed by the cloud server, or a network including edge servers connected to the cloud server and client devices connected to the edge servers. That the edge server belongs to a management domain of a cloud server may be understood as that the edge server is managed by the cloud server, or the edge server is connected to the cloud server, or the edge server exchanges data and a model (for example, in the first aspect, the model includes a first machine learning submodel or a second machine learning submodel) with the cloud server. The method includes: First, the edge server obtains the first machine learning submodel from the cloud server, where there may be one or more first machine learning submodels. The first machine learning submodel is applied to a management domain of the edge server. The management domain of the edge server is a subset of the management domain of the cloud server, and may be understood as a set of client devices managed by the edge server. The management domain of the edge server may be understood as a network including client devices connected to the edge server. The edge server may exchange data and a model (for example, in the first aspect, the model includes the first machine learning submodel or the second machine learning submodel) with the client devices in the management domain of the edge server. Then, the edge server performs federated learning with a plurality of client devices in the management domain of the edge server based on the first machine learning submodel and local service data of the management domain of the edge server, to obtain the second machine learning submodel. The local service data of the management domain of the edge server may include user-related data or network-related data, and may be specifically data generated in a running process of the client device in the management domain of the edge server, for example, a log. For another example, the local service data may be data generated by the client device in the management domain of the edge server based on an operation of a user, for example, voice data generated based on a voice input operation of the user, text data generated based on a text input operation of the user, and image data generated based on a photographing operation of the user. Finally, the edge server sends the second machine learning submodel to the cloud server.

In this technical solution, the edge server obtains a machine learning submodel from the cloud server, where a parameter scale of the machine learning submodel is less than a parameter scale of a complete machine learning model stored in the cloud server. Because the parameter scale of the machine learning submodel is smaller, efficiency of performing federated learning based on the machine learning submodel by the edge server and a plurality of client devices in the management domain of the edge server is improved.

In addition, the client device does not need to store the complete machine learning model, and only needs to store the small-scale machine learning submodel to implement a local service requirement of the client device. This reduces a requirement for performance of the client device.

Furthermore, a plurality of edge servers may upload trained machine learning submodels to the cloud server in parallel, and the cloud server fuses the plurality of trained machine learning submodels. Compared with a manner in which the plurality of edge servers upload the trained machine learning submodels to the cloud server in series, the manner in which the plurality of edge servers upload the trained machine learning submodels to the cloud server in parallel can shorten duration required for transmitting the machine learning submodel, and further improve training efficiency of the machine learning model.

In addition, each client device and each edge server do not store the complete machine learning model, so that the complete machine learning model cannot be obtained through a single device, and attack resistance of the machine learning model is improved.

In a possible implementation of the first aspect, the first machine learning submodel is used to execute a set of sub-services in a user service. For example, the user service is a classification task, and sub-services in the user service may include a classification task for reptiles, a classification task for mammals, and the like.

In a possible implementation of the first aspect, the management domain of the cloud server is divided based on network area information or network slice information. The network area information may be physical area information (or geographic location information), and a same network area may be classified into a management domain. The network slice information may include network slice selection assistance information (network slice selection assistance information, NSSAI). The NSSAI includes one or more pieces of single network slice selection assistance information (single network slice selection assistance information, S-NSSAI). Networks applicable to same network slice information may be classified into a management domain. For example, the management domain of the cloud server may be a telecom operator network or a virtual operator network, and the management domain of the edge server may be an enterprise network (for example, a network system of an industry such as a bank, a government, or a large enterprise), a campus network, or the like.

In a possible implementation of the first aspect, the first machine learning submodel includes a selector and a plurality of task models, and obtaining the first machine learning submodel from the cloud server includes: obtaining the selector from the cloud server; inputting the local service data of the management domain of the edge server into the selector, to obtain identifiers IDs of the plurality of task models; sending the IDs of the plurality of task models to the cloud server; and receiving the plurality of task models sent by the cloud server. In this implementation, the plurality of task models are introduced. The cloud server stores all task models, and the edge server obtains some task models from the cloud server by using the selector based on distribution features of data obtained by different client devices. In this manner, the client device does not need to store all the task models, and only needs to store some task models to implement the local service requirement of the client device. This reduces the requirement for the performance of the client device.

In a possible implementation of the first aspect, performing federated learning with the plurality of client devices in the management domain of the edge server based on the first machine learning submodel and the local service data of the management domain of the edge server, to obtain the second machine learning submodel includes: sending the first machine learning submodel to the plurality of client devices, to trigger the plurality of client devices to use respective local service data and the selector to obtain weights corresponding to outputs of all the task models, and trigger the plurality of client devices to use the respective local service data, the plurality of task models, and the weights separately obtained by the plurality of client devices to obtain feature vectors corresponding to the local service data of the plurality of client devices; receiving clustering features sent by the plurality of client devices, where the clustering features are obtained after the plurality of client devices cluster the feature vectors separately obtained by the plurality of client devices; fusing clustering features with a same label, to obtain a fused clustering feature, where in this application, fusing feature vectors (for example, clustering features) may be understood as weighting the feature vectors, or may be understood as clustering the feature vectors, and a specific fusion means is not limited in this embodiment of this application; and sending the fused clustering feature to the plurality of client devices, to trigger the plurality of client devices to update parameters of the first machine learning submodel by using differences between the feature vectors and the fused clustering feature, where an updated first machine learning submodel is used to obtain the second machine learning submodel. In this implementation, a feature vector set is obtained in the training phase by using the local data of the client devices, the selector, and the task models, the selector and the task models are updated in the training phase by using the feature vector set, and then the feature vector set is updated by using an updated selector and updated task models. This is repeated until a training process is completed. In this manner, the machine learning submodel or the machine learning model can be quickly updated by using only a small amount of training data, and this helps improve model update efficiency.

In a possible implementation of the first aspect, the fused clustering feature has a confidence interval, and the confidence interval of the fused clustering feature is obtained after confidence intervals of the clustering features that are with the same label and that are sent by the plurality of client devices are fused.

According to a second aspect, an embodiment of this application provides a machine learning model training method, applied to a cloud server. A management domain of a first edge server is a first subset of a management domain of the cloud server, and a management domain of a second edge server is a second subset of the management domain of the cloud server. The method includes: sending a first machine learning submodel to the first edge server and sending a second machine learning submodel to the second edge server; receiving a third machine learning submodel from the first edge server and receiving a fourth machine learning submodel from the second edge server, where the third machine learning submodel is obtained by performing federated learning with a plurality of client devices in the management domain of the first edge server based on the first machine learning submodel and local service data of the management domain of the first edge server, and the fourth machine learning submodel is obtained by performing federated learning with a plurality of client devices in the management domain of the second edge server based on the second machine learning submodel and local service data of the management domain of the second edge server; and fusing the third machine learning submodel and the fourth machine learning submodel, to obtain a machine learning model. In this application, fusing models (for example, the third machine learning submodel and the fourth machine learning submodel) may be understood as weighting parameters of the models, or may be understood as performing model distillation by using local data and the to-be-fused models. A specific fusion means is not limited in this embodiment of this application.

In a possible implementation of the second aspect, the first machine learning submodel is used to execute a first set of sub-services in a user service.

In a possible implementation of the second aspect, the second machine learning submodel is used to execute a second set of sub-services in a user service.

In a possible implementation of the second aspect, the management domain of the cloud server is divided based on network area information or network slice information.

In a possible implementation of the second aspect, the first machine learning submodel includes a selector and a plurality of first task models, the second machine learning submodel includes a selector and a plurality of second task models, and the sending a first machine learning submodel to the first edge server and sending a second machine learning submodel to the second edge server includes: sending the selector to the first edge server and sending the selector to the second edge server; receiving identifiers IDs of the plurality of first task models from the first edge server and receiving IDs of the plurality of second task models from the second edge server, where the IDs of the plurality of first task models are obtained by the first edge server by inputting the local service data of the management domain of the first edge server into the selector, and the IDs of the plurality of second task models are obtained by the second edge server by inputting the local service data of the management domain of the second edge server into the selector; and sending the plurality of first task models to the first edge server and sending the plurality of second task models to the second edge server.

In a possible implementation of the second aspect, the method further includes: training an initial selector by using local service data of the management domain of the cloud server as training data and using correspondingly outputting an ID of a target task model for target training data as a training target, to obtain the selector, where the target training data is service data with a same label in the local service data of the management domain of the cloud server, and the ID of the target task model includes an ID of at least one task model in a plurality of task models stored in the cloud server. In this implementation, a specific manner of obtaining a selector is provided, and therefore solution diversity is increased.

In a possible implementation of the second aspect, the training data further includes auxiliary data, and the auxiliary data includes data with a same label as the local service data of the management domain of the cloud server. The auxiliary data is introduced in a training process, to provide more reference information for training the selector, so that the selector can make more accurate prediction for an input, and training efficiency of the selector is improved.

In a possible implementation of the second aspect, the training an initial selector by using local service data of the management domain of the cloud server as training data and using correspondingly outputting an ID of a target task model for target training data as a training target, to obtain the selector includes: fixing some parameters of the initial selector, and training the initial selector by using the local service data of the management domain of the cloud server as the training data and using correspondingly outputting the ID of the target task model for the target training data as the training target, to obtain the selector. In a training phase, some parameters of the selector are fixed for training, to be applicable to more scenarios in the future. For example, more task models may be introduced in the future.

In a possible implementation of the second aspect, the selector is N autoencoders, the N autoencoders are bound to N task models stored in the cloud server in a one-to-one manner, N is a positive integer greater than 1, and the method further includes: training an initial autoencoder by using service data with a same label in local service data of the management domain of the cloud server as training data, to obtain one of the autoencoders, where labels of training data of any two of the autoencoders are different. In this implementation, a specific manner of obtaining a selector is provided, and therefore solution diversity is increased.

According to a third aspect, an embodiment of this application provides a machine learning model training method, applied to a client device. The client device belongs to a management domain of a cloud server. That the client device belongs to a management domain of a cloud server may be understood as that the client device is managed by an edge server, or the client device is connected to an edge server, or the edge server exchanges data and a model (for example, in the third aspect, the model includes a first machine learning submodel or a second machine learning submodel) with an edge server. The method includes: receiving the first machine learning submodel sent by the edge server, where the first machine learning submodel is applied to a management domain of the edge server, and the management domain of the edge server is a subset of the management domain of the cloud server; and performing federated learning with the edge server and another client device in the management domain of the edge server based on the first machine learning submodel and local service data of the management domain of the edge server, to obtain the second machine learning submodel.

In a possible implementation of the third aspect, the first machine learning submodel is used to execute a set of sub-services in a user service.

In a possible implementation of the third aspect, the management domain of the cloud server is divided based on network area information or network slice information.

In a possible implementation of the third aspect, the performing federated learning with the edge server and another client device in the management domain of the edge server based on the first machine learning submodel and local service data of the management domain of the edge server, to obtain the second machine learning submodel includes: receiving the first machine learning submodel sent by the edge server; obtaining a feature vector based on local service data of the client device and the first machine learning submodel; clustering the feature vector to obtain a clustering feature; sending the clustering feature to the edge server, to trigger the edge server to fuse clustering features with a same label to obtain a fused clustering feature; receiving the fused clustering feature sent by the edge server; and updating a parameter of the first machine learning submodel by using a difference between the feature vector and the fused clustering feature, where an updated first machine learning submodel is used to obtain the second machine learning submodel.

In a possible implementation of the third aspect, the sending the clustering feature to the edge server, to trigger the edge server to fuse clustering features with a same label to obtain a fused clustering feature includes: sending the clustering feature and a confidence interval of the clustering feature to the edge server, to trigger the edge server to: fuse the clustering features with the same label to obtain the fused clustering feature, and fuse confidence intervals of the clustering features with the same label to obtain a confidence interval of the fused clustering feature.

In a possible implementation of the third aspect, the method further includes: obtaining target information, where the target information indicates proportions of service data with different labels in all service data of the management domain of the edge server; and sampling all service data of the client device based on the target information and proportions of service data with the different labels in all the service data of the client device, to obtain the local service data of the client device, where local service data of different client devices is used to obtain the local service data of the management domain of the edge server. The edge server and a plurality of client devices managed by the edge server may cooperate to perform data sampling to collect local important samples of the client devices, so that both a data volume of each client and robustness of important data after the client is offline are considered.

According to a fourth aspect, an embodiment of this application provides a service data processing method. The method includes: A client device obtains first service data, where the client device belongs to a management domain of a cloud server. The client device inputs the first service data into a second machine learning submodel, to obtain a first feature vector, where the second machine learning submodel is obtained by the client device by performing federated learning with an edge server and another client device in a management domain of the edge server based on a first machine learning submodel and local service data of the management domain of the edge server, the first machine learning submodel is applied to the management domain of the edge server, and the management domain of the edge server is a subset of the management domain of the cloud server. The client device obtains a prediction result for the first service data based on the first feature vector

In a possible implementation of the fourth aspect, the second machine learning submodel includes a selector and a plurality of task models, and that the client device inputs the first service data into a second machine learning submodel, to obtain a first feature vector includes: The client device inputs the first service data into the selector and the plurality of task models. The client device obtains, based on an output of the selector, a weight corresponding to each task model. The client device weighs outputs of the plurality of task models based on the weight, to obtain the first feature vector.

In a possible implementation of the fourth aspect, that the client device obtains a prediction result for the first service data based on the first feature vector includes: The client device obtains the prediction result for the first service data based on a similarity between the first feature vector and at least one first fused clustering feature and a label of the at least one first fused clustering feature.

In a possible implementation of the fourth aspect, that the client device obtains a prediction result for the first service data based on the first feature vector includes: The client device obtains the prediction result for the first service data based on a similarity between the first feature vector and at least one first fused clustering feature, a confidence interval of the at least one first fused clustering feature, and a label of the at least one first fused clustering feature.

In a possible implementation of the fourth aspect, the similarity between the first feature vector and the at least one first fused clustering feature is less than a first threshold, or the first feature vector is not within a confidence interval of any first fused clustering feature, and the method further includes: The client device broadcasts the first feature vector or the first service data in the management domain of the edge server.

In a possible implementation of the fourth aspect, the method further includes: The client device obtains a second feature vector, where a similarity between the second feature vector and at least one first fused clustering feature is less than a first threshold, or the second feature vector is not within a confidence interval of any first fused clustering feature. That the client device obtains a prediction result for the first service data based on the first feature vector includes: The client device obtains the prediction result for the first service data based on a similarity between the first feature vector and the at least one first fused clustering feature, a similarity between the first feature vector and the second feature vector, a label of the at least one first fused clustering feature, and a label of the second feature vector

In a possible implementation of the fourth aspect, the method further includes: The client device receives a second fused clustering feature from the edge server, where a deviation between the second fused clustering feature and any first fused clustering feature exceeds a second threshold. That the client device obtains a prediction result for the first service data based on the first feature vector includes: The client device obtains the prediction result for the first service data based on a similarity between the first feature vector and at least one first fused clustering feature, a similarity between the first feature vector and the second fused clustering feature, a label of the at least one first fused clustering feature, and a label of the second fused clustering feature.

In a possible implementation of the fourth aspect, the method further includes: The client device obtains a prediction result for a third feature vector when the second fused clustering feature uses different confidence intervals, where a similarity between the third feature vector and the at least one first fused clustering feature is less than a first threshold, or the third feature vector is not within a confidence interval of any first fused clustering feature. The client device obtains evaluation indicators for the different confidence intervals based on the prediction result. The client device sends the evaluation indicators of the different confidence intervals to the edge server, to trigger the edge server to obtain a confidence interval of the second fused clustering feature based on the obtained evaluation indicators of the different reference confidence intervals. The client device receives the confidence interval that is of the second clustering feature and that is sent by the edge server.

According to a fifth aspect, this application provides an edge server. The edge server is configured to perform the steps performed by the edge server in any one of the first aspect and the possible implementations provided in the first aspect.

In a possible design manner, in this application, the edge server may be divided into functional modules based on any one of the first aspect and the possible implementations provided in the first aspect. For example, each functional module may be obtained through division based on each corresponding function, or two or more functions may be integrated into one processing module.

For example, in this application, the edge server may be divided into a transceiver module, a processing module, and the like based on functions. For descriptions of possible technical solutions performed by the functional modules obtained through division and beneficial effect, refer to the technical solutions provided in the first aspect or the corresponding possible implementations of the first aspect. Details are not described herein again.

In another possible design, the edge server includes a memory and a processor, where the memory is coupled to the processor. The memory is configured to store computer instructions. The processor is configured to invoke the computer instructions, to perform the method provided in the first aspect or the corresponding possible implementations of the first aspect.

According to a sixth aspect, this application provides a cloud server. The cloud server is configured to perform the steps performed by the cloud server in any one of the second aspect and the possible implementations provided in the second aspect.

In a possible design manner, in this application, the cloud server may be divided into functional modules based on any one of the second aspect and the possible implementations provided in the second aspect. For example, each functional module may be obtained through division based on each corresponding function, or two or more functions may be integrated into one processing module.

For example, in this application, the cloud server may be divided into a transceiver module, a processing module, and the like based on functions. For descriptions of possible technical solutions performed by the functional modules obtained through division and beneficial effect, refer to the technical solutions provided in the second aspect or the corresponding possible implementations of the second aspect. Details are not described herein again.

In another possible design, the cloud server includes a memory and a processor, where the memory is coupled to the processor. The memory is configured to store computer instructions. The processor is configured to invoke the computer instructions, to perform the method provided in the second aspect or the corresponding possible implementations of the second aspect.

According to a seventh aspect, this application provides a client device. The client device is configured to perform the steps performed by the client device in any one of the third aspect and the possible implementations provided in the third aspect, or is configured to perform the steps performed by the client device in any one of the fourth aspect and the possible implementations provided in the fourth aspect.

In a possible design manner, in this application, the client device may be divided into functional modules based on any one of the third aspect and the possible implementations provided in the third aspect or the steps performed by the client device in any one of the fourth aspect and the possible implementations provided in the fourth aspect. For example, each functional module may be obtained through division based on each corresponding function, or two or more functions may be integrated into one processing module.

For example, in this application, the client device may be divided into a transceiver module, a processing module, and the like based on functions. For descriptions of possible technical solutions performed by the functional modules obtained through division and beneficial effect, refer to the technical solutions provided in the third aspect or the corresponding possible implementations of the third aspect or the technical solutions provided in any one of the fourth aspect and the possible implementations provided in the fourth aspect. Details are not described herein again.

In another possible design, the client device includes a memory and a processor, where the memory is coupled to the processor. The memory is configured to store computer instructions. The processor is configured to invoke the computer instructions, to perform the method provided in the third aspect or the corresponding possible implementations of the third aspect or the method provided in any one of the fourth aspect and the possible implementations of the fourth aspect.

According to an eighth aspect, this application provides a computer-readable storage medium, for example, a non-transient computer-readable storage medium. The computer-readable storage medium stores a computer program (or instructions). When the computer program (or the instructions) is (or are) run on a computer device, the computer device is enabled to perform the method provided in the first aspect or the corresponding possible implementations of the first aspect, the method provided in the second aspect or the corresponding possible implementations of the second aspect, the method provided in the third aspect or the corresponding possible implementations of the third aspect, or the method provided in the fourth aspect or the corresponding possible implementations of the fourth aspect.

According to a ninth aspect, this application provides a computer program product. When the computer program product runs on a computer device, the method provided in the first aspect or the corresponding possible implementations of the first aspect, the method provided in the second aspect or the corresponding possible implementations of the second aspect, the method provided in the third aspect or the corresponding possible implementations of the third aspect, or the method provided in the fourth aspect or the corresponding possible implementations of the fourth aspect is implemented.

According to a tenth aspect, this application provides a chip system. The chip system includes a processor. The processor is configured to invoke, from a memory, a computer program stored in the memory and run the computer program, to perform the method provided in the first aspect or the corresponding possible implementations of the first aspect, the method provided in the second aspect or the corresponding possible implementations of the second aspect, the method provided in the third aspect or the corresponding possible implementations of the third aspect, or the method provided in the fourth aspect or the corresponding possible implementations of the fourth aspect.

It may be understood that any system, apparatus, computer storage medium, computer program product, chip system, or the like provided above can be applied to the corresponding method provided in the first aspect, the second aspect, the third aspect, or the fourth aspect.

According to an eleventh aspect, this application provides a machine learning model processing system. The system includes a cloud server, a first edge server, a second edge server, and client devices, a management domain of the first edge server is a first subset of a management domain of the cloud server, and a management domain of the second edge server is a second subset of the management domain of the cloud server. The first edge server is configured to: receive a first machine learning submodel from the cloud server; and perform federated learning with a plurality of client devices in the management domain of the first edge server based on the first machine learning submodel and local service data of the management domain of the first edge server, to obtain a third machine learning submodel, where the first machine learning submodel is applied to the management domain of the first edge server. The second edge server is configured to: receive a second machine learning submodel from the cloud server; and perform federated learning with a plurality of client devices in the management domain of the second edge server based on the second machine learning submodel and local service data of the management domain of the second edge server, to obtain a fourth machine learning submodel, where the second machine learning submodel is applied to the management domain of the second edge server. The cloud server is configured to: receive the third machine learning submodel from the first edge server and receive the fourth machine learning submodel from the second edge server; and fuse the third machine learning submodel and the fourth machine learning submodel, to obtain a machine learning model.

In a possible implementation of the eleventh aspect, the first machine learning submodel is used to execute a set of sub-services in a user service.

In a possible implementation of the eleventh aspect, the second machine learning submodel is used to execute a second set of sub-services in a user service.

In a possible implementation of the eleventh aspect, the management domain of the cloud server is divided based on network area information or network slice information.

In a possible implementation of the eleventh aspect, the first machine learning submodel includes a selector and a plurality of task models, and the edge server is configured to: obtain the selector from the cloud server; input the local service data of the management domain of the edge server into the selector, to obtain identifiers IDs of the plurality of task models; send the IDs of the plurality of task models to the cloud server; and receive the plurality of task models sent by the cloud server.

In a possible implementation of the eleventh aspect, the edge server is specifically configured to: send the first machine learning submodel to the plurality of client devices, to trigger the plurality of client devices to use respective local service data and the selector to obtain weights corresponding to outputs of all the task models, and trigger the plurality of client devices to use the respective local service data, the plurality of task models, and the weights separately obtained by the plurality of client devices to obtain feature vectors corresponding to the local service data of the plurality of client devices; receive clustering features sent by the plurality of client devices, where the clustering features are obtained after the plurality of client devices cluster the feature vectors separately obtained by the plurality of client devices; fuse clustering features with a same label, to obtain a fused clustering feature; and send the fused clustering feature to the plurality of client devices, to trigger the plurality of client devices to update parameters of the first machine learning submodel by using differences between the feature vectors and the fused clustering feature, where an updated first machine learning submodel is used to obtain the second machine learning submodel.

In a possible implementation of the eleventh aspect, the fused clustering feature has a confidence interval, and the confidence interval of the fused clustering feature is obtained after confidence intervals of the clustering features that are with the same label and that are sent by the plurality of client devices are fused.

In a possible implementation of the eleventh aspect, the cloud server is further configured to: train an initial selector by using local service data of the management domain of the cloud server as training data and using correspondingly outputting an ID of a target task model for target training data as a training target, to obtain the selector, where the target training data is service data with a same label in the local service data of the management domain of the cloud server, and the ID of the target task model includes an ID of at least one task model in a plurality of task models stored in the cloud server.

In a possible implementation of the eleventh aspect, the training data further includes auxiliary data, and the auxiliary data includes data with a same label as the local service data of the management domain of the cloud server.

In a possible implementation of the eleventh aspect, the cloud server is specifically configured to: fix some parameters of the initial selector, and train the initial selector by using the local service data of the management domain of the cloud server as the training data and using correspondingly outputting the ID of the target task model for the target training data as the training target, to obtain the selector.

In a possible implementation of the eleventh aspect, the selector is N autoencoders, the N autoencoders are bound to N task models stored in the cloud server in a one-to-one manner, N is a positive integer greater than 1, and the cloud server is further configured to: train an initial autoencoder by using service data with a same label in local service data of the management domain of the cloud server as training data, to obtain one of the autoencoders, where labels of training data of any two of the autoencoders are different.

In a possible implementation of the eleventh aspect, any first client device in the management domain of the first edge server is further configured to: obtain target information, where the target information indicates proportions of service data with different labels in all service data of the management domain of the first edge server; and sample all service data of the first client device based on the target information and proportions of service data with the different labels in all the service data of the first client device, to obtain local service data of the first client device, where local service data of different first client devices is used to obtain the local service data of the management domain of the first edge server.

In this application, a name of any one of the foregoing apparatuses does not constitute any limitation on devices or functional modules. In actual implementation, these devices or functional modules may have other names. As long as functions of the devices or functional modules are similar to those in this application, the devices or functional modules

EP 4 455 951 A1

fall within the scope of the claims of this application and their equivalent technologies.

**BRIEF DESCRIPTION OF DRAWINGS**

FIG. 1a is a diagram of an architecture of a horizontal federated learning system;
FIG. 1b is a diagram of an architecture of another horizontal federated learning system;
FIG. 2 is a schematic flowchart of a machine learning model training method according to an embodiment of this application;
FIG. 3 is a diagram of an architecture of a horizontal federated learning system according to an embodiment of this application;
FIG. 4 is a schematic flowchart of another machine learning model training method according to an embodiment of this application;
FIG. 5a is a schematic flowchart of obtaining a selection model according to an embodiment of this application;
FIG. 5b is another schematic flowchart of obtaining a selection model according to an embodiment of this application;
FIG. 5c is another schematic flowchart of obtaining a selection model according to an embodiment of this application;
FIG. 6 is a diagram of an architecture of obtaining a selector according to an embodiment of this application;
FIG. 7 is a diagram of another architecture of obtaining a selector according to an embodiment of this application;
FIG. 8 is a diagram of an architecture of a selector according to an embodiment of this application;
FIG. 9 is a diagram of an architecture of another selector according to an embodiment of this application;
FIG. 10 is a diagram of an architecture of another selector according to an embodiment of this application;
FIG. 11 is a schematic flowchart of another machine learning model training method according to an embodiment of this application;
FIG. 12 is a diagram of a structure of a feature extraction model according to an embodiment of this application;
FIG. 13 is a diagram of a structure of another feature extraction model according to an embodiment of this application;
FIG. 14 is a diagram of obtaining an anchor feature vector set according to an embodiment of this application;
FIG. 15 is a diagram of obtaining a confidence interval of a clustering center according to an embodiment of this application;
FIG. 16 is a schematic flowchart of a machine learning model inference method according to an embodiment of this application;
FIG. 17 is a schematic flowchart of another machine learning model inference method according to an embodiment of this application;
FIG. 18 is a schematic flowchart of another machine learning model inference method according to an embodiment of this application;
FIG. 19 is a schematic flowchart of another machine learning model inference method according to an embodiment of this application;
FIG. 20 is a schematic flowchart of another machine learning model training method according to an embodiment of this application;
FIG. 21 is a schematic flowchart of another machine learning model training method according to an embodiment of this application;
FIG. 22 is a diagram of an architecture of a machine learning model according to an embodiment of this application;
FIG. 23 is a diagram of an architecture of another machine learning model according to an embodiment of this application;
FIG. 24 is a diagram of a typical application scenario to which an embodiment of this application is applicable;
FIG. 25 is a diagram of a structure of an electronic device according to an embodiment of this application; and
FIG. 26 is a diagram of a structure of another electronic device according to an embodiment of this application.

**DESCRIPTION OF EMBODIMENTS**

The following describes technical solutions in embodiments of this application with reference to the accompanying drawings in embodiments of this application. It is clear that the described embodiments are merely a part rather than all of embodiments of this application. All other embodiments obtained by a person skilled in the art based on embodiments of this application without creative efforts shall fall within the protection scope of this application.

Embodiments of this application provide a federated learning system and a federated learning-based data processing method and apparatus. For better understanding of the solutions provided in embodiments of this application, the following first describes research ideas of the solutions provided in embodiments of this application.

Federated learning is a distributed machine learning paradigm that enables a plurality of parties to use all respective data to collaboratively train an artificial intelligence (artificial intelligence, AI) model without aggregating data of the plurality of parties. In a conventional machine learning paradigm, a large amount of data for model training needs to be aggregated, and the data used for training may come from a plurality of different organizations, users, participants, or clients. If data of a plurality of parties is aggregated, data leakage is highly likely to occur. For organizations, information assets may be exposed. For individual users, personal privacy may be disclosed. The foregoing problems pose a severe challenge to AI model training. To resolve the foregoing problems, a federated learning technology emerges. Federated learning allows data of a plurality of parties to be retained locally and not to be aggregated. The plurality of parties (securely) exchange intermediate computation results through collaborative computing to jointly train an AI model. The federated learning technology protects service data of the plurality of parties, and can make full use of the data of the plurality of parties to collaboratively train the model to obtain a more powerful model.

Federated learning can be classified into horizontal federation and vertical federation based on scenarios. Horizontal federation is confronted with multi-party collaborative modeling in which data features are the same but data distribution is inconsistent. In other words, training data of participants in horizontal federation has same feature space but different sample space. Vertical federation is confronted with collaborative modeling in scenarios in which data features are different but a plurality of parties have a same sample (user). In other words, training data of participants in vertical federation has different feature space but same sample space.

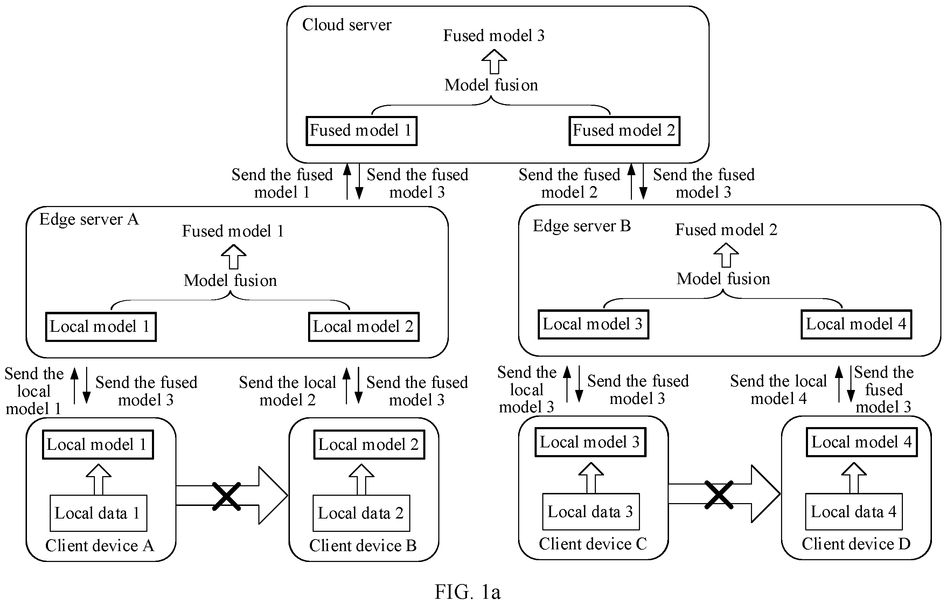

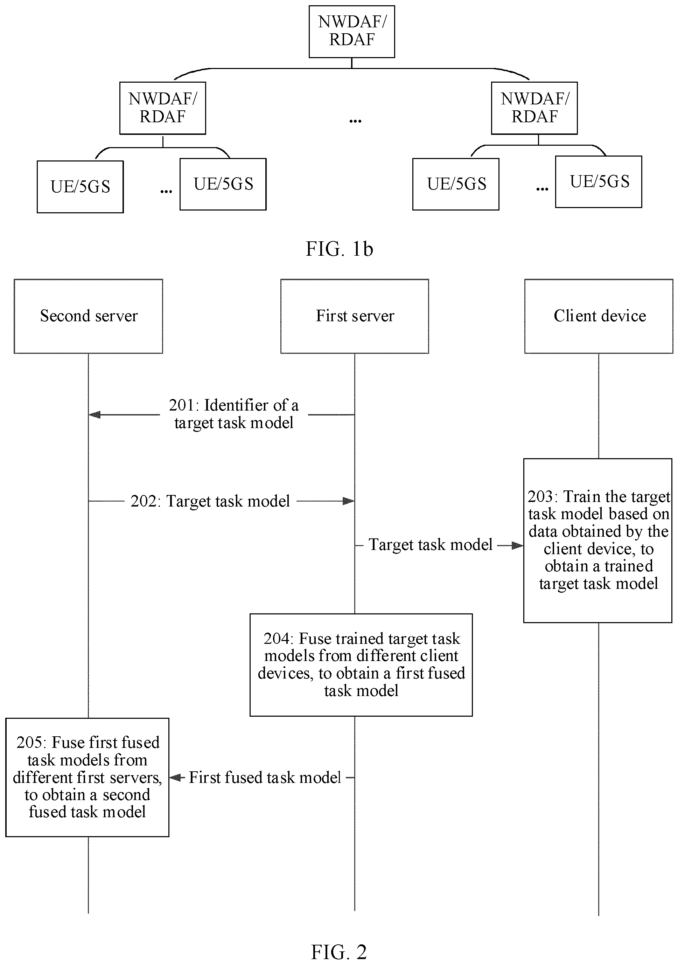

FIG. 1a is a diagram of an architecture of a horizontal federated learning system. The horizontal federated learning system usually structurally includes a collaborator and participants. In this application, sometimes, the collaborator is also referred to as a server, and the participant is referred to as a client device. In some possible implementations, there may be a plurality of collaborators, for example, one cloud server and a plurality of edge servers. In this implementation, the participant does not directly interact with the cloud server, and the participant interacts with the cloud server through the edge server, to save communication resources. In this application, sometimes, the cloud server is also referred to as a cloud device, the edge server is referred to as an edge apparatus, and the client device is referred to as a client, a client-side device, a data processing apparatus, or a voice data processing apparatus. A person skilled in the art may understand that these similar expressions represent a same meaning. In a possible implementation, both the edge server and the cloud server are service data analytics network elements, but deployment locations of the edge server and the cloud server are different. A deployment location of the edge server is close to the client device, and a deployment location of the cloud server is far away from the client device. For example, the edge server and the cloud server may be network data analytics functions (network data analytics functions, NWDAFs) or radio access network data analytics functions (radio access network data analytics functions, RDAFs). In a possible implementation, the edge server may alternatively be a server in an enterprise or the like. In a possible implementation, the client-side device may be a terminal, for example, a mobile phone terminal, a tablet computer, a notebook computer, an augmented reality (augmented reality, AR)/virtual reality (virtual reality, VR) device, a vehicle-mounted terminal, a device used for security protection (for example, a surveillance camera device, a smoke alarm device, or a fire extinguishing device), a smart speaker, a device in a 5G system (5G system), user equipment (user equipment, UE)/a user terminal, or the like; or may be a physical machine, a virtual machine, an integrated machine, or the like. FIG. 1b is a diagram of an architecture of a possible horizontal federated learning system.

In addition, it should be noted that the model in this application includes a neural network model. A specific type of the model is not limited in this application. For example, the model in this application may be a convolutional neural network model, a recurrent neural network model, a deep residual network model, or the like. The following does not repeat content in this paragraph.

The following uses an example in which a horizontal federated learning system includes a plurality of collaborators to describe a model training process related to horizontal federated learning. In the horizontal federated learning system, training data of a model maintained by a plurality of participants has same data feature space but different sample space. A working procedure mainly includes model delivery and model fusion processes. In a model delivery process, a cloud server delivers a model to an edge server; and a client device managed by the edge server downloads the model from the edge server, trains, by using locally stored training data, the model downloaded from the edge server, and uploads a model to the edge server after training the model to a specific extent, where "training the model to a specific extent" may be understood as training the model for a fixed quantity of rounds. In a model fusion process, the edge server collects models uploaded by client devices, and fuses the models; the cloud server collects fused models uploaded by edge servers, fuses the models, and delivers a fused model to the edge server; and the edge server delivers the fused model to the client device. The two processes, namely, the model delivery process and the model fusion process, are iterated repeatedly until the models are converged. It should be noted that, for ease of description, in FIG. 1a, two edge servers and four client devices are used as an example to show the solution. However, a quantity of edge servers and a quantity of clients included in the system are not limited in embodiments of this application.

The applicant finds that the conventional horizontal federated learning system shown in FIG. 1a has at least the following defects:

(1) The collaborator and each participant need to store a same model. To enable a trained model to be applicable to more complex scenarios, in other words, to enable the trained model to be used for accurate prediction for data obtained by each participant, a parameter scale of the trained model is usually large. This poses an excessive high requirement on performance of each participant. For example, storage performance and processing performance of each participant are required to reach specific levels, so that the trained model can be normally stored, and an inference task can be efficiently executed based on the trained model. In other words, the storage performance and the processing performance of each participant are required to reach the specific levels, to ensure that a computation amount of a model with a large training parameter scale can be borne in a training phase, and prediction can be efficiently performed based on the trained model in an inference phase.

(2) A parameter used in each round of model update needs to be based on a large amount of training data obtained by each participant. This is not conducive to quick model update. In some scenarios, when distribution of training data of a participant having a large amount of training data changes, an overfitting problem may easily occur in a fused model.

In addition, the existing conventional horizontal federated learning system may further have other defects, for example, poor anti-attack performance, to be specific, the entire trained model may be obtained through a single device (for example, a single client device), and consequently, the entire horizontal federated learning system may be poisoned.

For various defects of the existing conventional horizontal federated learning system mentioned above, embodiments of this application provide the following ideas:

For the defect (1), in the solutions provided in embodiments of this application, a selector and a plurality of task models are introduced. Local data of a participant is input into the selector, and a task model suitable for the participant is selected from the plurality of task models based on an output of the selector. A collaborator delivers only the task model suitable for the participant to the participant, but does not deliver all the task models to the participant. In this design manner, the participant does not need to store a model with a large parameter scale, and only needs to store a small-scale model. This reduces a requirement on performance of the participant.

For the defect (2), in embodiments of this application, a feature vector set is obtained in a training phase by using local data of participants, the selector, and the task models, the selector and the task models are updated in the training phase by using the feature vector set, and then the feature vector set is updated by using an updated selector and updated task models. This is repeated until a training process is completed. In this manner, a training solution different from a conventional solution is provided for a federated learning system. This training manner can improve a model update rate.

Based on the foregoing research ideas, the following describes the solutions provided in embodiments of this application.

I. Training phase

FIG. 2 is a schematic flowchart of a machine learning model training method according to an embodiment of this application. The method may include the following steps:

201: A first server sends an identifier of a target task model to a second server

The identifier (identification, ID) of the target task model is determined based on data obtained by client devices.

The data obtained by the client devices includes data locally obtained by the clients and data obtained by the client devices from other devices, and may be understood as data that the client devices have permission to obtain. The data obtained by the clients may be data of a plurality of types, for example, data of an image type, data of a voice type, or data of a text type.

In a possible implementation, the ID of the target task model is directly determined based on the data obtained by the client devices. For example, the ID of the target task model is determined based on a distribution feature of the data obtained by the client devices. In a possible implementation, the ID of the target task model is indirectly determined based on the data obtained by the client devices. For example, data may be constructed based on a distribution feature of the data obtained by the client devices, and the ID of the target task model is determined based on the constructed data. For ease of description of this solution, the following embodiments are described by using an example in which the ID of the target task model is directly determined based on the data obtained by the client devices. However, it should be clarified that the ID of the target task model may alternatively be determined based on the data constructed based on the data obtained by the client devices.

A principle for selecting the target task model is that the target task model can have good feature extraction effect on the data obtained by the client devices. The good feature extraction effect is reflected in that after the target task model is used to perform feature extraction on the data obtained by the client devices, an obtained feature vector has good clustering effect, in other words, has good clustering effect.

202: The second server sends the target task model to the first server based on the ID of the target task model.

The second server obtains, based on the ID of the target task model, the target task model from a plurality of task models stored in the second server, and sends the target task model to the first server. In a possible implementation, the task model is a model related to a to-be-implemented task, for example, an image classification task (where an input of the task model is an image, an output of the task model is extracted information, and the task model is used to complete feature extraction of the image classification task) or a data center energy consumption regression task (where an input of the task model is a wide table including an external environment and a controlled quantity, an output of the task model is an energy consumption value, and the task model is used to complete feature extraction of the energy consumption regression task).

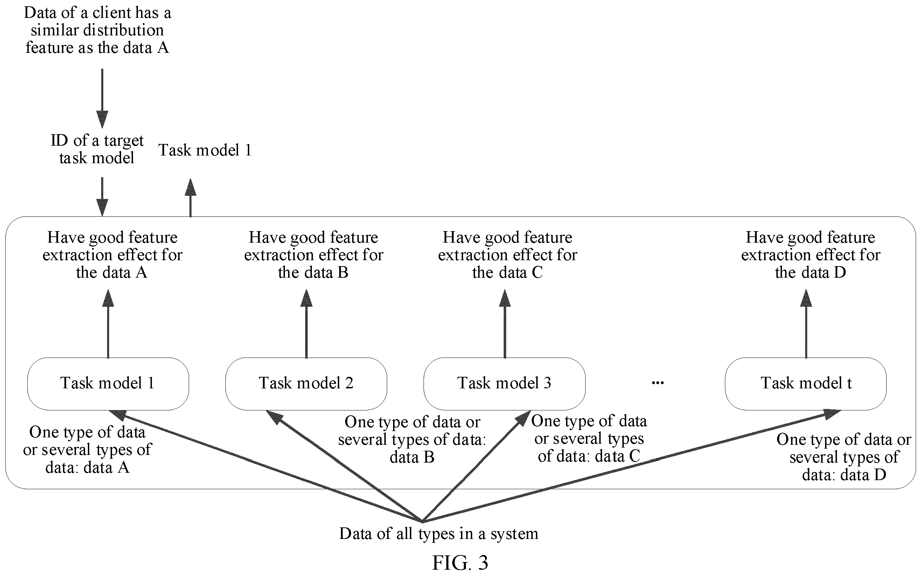

With reference to FIG. 3, compared with the conventional solution, in the solution provided in this embodiment of this application, a plurality of task models are introduced into a cloud device. Each task model may have good feature extraction effect for only one type of data or several types of data. The good feature extraction effect is reflected in that after the task model is used to perform feature extraction on the type of data or the several types of data, an obtained feature vector has good clustering effect, in other words, has good clustering effect. In the solution provided in this embodiment of this application, the second server does not actively deliver all the locally stored task models to the first server, and only sends, to the first server based on a request of the first server, a task model that the first server requests to send, that is, delivers only the target task model to the first server.

203: The client device trains the target task model based on data obtained by the client device, to obtain a trained target task model.

After obtaining the target task model, the first server delivers the obtained target task model to a plurality of clients managed by the first server. After obtaining the target task model, the client trains the target task model by using data obtained by the client, to obtain a trained target task model.

After receiving the target task model, the client may add a self-learning model based on the target task model. For example, the client may use the target task model as an encoder of an autoencoder, and add a corresponding decoder to form the autoencoder, to perform self-supervised learning. An objective of the self-supervised learning may be to recover original data or a part of the original data, or may be to recover a difference or a part of the difference between the original data and a recovery value of an autoencoder of a previous version.

A training target of the target task model may be obtained based on an actual requirement. For example, if the data obtained by the client device is voice data, and the actual requirement is voice recognition, the target task model may be a voice recognition model, and the training target is to accurately perform voice recognition for voice data input into the target task model. For another example, if the data obtained by the client device is image data, and the actual requirement is image classification, the target task model may be an image classification model, and the training target is to accurately perform image classification for image data input into the target task model.

In a possible implementation, the data obtained by the client device may be classified. In a process of training the target task model, different weights are assigned to different types of data, to improve impact of data of an important type on a parameter change of the target task model. For example, the following provides a possible classification manner:

One type or several types of data that accounts for a large proportion in quantity in client devices is considered as a big-class sample set. For example, the set is represented by $\left\{x_{sn,cn,rn}^{big}\right\}_{rn=1}^{rN_{sn,cn}^{big}}$ , where $x_{sn,cn,rn}^{big}$ represents an $rn^{th}$ piece of big-class sample data of a $cn^{th}$ client device managed by an $sn^{th}$ first server in a federated learning system. One type or several types of data that accounts for a small proportion in quantity in the client devices is considered as a small-class sample set. For example, the set is represented by $\left\{x_{sn,cn,rn}^{small}\right\}_{rn=1}^{rN_{sn,cn}^{small}}$ , where $x_{sn,cn,rn}^{small}$ represents an $rn^{th}$ piece of small-class sample data of the $cn^{th}$ client device managed by the $sn^{th}$ first server. A data set obtained through sampling from the big-class sample set is referred to as an important sample set. For example, the set is represented by $\left\{x_{sn,cn,rn}^{imp}\right\}_{rn=1}^{rN_{sn,cn}^{imp}}$ . The first server and the plurality of client devices managed by the first server may cooperate to perform data sampling to collect local important samples of the client devices, so that both a data volume of each client and robustness of important data after the client is offline are considered. For example, data of the plurality of client devices is clustered, and each client device extracts some points from each cluster as important samples. For example, in a possible implementation, the client device may obtain target information, where the target information indicates proportions of data with different labels in data obtained by different client devices. The target information may be obtained by the first server through statistics collection, and sent to each client device. The client device samples, based on the target information and proportions of data with the different labels in the data obtained by the client device, the data obtained by the client device, to obtain a local important sample set. For example, if the target information indicates that proportions of data with a label A in the data obtained by the different client devices are very low, and proportions of data with a label B in the data obtained by the different client devices are very high, in a process of collecting important samples, the client device may collect, based on the target information from a locally obtained big-class sample set, more data with the label A and less data with the label B. For better understanding of this solution, the following further provides descriptions with reference to a specific implementation.

Each client device participating in joint important sample collection receives the target information delivered by the first server. For example, the target information includes $cluster = \{cc_i, cn_i, cnm_i, cn\sigma_i\}_{i=1}^{I}$ and an average value nm of a total quantity of pieces of data to a quantity of clients (or an average quantity of pieces of data of each client). $cc_i$ represents a clustering feature (where the clustering feature is sometimes also referred to as a clustering center or clustering center information in this application, the names represent a same meaning, and details are not described below again) of an $i^{th}$ type, $cn_i$ represents a quantity of pieces of data of the $i^{th}$ type, $cnm_i$ represents an average value of the quantity of pieces of data of the $i^{th}$ type, and $cn\sigma_i$ represents a variance of the quantity of pieces of data of the $i^{th}$ type. A quantity $cluster^l = \{cn_i^l\}_{i=1}^{I}$ of pieces of data in each cluster and a total quantity $n^l$ of pieces of data are locally calculated, and a quantity $sn_i$ of pieces of data extracted from each cluster is locally calculated.

If $cn\sigma_i$ is less than a set threshold, it indicates that data is balanced. In this case:

$$ sn_i = \frac{nm}{n^l} \cdot \frac{cn_i^l}{cn_i} \cdot cn_i^l $$

If $cn\sigma_i$ is less than the set threshold, it indicates that a large amount of data of a specific type exists in the client device. In this case, to resolve a problem that the client device is offline:

$$ \text{if } cn_i^l < cnm_i, \quad sn_i = \frac{nm}{n^l} \cdot \frac{cn_i^l}{cn_i} \cdot cn_i^l \cdot \mu_1; $$

and

$$ \text{if } cn_i^l \geq cnm_i, \quad sn_i = \frac{nm}{n^l} \cdot \frac{cn_i^l}{cn_i} \cdot cn_i^l \cdot \mu_2. $$

$\mu_1 \geq 1$ and $\mu_2 \leq 1$ are set parameters.

The client device samples big-class data based on the calculated quantity $sn_i$ of pieces of data extracted from each cluster, and stores sampled data in the important sample set.

In a possible implementation, a weight of data in the small-class sample set may be increased, and impact of the data in the small-class sample set on the parameter change of the target task model may be increased.

204: The first server fuses trained target task models from different client devices, to obtain a first fused task model.

In the solution provided in this embodiment of this application, the federated learning system may include a plurality of first servers (where for ease of description, in this embodiment of this application, one first server is used as an example to describe the solution). Each first server may manage a plurality of client devices (where for ease of description, in this embodiment of this application, one client device managed by one server is used as an example to describe the solution). In a possible implementation, that the first server manages a plurality of client devices may be understood as follows: In the entire federated learning system, data obtained by the plurality of client devices is closely distributed. In this case, the plurality of client devices are managed by the same first server, and the first server fuses trained target task models from the plurality of clients. For example, in a voice recognition scenario, in the entire federated learning system, all client devices are mainly distributed in Sichuan and Liaoning. There is a high probability that voice data mainly collected by a client device in Sichuan is Sichuan dialect, and there is a high probability that voice data mainly collected by a client device in Liaoning is Northeastern dialect. It may be considered that voice data obtained by client devices in Sichuan is closely distributed, and voice data obtained by client devices in Liaoning is closely distributed. Therefore, the client devices in Sichuan are managed by one first server, and the client devices in Liaoning are managed by another first server.

Fusing may be understood as weighting the trained target task models from the different client devices, for example, weighting same parameters of the trained target task models from the different client devices, to obtain the first fused task model.

205: The second server fuses first fused task models from different first servers, to obtain a second fused task model.

In this embodiment of this application, the first fused task models from the different first servers may be fused in a plurality of manners. A specific fusion means is not limited in this embodiment of this application. For example, in this embodiment of this application, fusing models (for example, the first fused task models from the different first servers) may be understood as weighting parameters of the models. Specifically, same parameters of the first fused task models from the different first servers are weighted, to obtain the second fused task model. For another example, in this embodiment of this application, fusing models (for example, the first fused task models from the different first servers) may be understood as performing model distillation on the to-be-fused models. Model distillation, also referred to as knowledge distillation, uses transfer learning to train another simple network by using an output of a pre-trained complex model as a supervised signal. It may be understood as generalizing a capability or transferring "knowledge" in the trained complex model to a network with a simpler structure. Alternatively, it may be understood as learning "knowledge" in the complex model through the simple network. During knowledge distillation, another simple network may be trained by using a pre-trained complex network, so that the simple network can have a data processing capability the same as or similar to that of the complex network. During knowledge distillation, another type of network may alternatively be trained by using a type of pre-trained network, so that the foregoing two types of networks may have same or similar data processing capabilities. In other words, one type of network may be used as a teacher model, and another type of network may be used as a student model, to perform knowledge distillation on the student model, so that the student model may have a data processing capability the same as or similar to that of the teacher model. Specifically, the to-be-fused models may be used to perform inference on data obtained by the second server, an inference result is used as a label of the data, and then the data and the label of the data are used as training data for training to obtain a new model, that is, the second fused task model.

In the solution provided in this embodiment of this application, the plurality of task models are introduced. The cloud device stores all the task models, and an edge device obtains some task models from the cloud device based on a distribution feature of data obtained by different client devices. In this manner, the client device does not need to store a large-scale fused model, and only needs to store a small-scale fused model to implement a local service requirement of the client device. This reduces a requirement for performance of the client device.

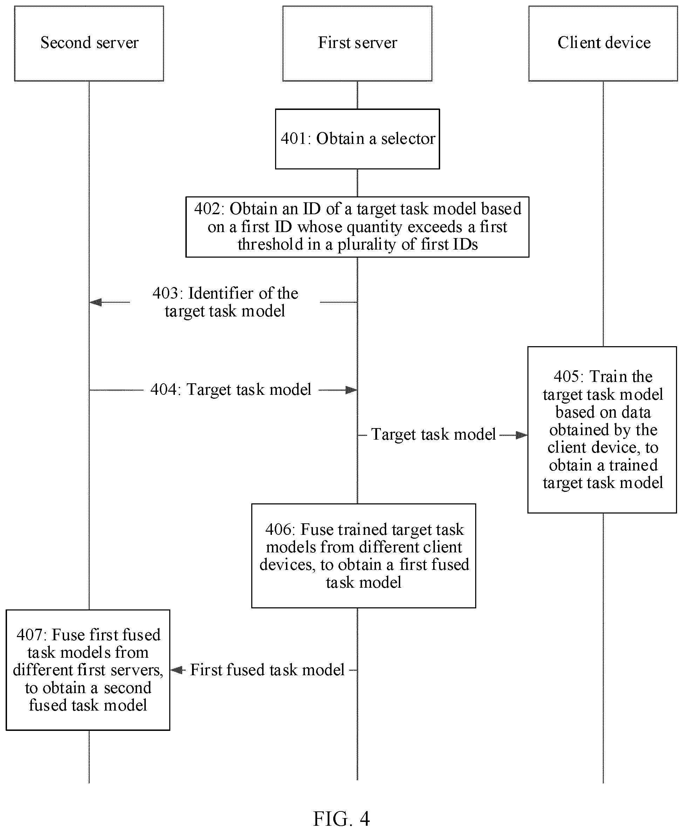

FIG. 4 is a schematic flowchart of another machine learning model training method according to an embodiment of this application. The method may include the following steps:

401: A first server obtains a selector.

The selector is used to obtain an ID of a target task model from IDs of a plurality of task models. The selector may be understood as a model for selecting the target task model for client devices based on distribution of data obtained by the client devices. An input of the selector is the data obtained by the client devices or the distribution of the data, and an output of the selector is an ID of a selected task model, that is, the ID of the target task model.

In a possible implementation, a parameter of the selector obtained by the first server may be randomly initialized. In a process of training the target task model, the selector is also trained, so that a trained selector can better use the data obtained by the clients to obtain an ID of a target task model from the IDs of the plurality of task models. In other words, a training target of the selector is that a task model corresponding to an ID of the task model that is output by the selector can have good feature extraction effect for the data obtained by the client devices. The good feature extraction effect is already described above, and details are not described herein again.

The first server may obtain the selector locally, or may obtain the selector from another device. For example, the first server may obtain the selector from a second server

In addition, in a possible implementation, a selector may be further pre-trained, in other words, the selector obtained by the first server is a pre-trained selector. The following describes this solution by using an example in which the selector is pre-trained on the second server, and the second server sends the pre-trained selector to the first server.

Manner 1: The selector is a selection model.

A selection model is trained by using data obtained by the second server as second training data and using correspondingly output a second ID for target training data as a training target, to obtain the trained selection model. The target training data is training data with a same label in the second training data, and the second ID includes an ID of at least one of a plurality of task models stored in the second server.

The data obtained by the second server may be data that is obtained by all or most client devices in a system and sent by the client devices to the second server through the first server, or may be data constructed by the second server based on a distribution feature of data obtained by all or most client devices in a system.

A specific model architecture of the selection model is not limited in this embodiment of this application. For example, the selection model may include a convolutional neural network (convolutional neural network, CNN), a recurrent neural network (recurrent neural network, RNN), a deep neural network (deep neural network, DNN), or the like.

In the solution provided in this embodiment of this application, it may be preset that data with a specific type of label corresponds to IDs of one or more task models. A training target is that when the data with the specific type of label is used as an input of the selection model, the selection model can be used to output the IDs that are of the one or more task models and that correspond to the data with the specific type of label. To better understand a training process of the selection model, the following describes the training process in detail by using an example in which the selection model is a deep neural network.

Work at each layer of the deep neural network may be described by using a mathematical expression $\overline{y} = a(W \cdot \overline{x} + b)$. From a physical perspective, the work at each layer of the deep neural network may be understood as completing transformation from input space (a set of input vectors) to output space (in other words, from row space to column space of a matrix) by performing five types of operations on the input space. The five types of operations include: 1. dimension increase/dimension reduction; 2. zoom in/out; 3. rotation; 4. translation; and 5. "bending". Operations 1, 2, and 3 are completed with $W \cdot \overline{x}$, the operation 4 is completed with +b, and the operation 5 is completed with $a()$. The word "space" is used herein for expression because a classified object is not a single thing, but a type of thing. Space is a set of all individuals of this type of thing. W is a weight vector, and each value in the vector represents a weight value of a neuron at this layer of the neural network. The vector W determines the space transformation from the input space to the output space described above. In other words, the weight W at each layer controls how to transform space. A purpose of training the deep neural network is to finally obtain a weight matrix (a weight matrix formed by vectors W at a plurality of layers) at all layers of a trained neural network. Therefore, a training process of the neural network is essentially a manner of learning of control of space transformation, and more specifically, learning of a weight matrix.

Because it is expected that an output of the deep neural network is as close as possible to an actually expected predicted value (where in this solution, the actually expected predicted value is specifically the preset IDs that are of the one or more task models and that correspond to the data with the specific type of label), a predicted value of the current network may be compared with the actually expected target value, and the weight vector at each layer of the neural network may be updated based on a difference between the two values (where certainly, before a 1st update, there is usually an initialization process, to be specific, a parameter is preconfigured for each layer of the deep neural network). For example, if the predicted value of the network is high, the weight vector is adjusted to lower the predicted value, and adjustment continues until the neural network can predict the actually expected target value. Therefore, "how to obtain, through comparison, the difference between the predicted value and the target value" needs to be predefined. This is a loss function (loss function) or an objective function (objective function). The loss function and the objective function are important equations that are used to measure the difference between the predicted value and the target value. The loss function is used as an example. A higher output value (loss) of the loss function indicates a larger difference. Therefore, training of the deep neural network is a process of reducing the loss as much as possible. In this solution, the process of reducing the loss as much as possible is a process of approaching the training target. After a plurality of rounds of iterative training is performed on the selection model or after the selection model is converged, it may be considered that the training target is achieved.

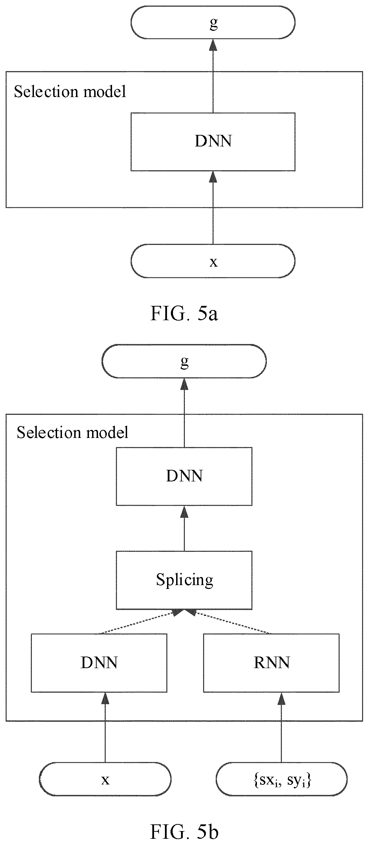

In a possible implementation, in addition to the data obtained by the second server, the second training data may further include auxiliary data. The auxiliary data includes data with a same label as the data obtained by the second server. The auxiliary data is introduced in the training process, to provide more reference information for training the selection model, so that the selection model can make more accurate prediction for the input second training data, and training efficiency of the model is improved. For example, the following provides descriptions by using examples with reference to FIG. 5a to FIG. 5c.

As shown in FIG. 5a, the second training data includes x, and x is used as an input of the selection model. As shown in FIG. 5a, an example in which the selection model is a DNN is used for presentation. The selection model performs prediction for the input x to obtain a predicted value g, where g may indicate IDs of one or more task models. In a possible implementation, g is represented in a vector manner. For example, $g_n$ represents a weight of an $n^{th}$ task model. A larger weight indicates a higher probability considered by the selection model that the input x corresponds to the task model. Then, a loss is determined based on a difference between g and a target value (an identifier of a selection model actually corresponding to x).

As shown in FIG. 5b, the second training data further includes $\{sx_i, sy_i\}$, where $\{sx_i, sy_i\}$ represents a set of auxiliary data, and a set of labels included in $\{sx_i, sy_i\}$ is consistent with a set of labels included in the second training data. The set of auxiliary data may be from local service data, or may be from the first server or the second server. In addition, the auxiliary data may be data or a feature vector corresponding to the data. As shown in FIG. 5b, an example in which the selection model includes a DNN and an RNN is used for presentation. Feature extraction is performed on x by using the DNN, and feature extraction is performed on $\{sx_i, sy_i\}$ by using the RNN. Then, outputs of the DNN and the RNN are spliced, and a result obtained after splicing is used as an input of another DNN, to obtain a predicted value g. In this implementation, it is assumed that a feature vector obtained after feature extraction is performed on x by using the DNN is x', and feature vectors obtained after feature extraction is performed on $\{sx_i, sy_i\}$ by using the RNN include $x_1'$, $x_2'$, ..., and $x_i'$. In this case, because $x_i'$ has a label, reference information may be provided for the selection model to obtain g based on a similarity between x', $x_1'$, $x_2'$, ..., and $x_i'$. For understanding of g, refer to the descriptions of g in FIG. 5a for understanding. Details are not described herein again.

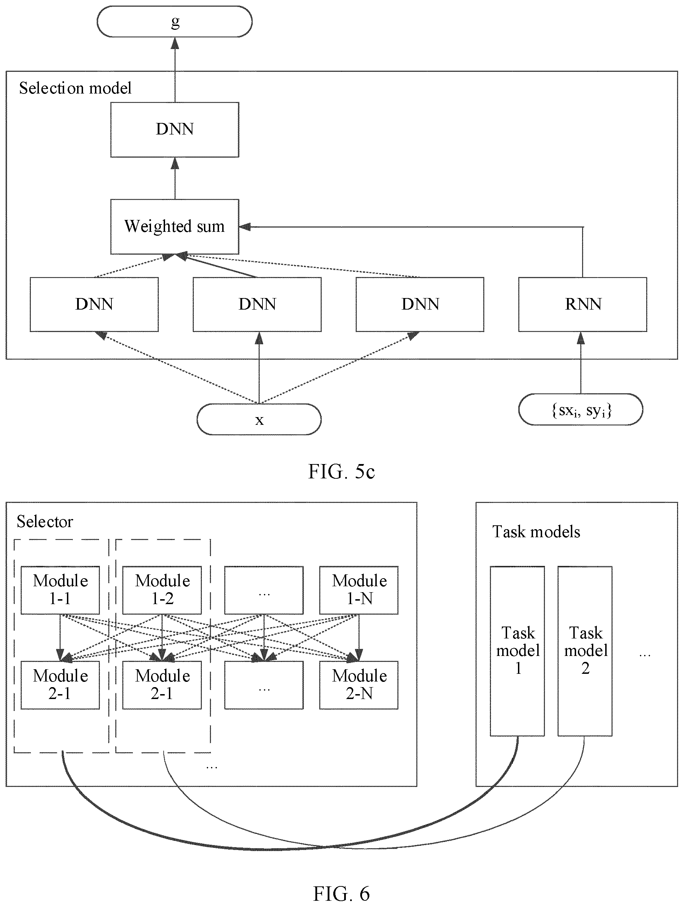

FIG. 5c is a diagram of another architecture of the selection model when the second training data further includes $\{sx_i, sy_i\}$. In this implementation, a plurality of DNNs may be used to perform feature extraction on x, weighted sum is performed on outputs of the plurality of DNNs and an output of an RNN, and a result obtained after weighted sum is used as an input of another DNN, to obtain a predicted value g.

In a possible implementation, a feature extractor formed by combining the selection model and the plurality of task models may be generated in the second server. For ease of solution extension, for example, for a requirement for adding more task models, in the solution provided in this embodiment of this application, some parameters in the selector may be further set to be in an active state, and some parameters in the selector may be set to be in an inactive state. In other words, the second server initializes the task models and the selection model by using random numbers, marks some model parameters of the selector as available, and marks some other parameters as unavailable. In a training process of the selector, the parameter in the inactive state is fixed, in other words, training and update are not performed for the parameter in the inactive state, and training and update are only performed for the parameter in the active state. To better understand this implementation, the following provides descriptions by using an example with reference to FIG. 6. As shown in FIG. 6, the selector may include a plurality of layers connected in a head-to-tail manner, an output of a layer is used as an input of a next layer, and each layer may include a plurality of parameters. In FIG. 6, two layers are used as an example for presentation, and modules at each layer include one or more parameters. Some parameters may be selected from one or more layers in the plurality of layers of the selector to correspond to one task model. For example, it is assumed that a module 1_1 at a 1st layer and a module 2_1 at a 2nd layer correspond to a task model 1, and a module 1_2 at the 1st layer and a module 2_2 at the 2nd layer correspond to a task model 2. It is assumed that there are still a module 1_3 at the 1st layer, a module 2_3 at the 2nd layer, a module 1_4 at the 1st layer, and a module at the 2nd layer, and the module 1_3 at the 1st layer, the module 2_3 at the 2nd layer, the module 1_4 at the 1st layer, and the module at the 2nd layer are set as reserved modules and are set to be in the inactive state. In this case, in the training process, when a parameter of the selector is updated, the module 1_3 at the 1st layer, the module 2_3 at the 2nd layer, the module 1 _4 at the 1 st layer, and the module at the 2nd layer are not updated. If there is a requirement for adding more task models in the future, one or more of the module 1_3 at the 1 st layer, the module 2_3 at the 2nd layer, the module 1_4 at the 1st layer, and the module at the 2nd layer may be set to be in the active state.

Manner 2: The selector is autoencoders.

An autoencoder is trained by using data that is obtained by the second server and that is with a same label as third training data, to obtain a trained autoencoder. The selector is N trained autoencoders, the N trained autoencoders are bound to a plurality of recognition models stored in the second server, and N is a quantity of the plurality of recognition models stored in the second server.

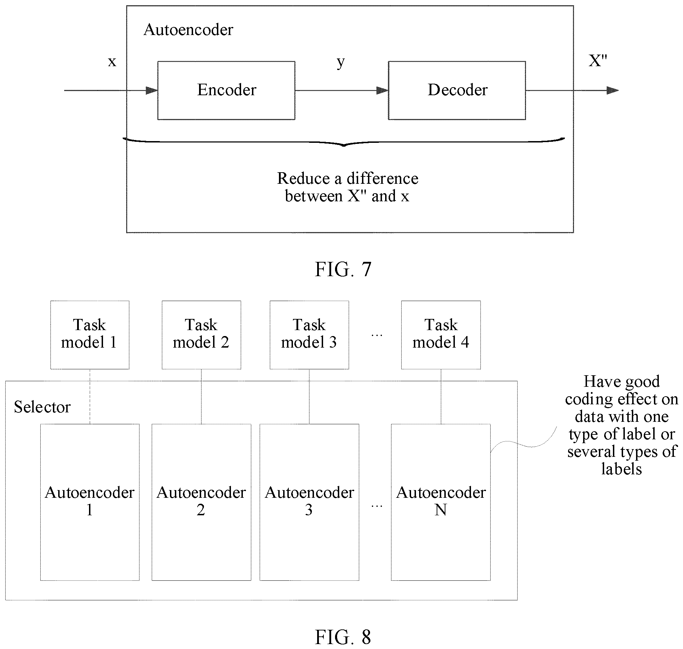

FIG. 7 is a diagram of a structure of an autoencoder. The autoencoder may include an encoder and a decoder. The encoder is configured to convert an input x into an intermediate variable y, and the decoder is configured to convert the intermediate variable y into x". A process of training the autoencoder is a process of continuously reducing a difference between x" and x. As shown in FIG. 8, data with a same label is used as training data of one autoencoder. For example, data obtained by the second server may be divided into a data set 1, a data set 2, and a data set 3. It is assumed that the data set 1 includes a large amount of data with a label A, the data set 2 includes a large amount of data with a label B, and the data set 3 includes a large amount of data with a label C. If the data set 1 is used to train an autoencoder 1, a trained autoencoder 1 can have good coding effect on the data with the label A. If the data set 2 is used to train an autoencoder 2, a trained autoencoder 2 can have good coding effect on the data with the label B. If the data set 3 is used to train an autoencoder 3, a trained autoencoder 3 can have good coding effect on the data with the label C. In addition, it is assumed that there is a binding relationship between the autoencoder 1 and a task model 1, there is a binding relationship between the autoencoder 2 and a task model 2, and there is a binding relationship between the autoencoder 3 and a task model 3. In other words, there is a one-to-one correspondence between autoencoders and task models.

To further improve scalability of the selector, in the manner 2, a task model may be added by an individual client device, and each task model is configured with an autoencoder to determine a probability that the task model is selected.

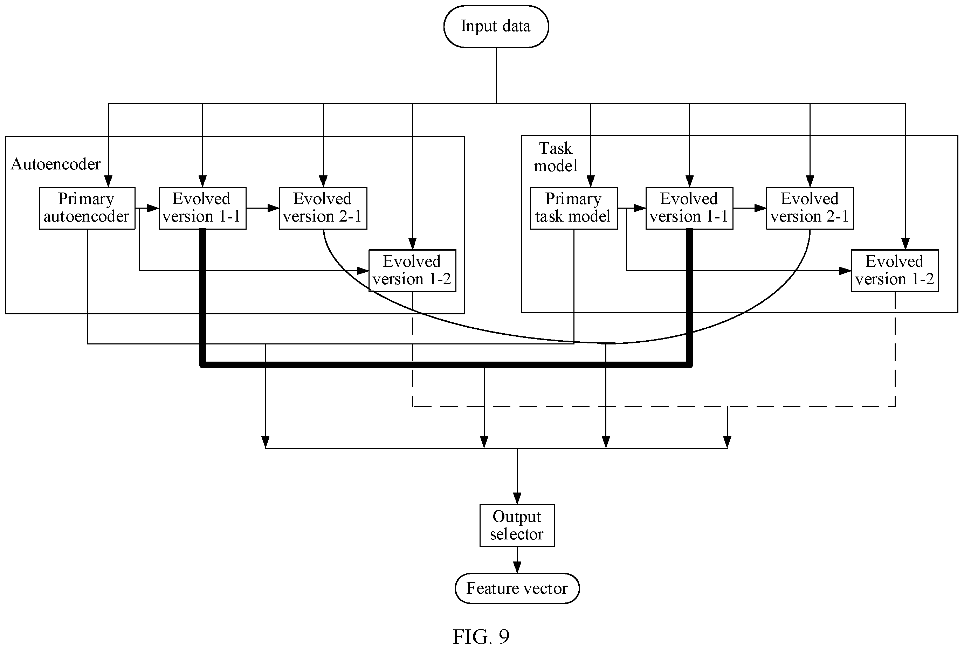

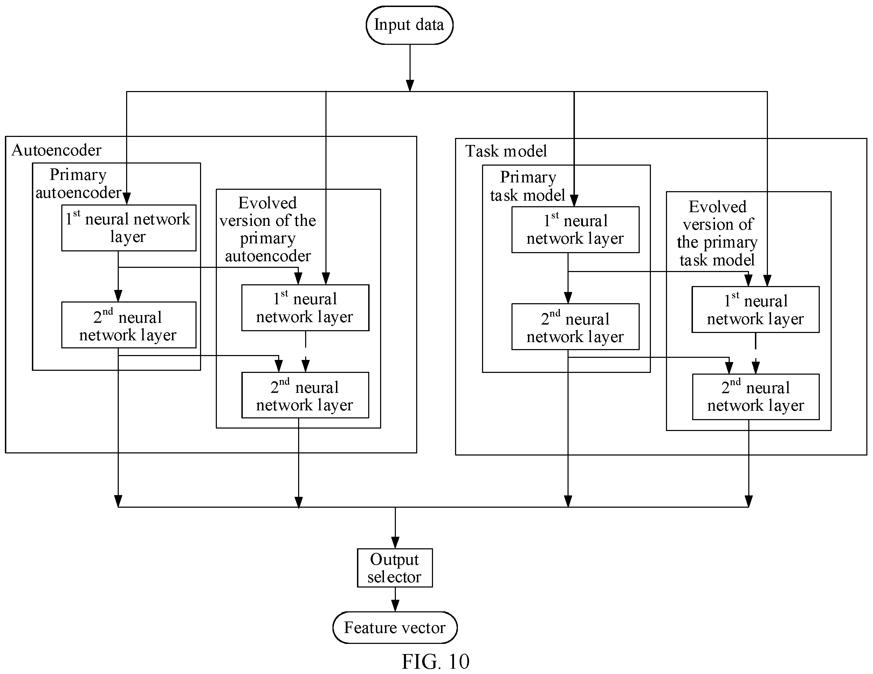

In a possible implementation, to adapt to a case in which a data distribution feature changes, each autoencoder may include a primary autoencoder and an evolved version. The evolved version may be obtained through evolution from the primary autoencoder, or may be obtained through evolution from another evolved version. For example, with reference to FIG. 9, an autoencoder includes a primary autoencoder, an evolved version 1-1 of the primary autoencoder, and an evolved version 1-2 of the primary autoencoder; and may further include an evolved version 2-1 obtained through evolution from the evolved version 1-1 of the primary autoencoder. Correspondingly, each task model may also include a primary task model and an evolved version. Still refer to FIG. 9. A task model corresponding to the autoencoder includes a primary task model, an evolved version 1-1 of the primary task model, and an evolved version 1-2 of the primary task model; and may further include an evolved version 2-1 obtained through evolution from the evolved version 1-1 of the primary task model. For example, refer to FIG. 10. FIG. 10 is a diagram of a connection relationship between evolved models. It is assumed that a primary autoencoder includes two neural network layers, and an evolved version of the primary autoencoder also includes two neural network layers. In this case, inputs of a neural network layer of the evolved version include an output of an upper neural network layer (where if the neural network layer is a $1^{st}$ layer, the input is input data), and also include an output of the same neural network layer of the primary autoencoder. If each autoencoder includes a primary autoencoder and an evolved version, with reference to FIG. 10, an output selector may be further included. An output of a primary task model (or an evolved version) corresponding to the primary autoencoder (or an evolved version) with a smallest difference is selected as a final output feature vector based on a difference between an output and an input of the primary autoencoder and a difference between an output and an input of each evolved version.

In a possible implementation, the data obtained by the second server may be classified. In a process of pre-training the selector, different weights are assigned to different types of data, to improve impact of data of an important type on a parameter change of the selector. For example, the following provides a possible classification manner: an important sample set $\left\{x_n^{imp}\right\}_{rn=1}^{rN^{imp}}$ and a small-class sample set $\left\{x_{rn}^{small}\right\}_{rn=1}^{rN^{small}}$. $x_{rn}^{neg}$ represents an $rn^{th}$ piece of important sample set data on the second server. $x_{rn}^{small}$ represents an $rn^{th}$ piece of small-class sample set data on the second server. $rN^{imp}$ and respectively represent an important sample data volume and a small-class sample data volume. The important sample set may be obtained after the second server samples an obtained big-class sample set.

402: Obtain the ID of the target task model based on a first ID whose quantity exceeds a first threshold in a plurality of first IDs.

The ID of the target task model is obtained based on the first ID whose quantity exceeds the first threshold in the plurality of first IDs. The plurality of first IDs are obtained by inputting first training data into the selector, the first ID includes an ID of at least one of the plurality of task models stored in the second server, and the first training data is determined based on data obtained by different client devices.

For different representation manners of the selector in step 401, there are different manners of obtaining the plurality of first IDs.

In a possible implementation, when the selector is the selection model, the plurality of first IDs may be obtained based on an output of the selection model. For example, as described in step 401, the output g of the selection model may be represented in a vector manner: g = [$g_1$ $g_2$ ... $g_n$ ... $g_N$], where $g_n$ represents a weight of an $n^{th}$ task model. Identifiers of task models corresponding to k1 largest values may be selected from g as a part of the plurality of first IDs. For example, for an input of the selector, g = [0.51 0.33 0.02 0.03 0.11] is obtained. It is assumed that k1 is 2, and two largest values in g are 0.51 corresponding to a $1^{st}$ task model and 0.33 corresponding to a $2^{nd}$ task model. In this case, the first IDs include an identifier of the $1^{st}$ task model and an identifier of the $2^{nd}$ task model. Determining may be performed for each input of the selector, to obtain all the first IDs. For another example, an identifier of a task model corresponding to a non-zero value may be selected from g as a part of the plurality of first IDs. For example, for an input of the selector, g = [0.51 0.49 0 0 0] is obtained. It is assumed that non-zero values in g are 0.51 corresponding to a $1^{st}$ task model and 0.49 corresponding to a $2^{nd}$ task model. In this case, the first IDs include an identifier of the $1^{st}$ task model and an identifier of the $2^{nd}$ task model.

In a possible implementation, when the selector is the autoencoders, the plurality of first IDs are IDs of task models that are bound to target autoencoders in the N trained autoencoders, and a difference between an output and an input of the target autoencoder is less than a second threshold. If a difference between an output and an input of an autoencoder is excessively large, it indicates that the autoencoder cannot have good coding effect on input data. If a difference between an output and an input of an autoencoder is not large (lower than a set threshold: the second threshold), it indicates that the autoencoder can have good coding effect on input data. Because there is a one-to-one correspondence between the autoencoders and the task models, after the target autoencoder is obtained based on differences between outputs and inputs of the autoencoders, IDs of one or more task models corresponding to the target autoencoder may be obtained.

In a possible implementation, the first server may obtain the plurality of first IDs, and collect statistics on the first ID whose quantity exceeds the first threshold in the plurality of first IDs, to obtain the ID of the target task model. In this implementation, different client devices managed by the first server may send data separately obtained by the client devices to the first server, and the first training data is the data that is sent by the different client devices managed by the first server and that is obtained by the first server. In this implementation, the first server may alternatively obtain a distribution feature of data of different client devices managed by the first server, and construct data based on the obtained distribution feature as the first training data. In a possible implementation, the data obtained by the first server may be classified. In a process of obtaining the plurality of first IDs, different weights are assigned to different types of data, to improve impact of data of an important type on obtaining the plurality of first IDs. For example, the following provides a possible classification manner: an important sample set $\left\{x_{sn,rn}^{imp}\right\}_{rn=1}^{rN_{sn}^{neg}}$ and a small-class sample set $\left\{x_{sn,rn}^{small}\right\}_{rn=1}^{rN_{sn}^{small}}$. $x_{sn,rn}^{imp}$ represents an $rn^{th}$ piece of important sample set data of an $sn^{th}$ first server. Data of the important sample set may be data that is of important sample sets uploaded by client devices managed by the first server and that is obtained by the first server, or may be data obtained after the first server performs secondary sampling on the data of the important sample sets uploaded by the client devices managed by the first server. $x_{sn,rn}^{small}$ represents an $rn^{th}$ piece of small-class sample set data of the $sn^{th}$ first server, and is from small-class sample set data uploaded by the client devices managed by the first server. $rN_{sn}^{imp}$ and $rN_{sn}^{small}$, $rN_{sn}^{err}$ respectively represent an important sample data volume and a small-class sample data volume of the $sn^{th}$ first server.

In a possible implementation, the client devices managed by the first server may obtain the plurality of first IDs, and then the first server collects statistics on the first ID whose quantity exceeds the first threshold in the plurality of first IDs, to obtain the ID of the target task model. Specifically, the first server delivers the obtained selector to each client device managed by the first server. After obtaining the selector, the client device uses locally obtained data as an input of the selector, to obtain IDs of a plurality of task models. Then, the client device sends the IDs that are of the task models and that are obtained by the client device to the first server. A set including the IDs of the plurality of task models obtained by each client device is the plurality of first IDs. After obtaining the plurality of first IDs, the first server collects statistics on the first ID whose quantity exceeds the first threshold in the plurality of first IDs, to obtain the ID of the target task model.

It is assumed that the obtained plurality of first IDs include 2000 IDs of a task model 1, 500 IDs of a task model 2, 2000 IDs of a task model 3, and 500 IDs of a task model 4. It is assumed that the first threshold is 1500. In this case, a quantity of IDs of the task model 1 in the plurality of first IDs exceeds the first threshold, and a quantity of IDs of the task model 3 in the plurality of first IDs exceeds the first threshold, so that the ID of the target task model includes the ID of the task model 1 and the ID of the task model 3.

403: The first server sends the identifier of the target task model to the second server.

404: The second server sends the target task model to the first server based on the ID of the target task model.

405: The client device trains the target task model based on data obtained by the client device, to obtain a trained target task model.

406: The first server fuses trained target task models from different client devices, to obtain a first fused task model.

407: The second server fuses first fused task models from different first servers, to obtain a second fused task model.

For step 403 to step 407, refer to step 201 to step 205 in the embodiment corresponding to FIG. 2 for understanding. Details are not described herein again.

To further improve a model update rate, the following provides an implementation in which the client device trains the target task model.

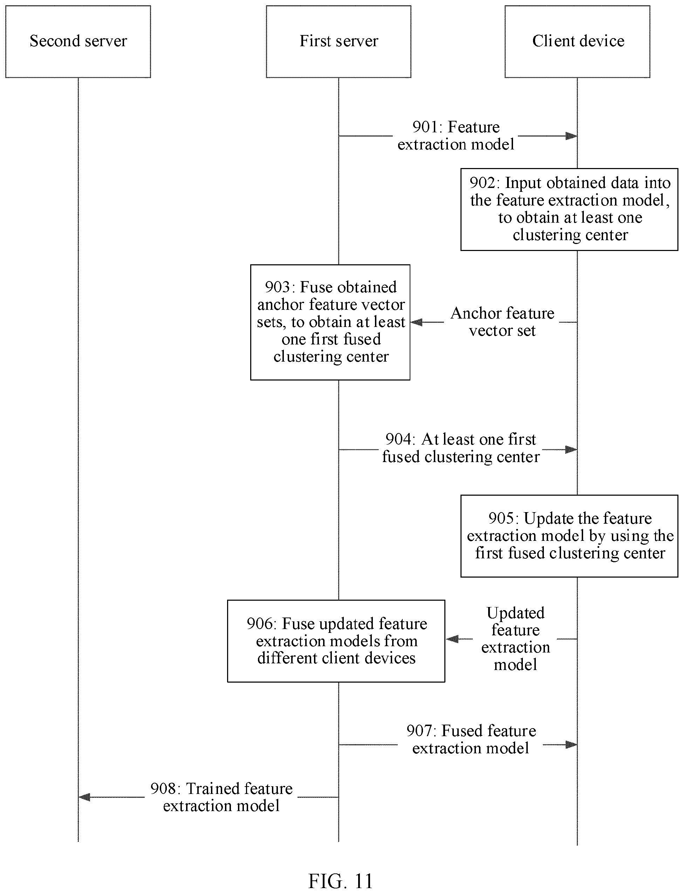

FIG. 11 is a schematic flowchart of another machine learning model training method according to an embodiment of this application. The method may include the following steps:

901: A first server sends a feature extraction model to a client device.

The first server may obtain the feature extraction model based on a selector and a target task model.

In a possible implementation, the first server combines the received target task model and the selector into the local feature extraction model.

In a possible implementation, the first server obtains a new task model through distillation on the received target task model by using local data, and combines the new task model and the selector into the local feature extraction model.

A feature extractor converts an input feature without a clustering characteristic into an intermediate feature with clustering effect. The clustering effect means that a distance between data of a same type is short, and a distance between data of different types is long. A cluster herein represents a clustering result. Data that belongs to a clustering group after clustering is referred to as data in a cluster or referred to as belonging to a same cluster. Data with a same label type may alternatively belong to different clusters.

How the first server obtains the selector and the target task model is already described in the foregoing embodiments. Details are not described herein again.

Data obtained by the client device is used as an input of the selector and an input of the target task model, to obtain a weight of each target task model from all target task models by using the selector (where a larger weight of a target task model indicates a higher probability considered by the selector that the input corresponds to the target task model). Then, an output of the target task model is weighted by using the weight obtained by the selector, to obtain a feature vector corresponding to the input data. It should be noted that in a possible implementation, if a weight of a target task model is correspondingly 0, the data may not be input into the target task model whose weight is 0. In a possible implementation, the data may alternatively be used as an input of each target task model.

The feature extraction model may be obtained in a plurality of manners based on the selector and the target task model. For example, the following provides several possible manners of obtaining the feature extraction model based on the selector and the target task model.

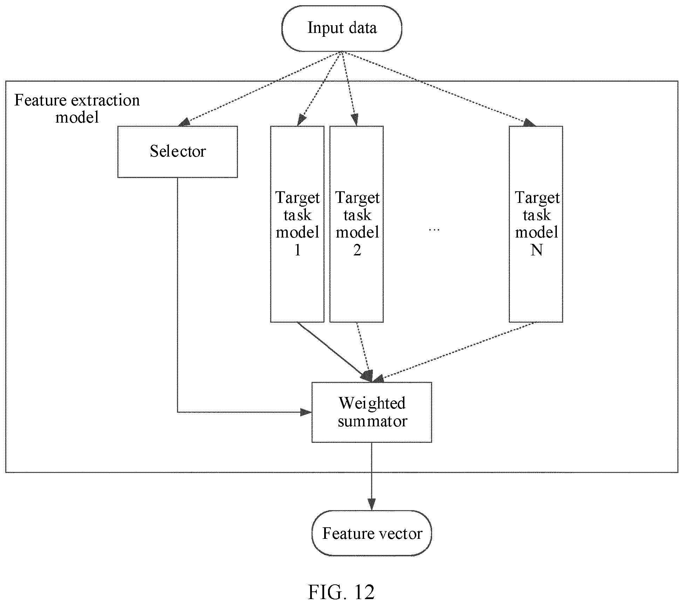

FIG. 12 is a diagram of an architecture of a feature extraction model. In this architecture, one selector, a plurality of target task models, and a weighted summator are included. The data obtained by the client device is used as an input of the selector and an input of each target task model. The selector may be a selection model. The selection model correspondingly outputs a vector r for each input, and $r_n$ represents a weight of an $n^{th}$ target task model. A larger weight indicates a higher probability considered by the selection model that an input x corresponds to the target task model. The selector may alternatively be N autoencoders. A smaller difference between an output and an input of an autoencoder indicates a larger weight of a target task model corresponding to the autoencoder. An output of the target task model is weighted by using the weight obtained by the selector, to obtain a feature vector obtained for current input data. For understanding, refer to a formula $z_i = \sum_{n=1}^{N} z_i^n \cdot r_n$. If a parameter of the $n^{th}$ target task model is represented by $\theta_n$, an input-output relationship of the $n^{th}$ target task model is represented as:

$$z_i^n = f(x_i; \theta_n).$$

$x_i$ represents an $i^{th}$ piece of input data, and $z_i^n = [z_i^n[1] \quad z_i^n[2] \quad ... z_i^n[k] \quad ... \quad z_i^n[K]]$ represents a K-dimensional feature vector output by the $n^{th}$ target task model for the $i^{th}$ piece of input data.

In a possible implementation, the weighted summator may be further used to splice outputs of the plurality of target task models. The output of the target task model may be represented as a product of an output of the target task model and a weight corresponding to the target task model. Then, dimension reduction is performed on a result obtained after splicing, to obtain a feature vector. In this embodiment of this application, a plurality of dimension reduction manners may be used. This is not limited in this embodiment of this application. For example, location coding may be first performed for $g_n$, and then weighted sum may be performed. For understanding, refer to the following formulas:

$$z_i = \sum_{n=1}^{N} T(z_i^n \cdot g_n \cdot \tau_1 + \tau_1) \cdot (z_{max})^n;$$

and

$$T(z) = \begin{cases} 1 & z < 1 \\ z & 1 \leq z \leq z_{max}. \\ z_{max} & z > z_{max} \end{cases}$$

$\tau_1$ and $z_{max}$ may be preset based on an actual requirement.

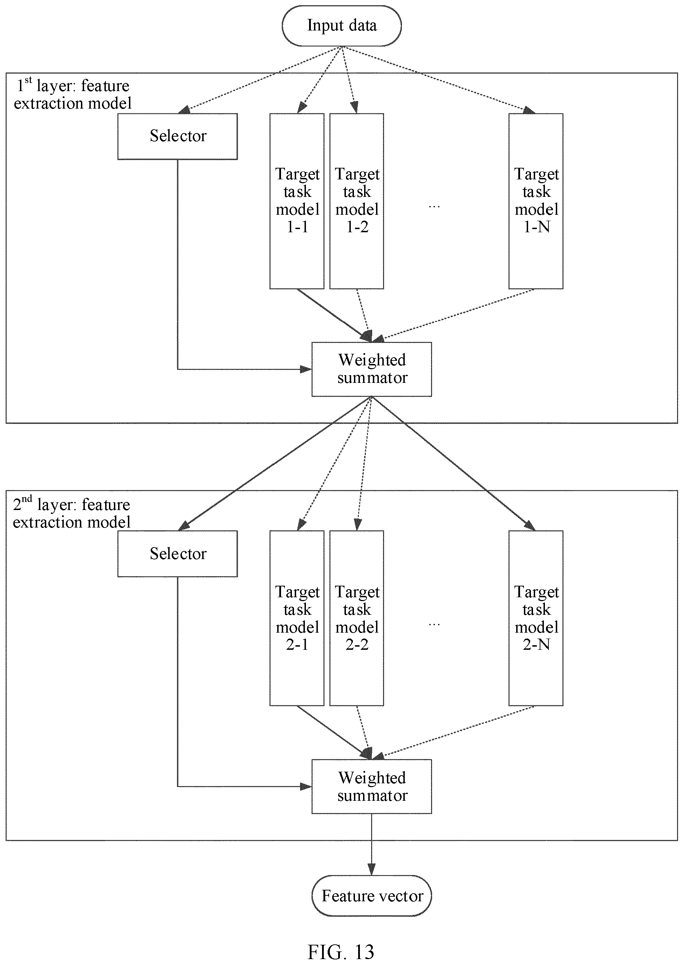

FIG. 13 is a diagram of an architecture of another feature extraction model. In this architecture, a plurality of feature extraction models form a new feature extraction model in a cascading manner, and an output of a feature extraction model is used as an input of a next feature extraction model. In this architecture, a plurality of selectors, a plurality of target task models, and a plurality of weighted summators may be included. As shown in FIG. 13, a two-layer cascading manner is used as an example to describe this solution. It should be noted that for a multi-layer cascading manner, refer to the two-layer cascading manner for understanding. Details are not described in this solution. For an architecture of a $1^{st}$-layer feature extraction model, refer to the architecture shown in FIG. 12 and related descriptions for understanding. Details are not described herein again.

IDs of target task models are obtained based on IDs whose quantities exceed a first threshold in a plurality of first IDs. However, the plurality of first IDs are obtained by using data obtained by clients. Therefore, for some data in all the data obtained by the clients, there may be no corresponding target task model. For example, the data obtained by the clients includes data 1 to data 5. It is assumed that when the data 1 is used as an input of a selector, obtained first IDs include an ID of a task model 1 and an ID of a task model 2. For a specific process of obtaining a part of first IDs based on the input of the selector, refer to step 402 in the embodiment corresponding to FIG. 4. Details are not described herein again. It is assumed that when data 2 is used as an input of the selector, obtained first IDs include the ID of the task model 1 and an ID of a task model 3; when data 3 is used as an input of the selector, obtained first IDs include the ID of the task model 3 and the ID of the task model 2; when data 3 is used as an input of the selector, obtained first IDs include the ID of the task model 1 and an ID of a task model 4; and when the data 5 is used as an input of the selector, obtained first IDs include an ID of a task model 5 and an ID of a task model 6. In this case, the plurality of first IDs include the ID of the task model 1, the ID of the task model 2, the ID of the task model 3, the ID of the task model 4, the ID of the task model 5, and the ID of the task model 6. There are three IDs of the task model 1 in the plurality of first IDs, two IDs of the task model 2 in the plurality of first IDs, two IDs of the task model 3 in the plurality of first IDs, one ID of the task model 4 in the plurality of first IDs, one ID of the task model 5 in the plurality of first IDs, and one ID of the task model 6 in the plurality of first IDs. It is assumed that the first threshold is 1. In this case, a quantity of IDs of the task model 1, a quantity of IDs of the task model 2, and a quantity of IDs of the task model 3 all exceed the first threshold. Therefore, the IDs of the target task models include the ID of the task model 1, the ID of the task model 2, and the ID of the task model 3. Further, the clients obtain the task model 1, the task model 2, and the task model 3, and may form the 1st-layer feature extraction model by using the task model 1, the task model 2, the task model 3, and the selector. In this case, there is at least one corresponding target task model for each of the data 1 to the data 4 obtained by the clients. However, because the clients do not receive the task model 5 and the task model 6, there is no corresponding target task model for the data 5. Even if the data 5 is input into the 1st-layer feature extraction model, feature extraction cannot be well performed for the data 5. Therefore, in a possible implementation, when target task models for forming a second feature extraction model are obtained, all the data obtained by the clients may be filtered, and data that locally has a corresponding target task model in the client devices is used as filtered data. For example, in the foregoing example, the data 1 to the data 4 are filtered data, and the data 5 is deleted data. When the target task models for forming the second feature extraction model are obtained, only the data 1 to the data 4 are used, and the data 5 is no longer used.

The 1st-layer feature extraction model obtains a corresponding feature vector for each piece of filtered data. For details, refer to related content described in FIG. 12 for understanding. The feature vector output by the first feature extraction model is used as an input of a selector of the 2nd-layer feature extraction model, to obtain a plurality of target task models of the 2nd-layer feature extraction model. For a process of obtaining the target task models of the second feature extraction layer, refer to the process of obtaining the target task models of the first feature extraction layer for understanding. For example, the feature vector output by the first feature extraction model is used as an input of the selector of the 2nd-layer feature extraction model, identifiers of a plurality of task models may be obtained based on an output of the selector of the 2nd-layer feature extraction model, and identifiers of the target task models of the second feature extraction layer are obtained based on IDs whose quantities exceed the first threshold in the identifiers of the plurality of task models. The first server sends the identifiers of the target task models of the second feature extraction layer to a second server, and the second server sends the target task models of the second feature extraction layer to the first server based on the identifiers of the target task models of the second feature extraction layer. The second feature extraction layer is obtained based on the selector and the target task models of the second feature extraction layer. The following provides descriptions with reference to a specific example.

The first server receives a selection model delivered by the second server, inputs local data $D_{Tr} = \{x_i\}_{i=1}^{I_{Tr\_s}^0}$ into a 1st-layer selection model, and calculates an output value $\{g_{i\_1}\}_{i=1}^{I_{Tr\_s}^0} = \{[g_{i\_1}^1 \quad g_{i\_1}^2 \quad \cdots g_{i\_1}^n \quad \cdots \quad g_{i\_1}^N]\}_{i=1}^{I_{Tr\_s}^0}$ of the 1st-layer selection model. $I_{Tr\_s}^0$ represents a quantity of pieces of training data owned by the first server, $g_{i\_1}$ represents an output value of the 1st-layer selection model for $x_i$, and $g_{i\_1}^n$ represents an nth value of the output value of the 1st-layer selection model for $x_i$ and corresponds to a weight of an nth task model. For each piece of data $x_i$, subscripts corresponding to $K1$ largest values in corresponding $g_{i\_1}$ are calculated, and it is recorded that identifiers that are of 1st-layer task models and that correspond to the $K_1^1$ largest values are selected once. A quantity of times that an identifier of each task model is selected for the local training data set $D_{Tr}$ is counted, that is, a process of obtaining a plurality of first IDs is performed. Based on the quantity of times that the identifier of each task model is selected, identifiers that are of $K_2^1$ task models and that are most frequently selected are selected as identifiers of selected task models, that is, IDs of 1st-layer target task models. The first server receives, from the second server, the task models corresponding to the IDs of the 1st-layer target task models.

The first server inputs data of the local training data set $D_{Tr} = \{x_i\}_{i=1}^{I_{Tr\_s}^0}$ into the 1st-layer selection model, and calculates the output value $\{g_{i\_1}\}_{i=1}^{I_{Tr\_s}^0} = \{[g_{i\_1}^1 \quad g_{i\_1}^2 \quad \cdots g_{i\_1}^n \quad \cdots \quad g_{i\_1}^N]\}_{i=1}^{I_{Tr\_s}^0}$ of the 1st-layer model selector. $I_{Tr\_s}^0$ represents the quantity of pieces of training data owned by the first server, $g_{i\_1}$ represents the output value of the 1st-layer selection model for $x_i$, and $g_{i\_1}^n$ represents the $n^{th}$ value of the output value of the 1st-layer selection model for $x_i$ and corresponds to the weight of the $n^{th}$ 1st-layer task model.

For each piece of data $x_i$, subscripts corresponding to $K_1$ largest values in corresponding $g_{i\_1}$, are calculated. If at least one task model in selected 1st-layer task models is delivered from the second server to the first server, the piece of data is selected. The selected data is put into a valid training set $D_{Tr\_eff\_1} = \{x_1 \quad x_i \quad \cdots \quad x_{I_{Tr\_s}^1}\}$, where $I_{Tr\_s}^1$ represents a quantity of pieces of valid data obtained after 1st-layer filtering.

If a 1st-layer task model n corresponding to $g_{i\_1} = [g_{i\_1}^1 \quad g_{i\_1}^2 \quad \cdots g_{i\_1}^n \quad \cdots \quad g_{i\_1}^{N_1}]$ corresponding to $x_i$ in the valid training set $D_{Tr\_eff\_1}$ is not locally stored, the corresponding $g_{i\_1}^n$ is set to zero, to obtain $g_{i\_1}'$, where $N_1$ represents a total quantity of global 1st-layer task models.

Normalization is performed on $g_{i\_1}'$ to obtain $$\tilde{g}_{i\_1}^n = \frac{g_{i\_1}'^n}{\sum_{n=1}^N g_{i\_1}'^n}$$, where $\tilde{g}_{i\_1}^n$ represents a normalized value of an $n^{th}$ output value of the 1st-layer selector for the data $x_i$.

A 1st-layer weighted sum $\{z_{1\_1} \quad z_{i\_1} \quad \cdots \quad z_{I_{Tr\_s}-1}^1\}$ is calculated by using a 1st-layer weighted summator for data of the valid training set $D_{Treff_1} = \{x_1 \quad x_2 \quad \cdots \quad x_{I_{Tr\_s}^1}\}$. $z_{i\_1} = \sum_{n=1}^{N_1} z_{i\_1}^n \cdot \tilde{g}_{i\_1}^n$, where $z_{i\_1}^n$ represents a feature vector output by the $n^{th}$ 1st-layer task model for the data $x_i$. If the $n^{th}$ 1st-layer task model is locally stored, the model is used to calculate $z_{i\_1}^n$. If the $n^{th}$ 1st-layer task model is not locally stored, $z_{i\_1}^n = [0,0, \ldots 0]$. A feature value $\{z_{i\_1}\}_{i=1}^{I_{Tr\_s}^1}$ that is of the 1st-layer weighted sum and that corresponds to the data in the valid training set $D_{Tr\_eff\_1} = \{x_1 \quad x_i \quad \cdots \quad x_{I_{Tr\_s}^1}\}$ of the local training data set is input into a 2nd-layer selection model, to calculate an output value $\{g_{i\_2}\}_{i=1}^{I_{Tr\_s}^1} = \{[g_{i\_2}^1 \quad g_{i\_2}^2 \quad \cdots g_{i\_2}^n \quad \cdots \quad g_{i\_2}^N]\}_{i=1}^{I_{Tr\_s}^1}$ of the 2nd-layer selector. $I_{Tr\_s}^1$ represents a quantity of pieces of valid training data owned by the first server after a 1st layer, $g_{i\_2}$ represents an output value of the 2nd-layer selection model for $z_{i\_1}$, and $g_{i\_2}^n$ represents an $n^{th}$ value of the output value of the 2nd-layer selection model for $z_i$ and corresponds to a weight of an $n^{th}$ 2nd-layer task model. For each piece of data $z_i$, subscripts corresponding to $K_1$ largest values in corresponding $g_{i\_2}$ are calculated, and it is recorded that 2nd-layer task models corresponding to the $K_1^2$ largest values are selected once. A quantity of times that each 2nd-layer task model is selected for the local valid training data set $D_{Tr\_eff\_1}$ obtained through 1st-layer filtering is counted. Based on the quantity of times that each 2nd-layer task model

is selected, $K_2^2$ task models that are most frequently selected are selected as selected task models, and IDs of the required selected 2nd-layer task models are sent to the second server. The second server receives the IDs that are of the selected 2nd-layer task models and that are uploaded by the first server. The first server receives a part of 2nd-layer task models in the global task models delivered by the second server.

902: The client device inputs obtained data into the feature extraction model, to obtain at least one clustering center.

Each piece of data obtained by the client device is input into the feature extraction model, to obtain a feature vector corresponding to the data. How to obtain the feature vector is already described in step 901.

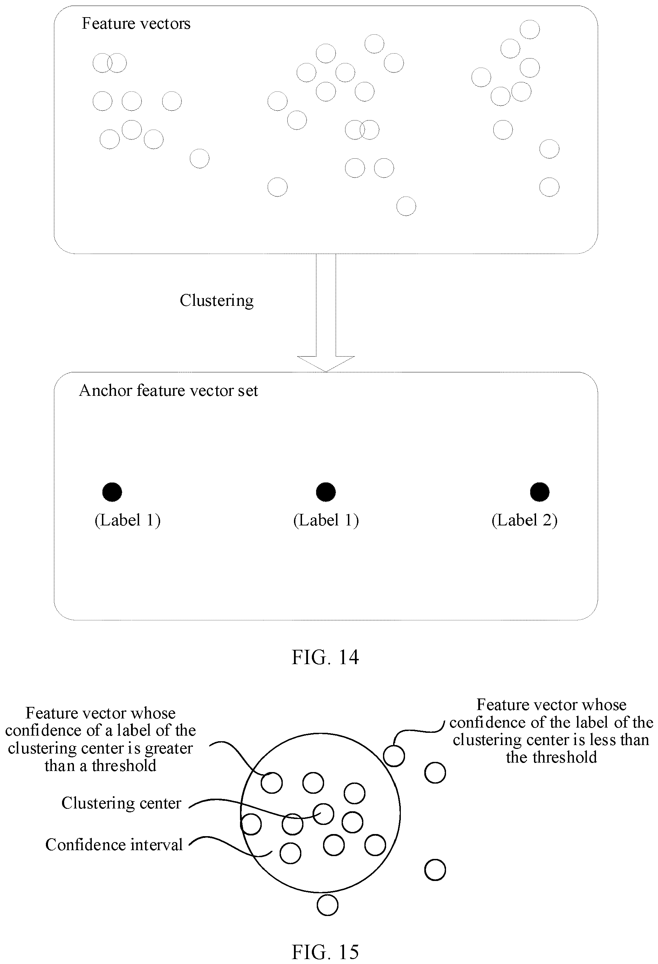

In a possible implementation, with reference to FIG. 14, the client device clusters an obtained feature vector, to obtain the at least one clustering center. After clustering, each label may correspond to one clustering center, or one label may correspond to a plurality of clustering centers. In a possible implementation, a client device may alternatively send a locally obtained feature vector to the first server, and the first server clusters the feature vector obtained by the client device, to obtain at least one clustering center corresponding to the client device. In a possible implementation, the at least one clustering center further includes a confidence and a label. The at least one clustering center and the confidence are used to calculate and infer a similarity between feature vectors of data. The label is used to calculate and infer a prediction result of the data based on a similarity measurement result.

In a possible implementation, a confidence interval of the at least one clustering center may be further obtained. Refer to FIG. 15 for understanding. Confidence space of a specific clustering center may be obtained based on feature space formed by a feature vector whose confidence of a label of the clustering center is greater than a threshold. For ease of presentation, an example in which a confidence interval is a circle is used for presentation in FIG. 15.

903: The first server fuses obtained clustering centers, to obtain at least one first fused clustering center.

After obtaining respective clustering centers, a plurality of client devices managed by the first server send the obtained respective clustering centers to the first server. In a possible implementation, the first server fuses, based on labels, the obtained clustering centers sent by the client devices managed by the first server, to obtain the at least one first fused clustering center. It is assumed that a client device A managed by the first server sends three clustering centers: a clustering center 1, a clustering center 2, and a clustering center 3. Both the clustering center 1 and the clustering center 2 are obtained by aggregating feature vectors obtained based on a large amount of data with a label 1, so that it may be considered that labels of the clustering center 1 and the clustering center 2 are the label 1. The clustering center 3 is obtained by aggregating feature vectors obtained based on a large amount of data with a label 2, so that it may be considered that a label of the clustering center 3 is the label 2. It is further assumed that a client device B managed by the first server sends three clustering centers: a clustering center 4, a clustering center 5, and a clustering center 6. Both the clustering center 4 and the clustering center 5 are obtained by aggregating feature vectors obtained based on a large amount of data with the label 1, so that it may be considered that labels of the two clustering centers are the label 1. The clustering center 6 is obtained by aggregating feature vectors obtained based on a large amount of data with a label 3, so that it may be considered that a label of the clustering center 6 is the label 3. In this case, the clustering center 1, the clustering center 2, the clustering center 4, and the clustering center 5 may be fused to obtain a first fused clustering center, for example, obtain a first fused clustering center 1, where a label of the first fused clustering center 1 is the label 1. In addition, first fused clustering centers further include the clustering center 3 and the clustering center 6. In a possible implementation, the first server may aggregate the obtained clustering centers sent by the client devices managed by the first server, to obtain the at least one first fused clustering center. In a possible implementation, a label of the first fused clustering center may be obtained based on obtaining labels of the clustering centers of the first fused clustering center. For example, the first fused clustering center 1 is a clustering center obtained by aggregating the clustering center 1, the clustering center 2, the clustering center 4, and the clustering center 5, and labels of the clustering center 1, the clustering center 2, the clustering center 4, and the clustering center 5 are the label 1, so that the label of the first fused clustering center is the label 1. In a possible implementation, a label of the first fused clustering center may be determined in a manual annotation manner. The label of the first fused clustering center may be obtained in a plurality of manners. This is not limited in this embodiment of this application.

In a possible implementation, the client device inputs data of a local training data set into the selector of the feature extraction model. If a task model selected by the selector is locally stored, the data is added to a valid training data set $D_{Tr\_eff}$. Alternatively, the entire local training data set of the client device may be used as a valid training data set $D_{Tr\_eff}$. A feature vector $z_{i\_1}$ is calculated for data $x_i$ in the valid training data set $D_{Tr\_eff}$ by using a 1st-layer feature extraction model:

$$z_{i\_1} = \sum_{n=1}^{N_1} z_{i\_1}^n \cdot g_{i\_1}^n \quad \text{or} \quad z_{i\_1} = \sum_{n=1}^{N_1} z_{i\_1}^n \cdot \tilde{g}_{i\_1}^n$$

A feature vector $z_{i\_2}$ is calculated for the 1st-layer feature vector $z_{i\_1}$, corresponding to the data $x_i$ in the valid training data set $D_{Tr\_eff}$ by using a 2nd-layer feature extraction model:

$$z_{i\_2} = \sum_{n=1}^{N_2} z_{i\_2}^n \cdot g_{i\_2}^n \text{ or } z_{i\_1} = \sum_{n=1}^{N_2} z_{i\_2}^n \cdot \tilde{g}_{i\_2}^n$$

A feature vector $z_i = z_{i\_2}$ is output for the data $x_i$ by using the feature extraction model.

The client device clusters $\{z_i\}$ based on classes (classified labels) through K-means, where each class is aggregated into at least one sub-cluster; and calculates a clustering center of the sub-cluster

The client device uploads clustering centers of all obtained sub-clusters to the first server.

The first server receives clustering centers of all sub-clusters uploaded by the client devices managed by the first server. For a set of the clustering centers of all the sub-clusters uploaded by the client devices managed by the first server, the first server calculates, based on labels of the sub-clusters, a value obtained after weighted averaging of a corresponding data volume, to obtain the at least one first fused clustering center The first server delivers the at least one first fused clustering center to the client devices managed by the first server.

In a possible implementation, the first server may further fuse confidence intervals of the clustering centers of the sub-clusters, to obtain a confidence interval of the at least one first fused clustering center.

904: The first server sends the at least one first fused clustering center to the client device.

The first server sends the at least one first fused clustering center to each client device managed by the first server. The following uses one of the client devices as an example to describe this solution.

In a possible implementation, in correspondence to step 903, if the confidence interval of the at least one first fused clustering center is obtained, the confidence interval of the at least one first fused clustering center may be further sent to the client device.

905: The client device updates the feature extraction model by using the first fused clustering center.

A piece of data obtained by the client device is input into the feature extraction model, to obtain a feature vector corresponding to the data. A confidence of the data of a label of each first fused clustering center is obtained based on a similarity between the feature vector and the at least one first fused clustering center, a loss value is obtained based on a difference between the confidence and a label of the data, and then the feature extraction model is updated based on the loss value.

In a possible implementation, a plurality of pieces of data obtained by the client device may be used as training data to update the feature extraction model multiple times. In a possible implementation, if the selector for forming the feature extraction model is pre-trained, a parameter of the selector may be fixed, and only a parameter of the task model for forming the feature extraction model is updated. In a possible implementation, parameters of the selector and the task model that form the feature extraction model may alternatively be both updated. In a possible implementation, a parameter of the selector may be fixed and a parameter of the task model may be updated in one or more rounds of training processes, or a parameter of the task model may be fixed and a parameter of the selector may be updated in one or more rounds of training processes.

906: The first server fuses updated feature extraction models from different client devices.

After performing step 905, each client managed by the first server sends an obtained updated feature extraction model to the first server. The first server fuses the updated feature extraction models from the different client devices, to obtain a fused feature extraction model, which is referred to as a first fused feature extraction model below.

907: The first server sends the fused feature extraction model to the client device.

Step 902 to step 907 may be repeatedly performed multiple times, to obtain a trained feature extraction model. For example, after step 907 is performed, the fused feature extraction model is obtained. When step 902 is performed again, the client device inputs obtained data into the fused feature extraction model, to obtain at least one updated clustering center, and then sends the at least one updated clustering center to the first server. The first server obtains an updated first fused clustering center, and then delivers the updated first fused clustering center to the client device. The client device updates the feature extraction model again, and sends an updated feature extraction model to the first server. The first server obtains an updated feature extraction model again, and delivers the updated feature extraction model to the client device. In this case, step 902 to step 907 are repeatedly performed once. The trained feature extraction model may be a converged model, or may be a fused feature extraction model obtained by the first server after step 902 to step 907 are already repeatedly performed for a specified quantity of times.

With reference to a possible implementation, the following further describes a possible training process of the feature extraction model.

The client device performs the following process:

(1) The client device fixes the parameter of the selector, and trains the task model of the feature extraction model by using data of a valid training data set $D_{Tr\_eff}$. An output of the selector may use a normalized calculated value.

(2) The client device uploads, to the first server, a task model that is of the feature extraction model and that is obtained after N1 times of training.

The first server performs the following process:

(1) The first server receives task models that are of the feature extraction model and that are uploaded by the client devices managed by the first server.
(2) The first server obtains a weight of each task model based on a data volume used during training of each task model. For example, a larger data volume indicates a larger weight. The first server obtains a "task model of the feature extraction model of the first server" in a weighted averaging manner, and delivers the "task model of the feature extraction model of the first server" to the client.

The client device performs the following process:

(3) The client device receives the "task model of the feature extraction model of the first server" delivered by the first server.
(4) The client device calculates an output of a local task model for data $x_i$ of the training data set. For example, there are two task models: a task model 1 and a task 2. The client device calculates outputs $z_i^1$ and $z_i^2$ of the two task models, and calculates shortest distances $d_i^1$ and $d_i^2$ from $z_i^1$ and $z_i^2$ to a clustering center of each sub-cluster

$$\widehat{g_i} = \left[\frac{1/d_i^1}{1/d_i^1 + 1/d_i^2}, \frac{1/d_i^2}{1/d_i^1 + 1/d_i^2}, 0, 0, 0\right]$$

corresponding to a class corresponding to the data $x_i$, where is used as a pseudo-label of the selector of the feature extraction model, to assist in training of the selector and improve training efficiency of the selector.

(5) The client device uses a data set $\{x_i, \ \widehat{g_i}\}$ to train a part that is in the selector of the feature extraction model and that overlaps the local task model. If task models 1, 2, and 3 are locally stored, the selector is trained to select parts corresponding to the task models 1, 2, and 3 in the selector. A continuous learning technology may be used in a training process. For example, an output variation of the selector is used as a penalty term. For example, a larger output variation of the selector indicates a larger penalty.

In a possible implementation, if the feature extraction model uses a multi-layer cascading manner, the following steps may be further included (where two layers are used as an example for description):

The client device performs the following process:

(6) The client device calculates an output value $\{g_{i\_1}\}_{i=1}^{I_{Tr\_s}^1} = \{[g_{i\_1}^1 \quad g_{i\_1}^2 \quad \cdots g_{i\_1}^n \quad \cdots \quad g_{i\_1}^N]\}_{i=1}^{I_{Tr\_s}^1}$ of a 1st-layer selector for data in the valid training set in the training data set, and a corresponding 1st-layer feature vector $\{z_{1\_1} \quad z_{i\_1} \quad \cdots z_{I_{Tr\_s\_1}^1}\}$.

(7) The client device classifies 1st-layer feature vectors into different data subsets based on $\{g_{i\_1}\}_{i=1}^{I_{Tr\_s}^1}$, where feature vectors in a feature subset v are corresponding feature vectors obtained through calculation by using a $v$th 1st-layer task model.

(8) The client device inputs the feature vectors in the feature subset v into a 2nd-layer feature extraction model, and calculates a result $\{g_{i\_1}\}_{i=1}^{I_v^1} = \{[g_{i\_1}^1 \quad g_{i\_1}^2 \quad \cdots g_{i\_1}^n \quad \cdots \quad g_{i\_1}^N]\}_{i=1}^{I_v^1}$ of the 2nd-layer feature extraction model for the data.

(9) The client device calculates an average output result $g_{v_1} = [g_{v\_1}^1 \quad g_{v\_1}^2 \quad \cdots g_{v\_1}^n \quad \cdots \quad g_{v\_1}^N]$, where

$$g_{v\_1}^n = \sum_{i=1}^{l_v^1} g_{i\_1}^n$$

(10) The client device calculates an entropy corresponding to $g_{v_1}$, and uses the value as a reward term of the feature extraction model (where a larger value is better), to encourage cross combination of a 1st-layer feature extraction model and the 2nd-layer feature extraction model.

(11) The client device uploads, to the first server, a selector part that is of the feature extraction model and that is obtained after N2 times of training.

The first server performs the following process:

(1) The first server receives a selector that is of the feature extraction model and that is uploaded by each client.

(2) The first server obtains a weight based on a data volume used during training of each task model. For example, a larger data volume indicates a larger weight. The first server obtains a "selector of the feature extraction model of the first server" in a weighted averaging manner, and delivers the "selector of the feature extraction model of the first server" to the client.

The foregoing process may be repeatedly performed multiple times until the feature extraction model is converged.

With reference to a possible implementation, the following further describes a possible training process of the feature extraction model.

The client device performs the following process:

(1) The client device sets a neural network parameter that is in the selector and that corresponds to a task model owned by the client device to be active, and sets the other part to be inactive.

(2) For the inactive part in the selector, the client device adds different noise based on an original model parameter value to obtain feature extraction models of different versions, for example, a feature extraction model 1, a feature extraction model 2, and a feature extraction model 3.

(3) The client device uses data in a training data set to perform forward calculation on the feature extraction models of the different versions, to obtain output results of the models and output values $\{g_{i\_l}\}_{i=1}^{l_{Tr\_s}^{l-1}} = \{[g_{i\_l}^1 \quad g_{i\_l}^2 \quad \cdots g_{i\_l}^n \quad \cdots \quad g_{i\_l}^N]\}_{i=1}^{l_{Tr\_s}^{l-1}}$ of selectors in the feature extraction models.

(4) The client device calculates a task loss value based on the output results of the models and a real label, where $\alpha_i$ represents weights allocated to different types, $Loss_i$ is a loss function corresponding to an $i^{th}$ piece of data, and $\alpha_i$ represents the different weights allocated to the different types.

(5) The client device calculates an average value $\bar{g}_l = [g_l^1 \quad g_l^2 \quad \cdots \quad g_l^n \quad \cdots \quad g_l^N]$ based on the output values of the selectors, and uses topK $g_l^n$ with largest values as 1th-layer rewards.

(6) The client device uses a sum of the loss function in (5) and a reward function in (6) as a training target to calculate a gradient, and updates the feature extraction model based on the gradient.

(7) The client device averages updated feature extraction models of the different versions, to obtain a locally updated feature extraction model.

(8) The client device repeats (3) to (5) for N1 times.

The first server performs the following process:

(1) The first server receives a feature extraction model uploaded by each client device.

(2) The first server obtains, based on a data volume used during training of each task model, a weight of the feature extraction model uploaded by the client, obtains a "feature extractor of a parameter server" in a weighted averaging manner, and delivers the "feature extractor of the parameter server" to the client device.

The foregoing process may be repeatedly performed multiple times until the feature extraction model is converged.

908: The first server sends the trained feature extraction model to the second server.

In this implementation, the first server and the second server interact asynchronously. In other words, in each round of iterative training process, the first server and the client device frequently interact with each other, and the second server does not participate in each round of iterative training process. When the first server obtains the trained feature extraction model, the first server may already perform a plurality of rounds of interaction with the client device, and the first server sends the obtained trained feature extraction model to the second server. The second server may fuse trained feature extraction models sent by different first servers.

In a possible implementation, the second server combines a selector of the trained feature extraction model uploaded by the first server with the selector of the feature extraction model on the second server, where a combination method is model distillation. In other words, the old selector on the second server and the selector uploaded by the first server are used as teachers to train a new selector.

In a possible implementation, a task model of the trained feature extraction model uploaded by the first server is combined with the task model corresponding to the feature extraction model on the second server, where a combination method is model distillation. In other words, the task model uploaded by the first server and the old corresponding task model on the second server are used as teachers to train a new task model with a corresponding number.

In the implementation corresponding to FIG. 9, the at least one clustering center and the feature extraction model are alternately updated in the training process. In a possible implementation, to reduce an interaction procedure, both an update of the at least one clustering center and an update of the feature extraction model may be completed in one iterative update. For example, in one iterative update, after the feature extraction model is updated multiple times by using local data, and the at least one clustering center is also updated multiple times, an updated feature extraction model and at least one updated clustering center are sent to the first server.

II. Inference phase

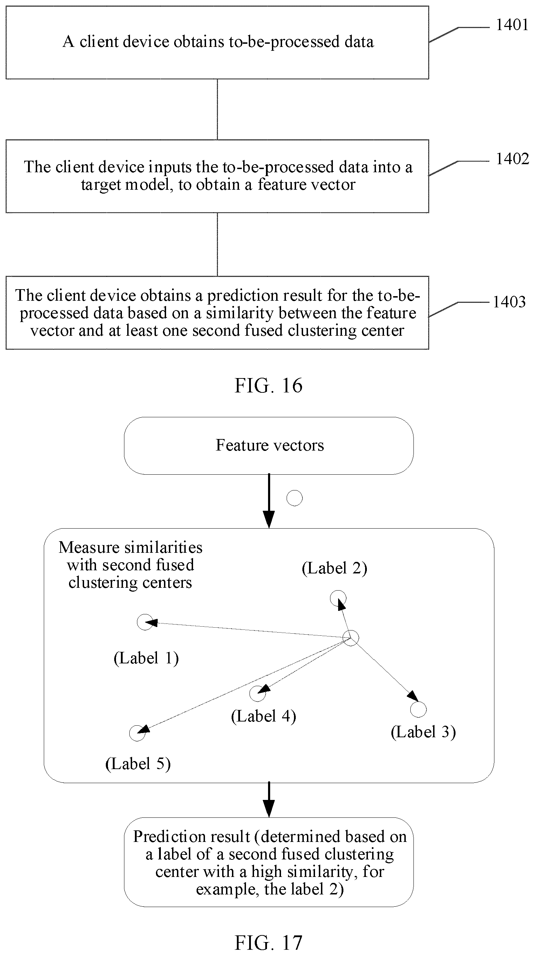

FIG. 16 is a schematic flowchart of a machine learning model inference method according to an embodiment of this application. The method may include the following steps:

1401: A client device obtains to-be-processed data.

In the inference phase, a type of the to-be-processed data is consistent with a data type of training data in the training phase. For example, the to-be-processed data may be data of an image type, data of a voice type, or data of a text type.

1402: The client device inputs the to-be-processed data into a target model, to obtain a feature vector.

The target model is a fused feature extraction model finally obtained by the client device after the training phase is completed. Details are not described herein again.

After the client device inputs the to-be-processed data into the target model, a selector of the target model selects one or more task models from a plurality of task models based on the to-be-processed data, and the one or more selected task models are used to perform feature extraction on the to-be-processed data to obtain the feature vector. For a process of obtaining the feature vector by using the one or more task models, refer to the foregoing process of obtaining the feature vector by using the one or more task models described in the training phase for understanding, for example, refer to the process described in FIG. 12 or FIG. 13 for understanding. Details are not described herein again.

1403: The client device obtains a prediction result for the to-be-processed data based on a similarity between the feature vector and at least one second fused clustering center

The at least one second fused clustering center is a fused clustering center finally obtained by the client device from a first server after the training phase is completed. The at least one second fused clustering center is also referred to as an anchor feature vector set generated in the training phase below. It can be learned from the content described in the training phase that, in a training process, a feature extraction model and a fused clustering center that are maintained by the client device are continuously updated. For example, in an iterative training process, the client device receives a fused clustering center 1 from the first server, and updates a currently maintained feature extraction model 1 based on the fused clustering center 1, the feature extraction model 1, and training data locally obtained by the client device. It is assumed that an updated feature extraction model 1 is a feature extraction model 2. The client device sends the feature extraction model 2 to the first server, and obtains a fused model from the first server to update the locally maintained feature extraction model 2. It is assumed that an updated feature extraction model is a feature extraction model 3. The client device obtains an anchor feature vector set based on the feature extraction model 3 and training data locally obtained by the client device, and sends the anchor feature vector set 1 to the first server. The first server may obtain a fused clustering center 2 based on anchor feature vector sets obtained from different client devices, and deliver the fused clustering center 2 to the client devices. The client device updates the feature extraction model 3 based on the fused clustering center 2, the currently maintained feature extraction model 3, and training data locally obtained by the client device, and sends an updated feature extraction model 3 to the first server. If the training process ends here, the fused clustering center finally obtained by the client device from the first server is the fused clustering center 2.

In the solution provided in this embodiment of this application, the similarity between the feature vector and the at least one second fused clustering center may be measured in a plurality of manners. Any method for measuring a similarity between two vectors may be used in the solution provided in this embodiment of this application. For example, the similarity between the feature vector and the at least one second fused clustering center may be measured in any one of a dot product distance, a Euclidean distance, and a cosine distance. For another example, the similarity between the feature vector and the at least one second fused clustering center may alternatively be obtained by training a neural network model. In a possible implementation, a similarity between the feature vector and each second fused clustering center may be sorted. Sorting may be performed based on a pre-calculated distance, or may be performed by training a neural network.

Because each second fused clustering center has a label, the client device obtains the similarity between the feature vector and the at least one second fused clustering center, and obtains the prediction result for the to-be-processed data based on a label of a second fused clustering center with a high similarity. For example, with reference to FIG. 17, the similarity between the feature vector and each second fused clustering center is measured, and the prediction result is obtained based on a label of a second fused clustering center with a highest similarity.

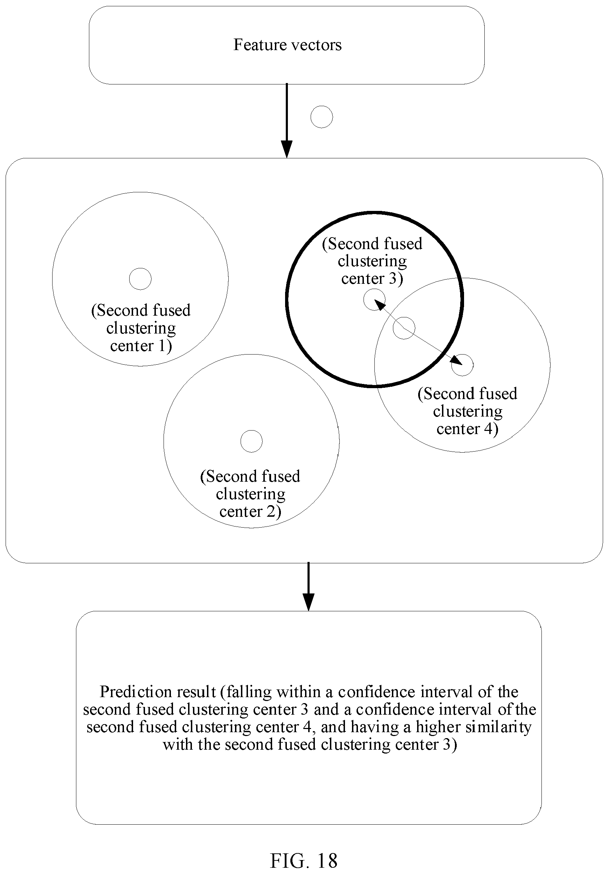

In a possible implementation, a confidence interval may be further set for the second fused clustering center. In this implementation, the client device obtains the prediction result for the to-be-processed data based on the similarity between the feature vector and the at least one second fused clustering center and a confidence interval of the at least one second fused clustering center For better understanding, this solution is described by using an example with reference to FIG. 18. It may be first determined whether the feature vector falls within the confidence interval of the at least one second fused clustering center. If the feature vector falls within confidence intervals of one or more second fused clustering centers, for example, as shown in FIG. 18, the feature vector falls within a confidence interval of a second fused clustering center 3 and a confidence interval of a second fused clustering center 4, on the premise that the feature vector falls within the confidence intervals of the one or more second fused clustering centers, the prediction result is obtained based on similarities between the feature vector and the one or more second fused clustering centers. For example, still refer to FIG. 18. A similarity between the feature vector and a second fused clustering center 1 and a similarity between the feature vector and a second fused clustering center 2 do not need to be determined, and only a similarity between the feature vector and the second fused clustering center 3 and a similarity between the feature vector and the second fused clustering center 4 need to be determined. In a possible implementation, the similarity between the feature vector and the second fused clustering center 3 is higher than the similarity between the feature vector and the second fused clustering center 4, and the prediction result is obtained based on a label of the second fused clustering center 3.

In some possible implementations, the client device may measure the similarity between the feature vector and the at least one second fused clustering center, and perform prediction for the to-be-processed data based on the label of the second fused clustering center with the high similarity. However, a similarity between the feature vector and any second fused clustering center may not be very high. Alternatively, there may be a case in which the feature vector does not fall within a confidence interval of any second fused clustering center. In these cases, there may be a problem of low prediction accuracy. In this case, the target model stored in the client device needs to be updated, in other words, the target model needs to be retrained, to improve prediction accuracy of the target model. If only a small amount of training data is used according to a conventional model training method, for example, only one piece of training data is used to update the target model, a problem of low performance of a retrained target model is caused, for example, a problem of overfilling may exist. Therefore, if the conventional model training method is used, the target model needs to be retrained by using a large amount of training data, to update a parameter of the target model. However, in the solution provided in this embodiment of this application, the target model can be quickly updated by using only a small amount of training data, for example, only one piece of training data, and prediction accuracy of a trained target model can be ensured. The following provides descriptions with reference to a specific implementation.

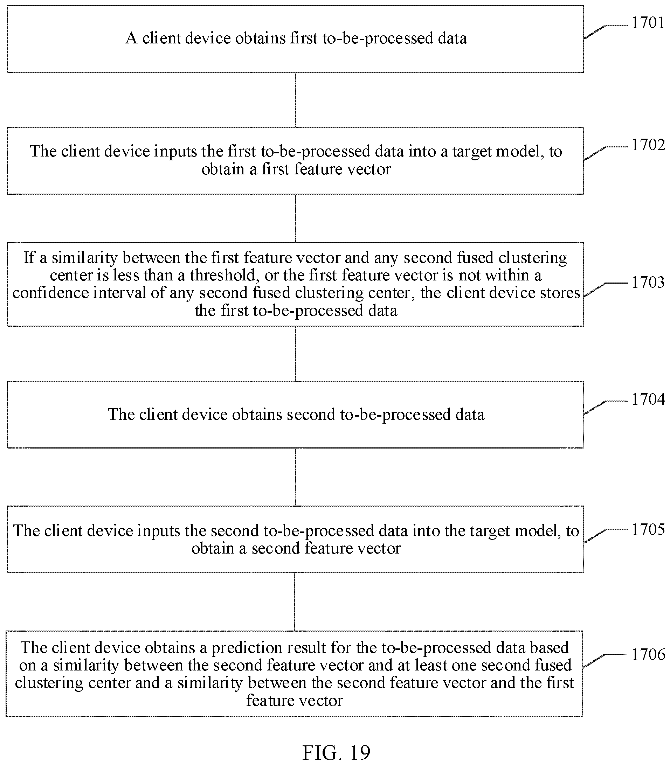

FIG. 19 is a schematic flowchart of another machine learning model inference method according to an embodiment of this application. The method may include the following steps:

1701: A client device obtains first to-be-processed data.

1702: The client device inputs the first to-be-processed data into a target model, to obtain a first feature vector.

For step 1701 and step 1702, refer to step 1401 and step 1402 in the embodiment corresponding to FIG. 16 for understanding. Details are not described herein again.

1703: If a similarity between the first feature vector and any second fused clustering center is less than a threshold, or the first feature vector is not within a confidence interval of any second fused clustering center, the client device stores the first to-be-processed data.

For ease of description, in this embodiment of this application, a feature vector whose similarity with any second fused clustering center is less than the threshold or that is not within the confidence interval of any second fused clustering center is referred to as an error case feature or an error case feature vector, and to-be-processed data (for example, the first to-be-processed data) corresponding to the error case feature is referred to as an error case. The client device may directly store the first to-be-processed data, or may indirectly store the first to-be-processed data, for example, store the first feature vector corresponding to the first to-be-processed data.

A user may annotate a label of the first to-be-processed data through the client device, or may annotate the label of the first to-be-processed data through a first server or a second server, or obtain the label of the first to-be-processed data in another manner. A manner of obtaining the label of the first to-be-processed data is not limited in this embodiment of this application.

In a possible implementation, if data with an inference error or data with a low confidence (where a distance exceeds a confidence interval) is found during inference, an error case feature vector is obtained for the data by using a feature extraction model, the error case feature vector is added to an error case feature vector set, and a corresponding confidence is calculated.

In a possible implementation, an error may be found during inference in a manual check manner or an automatic annotation manner. For example, in multi-frame video detection, automatic annotation is performed in the following method: If a distance between feature vectors $\{z_{i,t}\}_{t=1}^{T}$ calculated by using a feature extraction model for inference data in a continuous time period t=1, 2, 3, ..., and T is small, data corresponding to $\{z_{i,t}\}_{t=1}^{T}$ may be annotated as a non-error case. If a distance between feature vectors $\{z_{i,t}\}_{t=1}^{T}$ is large, data corresponding to $\{z_{i,t}\}_{t=1}^{T}$ may be annotated as an error case.

1704: The client device obtains second to-be-processed data.

1705: The client device inputs the second to-be-processed data into the target model, to obtain a second feature vector.

For step 1704 and step 1705, refer to step 1401 and step 1402 in the embodiment corresponding to FIG. 16 for understanding. Details are not described herein again.

1706: The client device obtains a prediction result for the to-be-processed data based on a similarity between the second feature vector and at least one second fused clustering center and a similarity between the second feature vector and the first feature vector.

In this implementation, if there is an error case in a previous inference process, in a subsequent inference process, in addition to measuring a similarity between an obtained feature vector (for example, the second feature vector) and the second fused clustering center obtained in a training process, the client device may further measure a similarity between the second feature vector and an error case feature.

In a possible implementation, if the similarity between the second feature vector and the at least one second fused clustering center is not less than the threshold, the similarity between the second feature vector and the error case feature may not be measured. The prediction result for the second to-be-processed data is obtained based only on the similarity between the second feature vector and the at least one second fused clustering center.

In a possible implementation, if a similarity between the second feature vector and any second fused clustering center is less than the threshold, or the second feature vector is not within a confidence interval of any second fused clustering center, the similarity between the second feature vector and the error case feature continues to be measured, and the prediction result for the second to-be-processed data is obtained based on the similarity between the second feature vector and the at least one second fused clustering center and the similarity between the second feature vector and the first feature vector.

In a possible implementation, after obtaining an error case (or the error case and a label), the client device may broadcast the error case (or the error case and the label). For example, a client device 1 is managed by the first server, and the first server further manages a client device 2 and a client device 3. If obtaining an error case (or the error case and a label), the client device 1 may send the error case (or the error case and the label) to the client device 2, the client device 3, and the first server. In addition, the error case may alternatively be broadcast in a manner of an error case feature. For example, if obtaining an error case, the client device 1 may send an error case feature corresponding to the error case to the client device 2, the client device 3, and the first server. In a possible implementation, the client device may alternatively broadcast the error case through the first server, for example, send the error case to the first server, and the first server uniformly sends the error case to client devices managed by the first server. In a possible implementation, the error case may be obtained from the client device and the label of the error case may be obtained from the first server, or the error case and the label of the error case may be obtained from the client device. This is not limited in this embodiment of this application. In a possible implementation, the client device broadcasts once when the client device obtains one error case, or the client device may broadcast once when the client device obtains a plurality of error cases. Another client may add a received error case feature vector to an "error case feature vector set" of the another client, and calculate a corresponding confidence.

In a possible implementation, after the first server obtains a sufficient quantity of error case features, for example, a quantity of error case features obtained by the first server reaches a specified quantity, the first server may cluster the obtained error case features, to obtain at least one third fused clustering center. The third fused clustering center is also referred to as a clustering center of error cases below, or is referred to as an error case-generated anchor feature vector set. For a manner of determining a label of the clustering center of error cases, refer to the manner of obtaining the label of the first fused clustering center for understanding. Details are not described herein again. The first server may deliver the clustering center of error cases to each client device managed by the first server. In a subsequent inference process, in addition to measuring a similarity between an obtained feature vector and the second fused clustering center (an anchor feature vector set generated in a training phase) obtained in the training process, the client device may further measure a similarity between the obtained feature vector and the clustering center of error cases (the error case-generated anchor feature vector set). In this embodiment of this application, the anchor feature vector set generated in the training phase and the error case-generated anchor feature vector set are collectively referred to as an anchor feature vector set. This is equivalent to that in the subsequent inference process, a similarity between the obtained feature vector and each feature vector in the anchor feature vector set is measured. In a possible implementation, after receiving the clustering center of error cases from the first server, the client device may delete a locally stored error case or error case feature.

In a possible implementation, a confidence interval may be further set for the clustering center of error cases. Specifically, the client device may set different reference confidence intervals for the clustering center of error cases. Performance or evaluation indicators of the target model are obtained at the different reference confidence intervals. For example, after the different reference confidence intervals are set for the clustering center of error cases, prediction accuracy, recall rates, and the like of the target model are calculated. The client device sends the different reference intervals and the evaluation indicators corresponding to the different reference intervals to the first server, and the first server determines the confidence interval of the clustering center of error cases based on the obtained different reference intervals and evaluation indicators corresponding to the different reference intervals. For how to use the confidence interval of the clustering center of error cases in a prediction process of the target model, refer to the manner of using the confidence interval of the first fused clustering center for understanding. Details are not described herein again.

In a possible implementation, after obtaining that a quantity of error cases in a local "error case feature vector set" exceeds a threshold, the first server triggers clustering to generate a "temporary error case-generated anchor feature vector set", and delivers the "temporary error case-generated anchor feature vector set" to the client device. The client device receives the "temporary error case-generated anchor feature vector set", and calculates precision and recall rates at different confidence intervals. The client device uploads the precision, the recall rates, and data volumes of various types of data to the first server. The first server receives the precision, the recall rates, and the data volumes of various types of data of the client device at the different confidence intervals, calculates global precision and recall rates at the different confidence intervals based on precision, recall rates, and data volumes of various types of data of different client devices at the different confidence intervals, and selects a maximum radius within which the global precision meets a constraint as a confidence radius. The first server adds a feature vector of the "temporary error case-generated anchor feature vector set" and the corresponding confidence radius to an "error case-generated anchor feature vector set". The first server removes, from error case data, error case data included in the "temporary error case-generated anchor feature vector set" and the corresponding confidence radius.

If a quantity of pieces of remaining error case data still exceeds the threshold, the first server triggers clustering again to generate a "temporary error case-generated anchor feature vector set". If a quantity of pieces of remaining error case data does not exceed the threshold, the first server delivers the "error case-generated anchor feature vector set" and an "error case feature vector set" to the client device. In a possible implementation, after receiving the "error case-generated anchor feature vector set" and the "error case feature vector set" that are delivered by the first server, the client device may further update, by using local data, a confidence interval corresponding to the "error case-generated anchor feature vector set".

In a possible implementation, a confidence interval of any first fused clustering center is greater than a confidence interval of any clustering center of error cases. This is because confidence space corresponding to each first fused clustering center is information extracted by using a large amount of data, for example, a class center obtained by clustering data belonging to a same cluster; or the confidence space is obtained through learning. Because the confidence space corresponding to the first fused clustering center is obtained through learning by using a large amount of data, the confidence space has a large confidence. However, the error case data is data for which an inference error is found during inference or data with a low confidence during inference. Because the error case data has only information of a single piece of data, a confidence is small. Therefore, the confidence interval of the clustering center of error cases is also small.

In a possible implementation, after obtaining that a quantity of error cases in the "error case-generated anchor feature vector set" exceeds the threshold, the first server triggers model retraining, and the solution described in the training phase is re-performed.

In a possible implementation, for a single-frame signal $x_{inf}$, the client device may calculate a feature vector $z_{inf}$ for inference data $x_{inf}$ by using the feature extraction model. If the "error case-generated anchor feature vector set" is not empty, a distance between the feature vector $z_{inf}$ of the inference data and each vector in the "error case-generated anchor feature vector set" is calculated, and a label corresponding to a feature vector that meets a confidence interval constraint and has a smallest distance is selected as an output result. If the "error case-generated anchor feature vector set" is empty or all calculated distances do not meet the confidence interval constraint, whether the "error case feature vector set" is empty is further obtained. If the "error case feature vector set" is not empty, a distance between the feature vector $z_{inf}$ of the inference data and each vector in the "error case feature vector set" is calculated, and a label corresponding to a feature vector that meets the confidence interval constraint and has a smallest distance is selected as an output result. If the "error case feature vector set" is empty or all calculated distances do not meet the confidence interval constraint, a distance between the feature vector $z_{inf}$ of the inference data and each vector in a "training-generated anchor feature vector set" is calculated, in other words, a similarity between the feature vector $z_{inf}$ of the inference data and at least one first fused clustering center is calculated, and a label corresponding to a feature vector that meets the confidence interval constraint and has a smallest distance is selected as an output result. If none of the conditions is met, a label corresponding to a feature vector with a smallest distance is selected from the "error case-generated anchor feature vector set", the "error case feature vector set", and the "training-generated anchor feature vector set" as an output result.

In a possible implementation, for continuous frames of signals $\left\{\left\{x_{i,t}\right\}_{t=1}^{T}\right\}_{i=1}^{I}$, the client device may input each frame of signal in the continuous frames of signals into the feature extraction model, and fuse output results of the feature extraction model for the frames of signals, to obtain a prediction result for the continuous frames of signals $\left\{\left\{x_{i,t}\right\}_{t=1}^{T}\right\}_{i=1}^{I}$. For example, a feature vector $\left\{z_{i,t}\right\}_{t=1}^{T}$ is calculated by using the feature extraction model for each frame of signal $\left\{x_{i,t}\right\}_{t=1}^{T}$ in the local continuous frames of signals $\left\{\left\{x_{i,t}\right\}_{t=1}^{T}\right\}_{i=1}^{I}$, to obtain a data set $\left\{\left\{z_{i,t}\right\}_{t=1}^{T}, y\right\}_{i=1}^{I}$. The data set is used to train a sequence signal model $y = f\left(\left\{z_{i,t}\right\}_{t=1}^{T}; \theta_{seq}\right)$, a feature vector $\left\{z_{inf,t}\right\}_{t=1}^{T}$ is calculated for inference data $\left\{x_{inf,t}\right\}_{t=1}^{T}$ by using the feature extraction model, and an inference result is obtained for $\left\{z_{inf,t}\right\}_{t=1}^{T}$ by using $f\left(\left\{z_{inf,t}\right\}_{t=1}^{T}; \theta_{seq}\right)$.

To better understand the solutions provided in embodiments of this application, the following further describes, with reference to a preferred implementation, the solutions described in the training phase and the inference phase in the solutions provided in embodiments of this application.

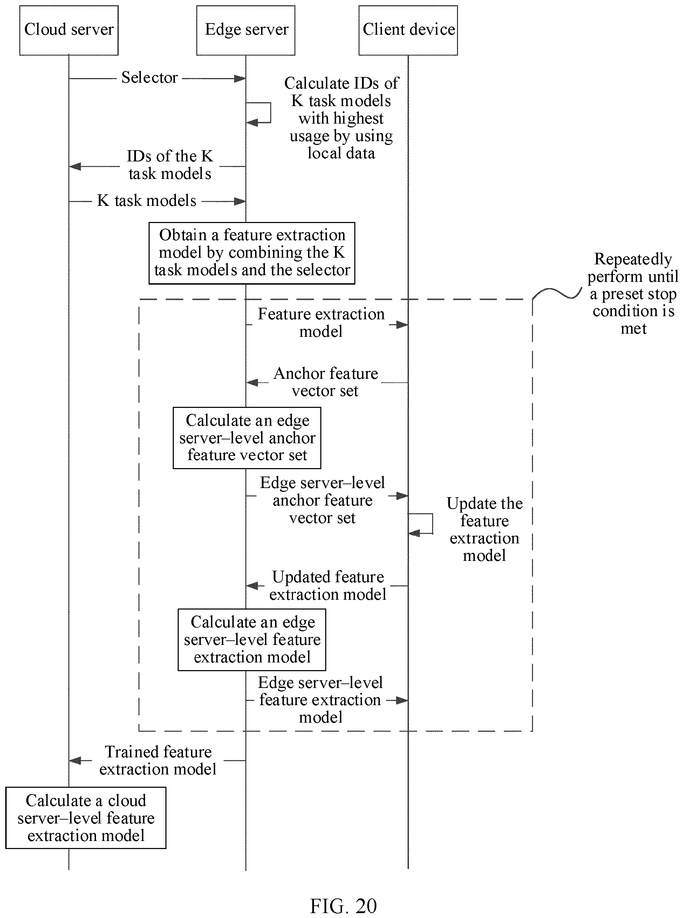

FIG. 20 is a schematic flowchart of another machine learning model training method according to an embodiment of this application. The method may include the following steps:

A cloud server performs the following steps:

The cloud server delivers a selector to an edge server. The selector may be pre-trained or may not be pre-trained.

The cloud server receives IDs of P task models (equivalent to the ID of the target task model in the foregoing embodiments) selected and uploaded by the edge server, where P is an integer greater than 0.

The cloud server delivers the P task models corresponding to the IDs of the P task models to the edge server. In a possible implementation, a storage address of the P task models may be sent, or the P task models may be sent. A specific sending form is not limited in this embodiment of this application.

The edge server performs the following steps:

The edge server receives the selector delivered by the cloud server, calculates the IDs of the P task models with highest usage by using local data and the selector, and uploads the IDs of the P task models with the highest usage to the cloud server.

The edge server receives the P task models delivered by the cloud server, and generates a feature extraction model by using the selector and the task models. The edge server delivers the feature extraction model to client devices managed by the edge server.

The edge server receives anchor feature vectors uploaded by the client devices, calculates an edge server-level anchor feature vector (where it is equivalent to that the edge server fuses the obtained anchor feature vectors uploaded by the clients, to obtain the edge server-level anchor feature vector), and delivers a feature vector corresponding to an edge server-level anchor to the client devices.

The edge server receives model parameters that are of feature extraction models and that are uploaded by the client devices, calculates a model parameter of an edge server-level feature extraction model (where it is equivalent to that the edge server fuses the obtained feature extraction models uploaded by the clients, to obtain the edge server-level feature extraction model), and delivers the model parameter of the edge server-level feature extraction model to the client devices.

The client device performs the following steps:

The client device receives the feature extraction model delivered by the edge server, calculates an anchor feature vector by using the received feature extraction model and local data, and uploads the anchor feature vector to the edge server.

The client device receives the edge server-level anchor feature vector delivered by the edge server, trains the feature extraction model by using the local data and using the received server-level anchor feature vector as a classifier, and uploads a parameter of an updated feature extraction model to the edge server. A server-level anchor feature vector received from the edge server for the last time is also referred to as an "anchor feature vector set" below.

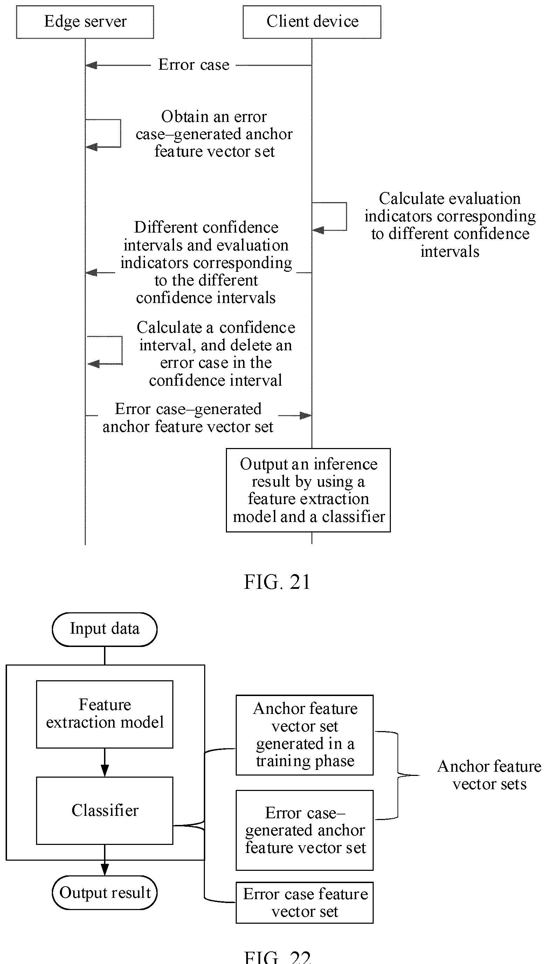

FIG. 21 is a schematic flowchart of another machine learning model training method according to an embodiment of this application. The method may include the following steps:

An edge server performs the following steps:

The edge server receives data (referred to as an error case for short) for which an inference error occurs and that is uploaded by a client device, and obtains a feature vector of the error case. The feature vector of the error case may be obtained by the edge server through calculation, or may be sent by the client device to the edge server. A set of obtained feature vectors of error cases is referred to as an "error case feature vector set" below.

If a quantity of error case features in the "error case feature vector set" exceeds a threshold, the edge server clusters the error case features in the "error case feature vector set" to obtain a clustering center of error cases. In this application, a set of clustering centers of error cases is also referred to as an "error case-generated anchor feature vector set".

The edge server delivers the "error case-generated anchor feature vector set" to the client device managed by the edge server.

The edge server receives evaluation indicators that correspond to different confidence intervals and that are calculated by the client device, for example, prediction accuracy and recall rates obtained by the client device at the different confidence intervals. The edge server calculates, based on the evaluation indicators corresponding to the different confidence intervals, a confidence interval corresponding to each clustering center of error cases.

The edge server deletes an error case in the confidence interval corresponding to each clustering center of error cases in the "error case feature vector set". If a quantity of error case features in the "error case feature vector set" still exceeds the threshold, the edge server may cluster error case features in the current "error case feature vector set" again, and re-perform a process of obtaining a confidence interval corresponding to a clustering center of error cases until a quantity of error case features in the "error case feature vector set" does not exceed the threshold. In this case, the edge server delivers a latest obtained "error case-generated anchor feature vector set" to the client device. If an "error case feature vector set" exists, the "error case feature vector set" may be further delivered to the client device.

The client device performs the following steps:

The client device receives the "error case-generated anchor feature vector set" delivered by the edge server, calculates the evaluation indicators corresponding to the different confidence intervals, and sends the evaluation indicators corresponding to the different confidence intervals to the edge server.

The client device receives the confidence interval that corresponds to each clustering center of error cases and that is delivered by the edge server.

The client device receives the "error case-generated anchor feature vector set" delivered by the edge server, or receives the "error case-generated anchor feature vector set" and the "error case feature vector set" that are delivered by the edge server; calculates precision and recall rates in different confidence radiuses by using local data; and sends the precision and recall rates in the different confidence radiuses to the edge server.

The client device performs feature extraction on input data by using a feature extraction model obtained from the edge server for the last time, and performs inference on the input data by using, as a classifier, an "error case-generated anchor feature vector set" and an "error case feature vector set" that are obtained from the edge server for the last time and an "anchor feature vector set" obtained in a training phase.

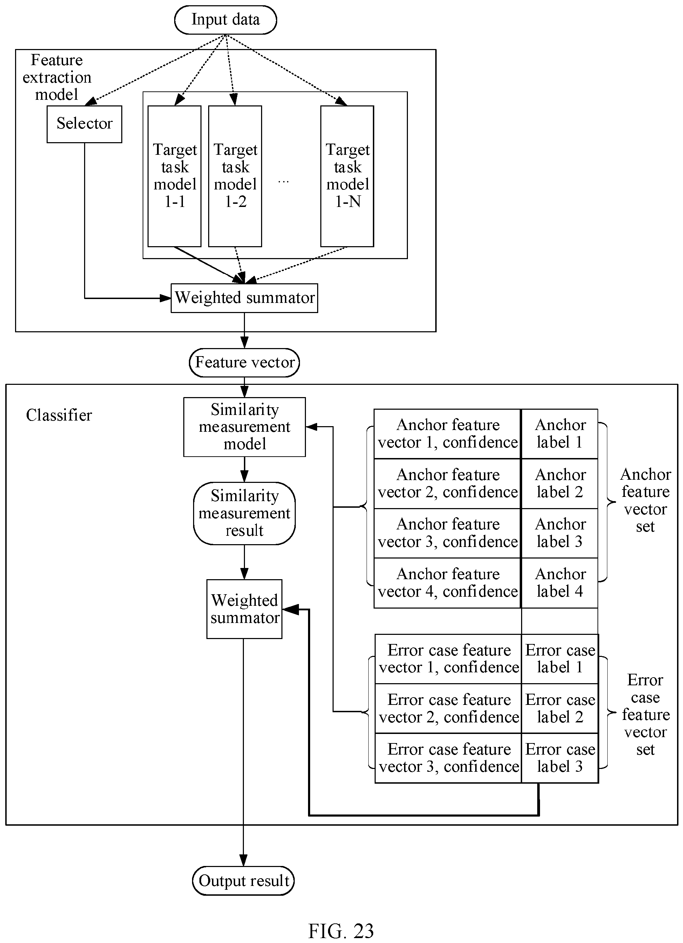

A model may usually include a feature extraction model used for feature extraction and a classifier used for classification. In the solutions provided in embodiments of this application, the classifier includes a vector set. For example, refer to a model architecture shown in FIG. 22. For a feature extraction model, refer to the feature extraction model described in the foregoing embodiments for understanding. A classifier includes one or more vector sets, for example, as shown in FIG. 22, includes an "error case-generated anchor feature vector set", an "error case feature vector set", and an "anchor feature vector set" obtained in a training phase. FIG. 23 further shows a more specific model architecture. A classifier specifically includes "example feature vector sets", a "similarity measurement model", and a "weighted summator". A feature vector is obtained for inference data by using a feature extraction model. A similarity between the feature vector and each feature vector in the "example feature vector sets" is calculated by using the "similarity measurement model". A similarity measurement result is used as a weight to calculate a weighted sum for each label in the "example feature vector sets" by using the "weighted summator". For example, the "example feature vector sets" include an "error case-generated anchor feature vector set", an "error case feature vector set", and an "anchor feature vector set" obtained in a training phase. The "similarity measurement model" is used to measure a distance between two feature vectors or sort a plurality of feature vectors. The distance between the two feature vectors may be calculated according to a fixed formula, for example, may be a Euclidean distance or a cosine distance, or may be calculated by training a neural network model and using a trained neural network model. The "weighted summator" uses the similarity measurement result calculated by using the "similarity measurement model" as the weight, calculates the weighted sum for each label in the "example feature vector sets", and obtains a final prediction result based on the weighted sum.

In a possible implementation, if a quantity of feature vectors in an "error case-generated anchor feature vector set" obtained by an edge server exceeds a threshold, a retraining process may be triggered, to be specific, a training process is re-performed to retrain a feature extraction model and update an "anchor feature vector set" obtained in a previous training phase. In this implementation, data obtained by a client device further includes an error case sample set $\{x_{sn,cn,rn}^{err}\}_{rn=1}^{rN_{sn,cn}^{err}}$ where $x_{sn,cn,rn}^{err}$ represents an $rn$th piece of error case sample data (or an error case) of a $cn$th client device managed by an $sn$th first server. Error cases include a sample that is incorrectly classified, and may also include a sample whose inference confidence does not reach a threshold. The error case may be an error case discovered by the local client device, or may be a received error case discovered by another client device managed by a first server corresponding to the local client device. In a possible implementation, a weight of data in the error case sample set may be increased, and impact of the data in the error case sample set on a parameter change of a target task model may be increased. In this implementation, data obtained by the first server further includes an error case sample set $\{x_{sn,rn}^{err}\}_{rn=1}^{rN_{sn}^{err}}$, where $x_{sn,rn}^{err}$ represents an $rn$th piece of error case sample set data of the $sn$th first server. The error case sample set obtained by the first server may be an error case sample set $\{x_{sn,cn,rn}^{err}\}_{rn=1}^{rN_{sn,cn}^{err}}$ uploaded by a client device managed by the first server. In a process of obtaining a plurality of first IDs, a weight of data in the error case sample set may be increased, and impact of the data in the error case sample set on obtaining the plurality of first IDs may be increased. In this implementation, data obtained by a second server further includes an error case sample set $\{x_{rn}^{err}\}_{rn=1}^{rN^{err}}$, where $rN^{err}$ represents an error case sample data volume obtained by the second server. In a process in which the second server pre-trains a selector, a weight of data in the error case sample set may be increased, and impact of the data in the error case sample set on a parameter change of the selector may be increased.

In a possible implementation, to ensure data privacy, the client device may perform homomorphic encryption on data sent by the client device. Homomorphic encryption (homomorphic encryption) is an encryption form, and allows people to perform an algebraic operation in a specific form on ciphertext to still obtain an encrypted result. A key in a homomorphic key pair is used to decrypt an operation result of homomorphic encrypted data. The operation result is the same as that of plaintext. In a possible implementation, the first server may perform homomorphic encryption on data sent by the first server. In a possible implementation, the second server may perform homomorphic encryption on data sent by the second server.

To better understand the solutions provided in embodiments of this application, the following describes the solutions provided in embodiments of this application with reference to a typical application scenario.

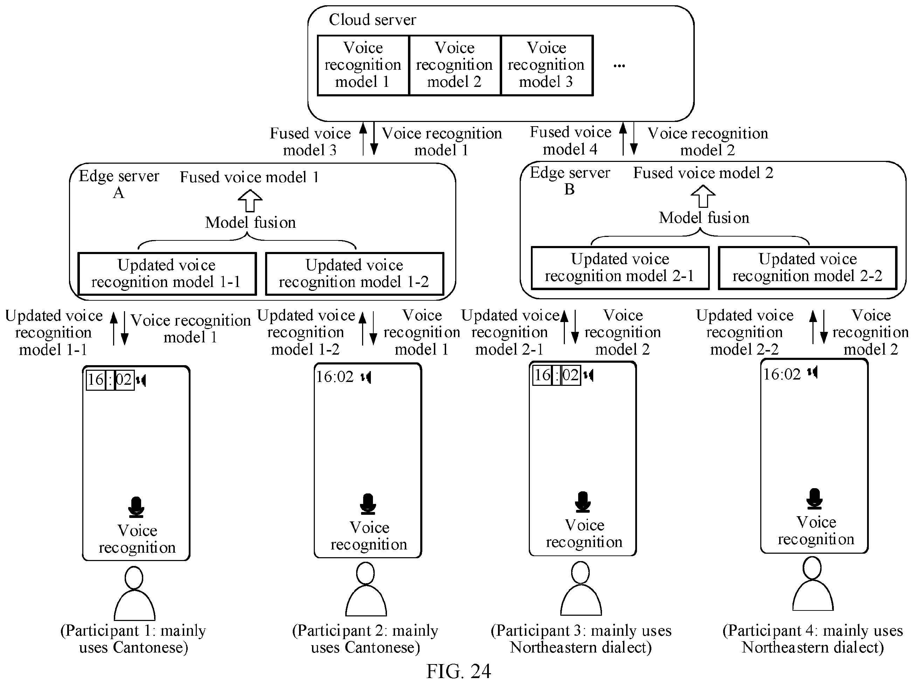

In a voice recognition scenario, to enable a trained model to be used for accurate recognition of voice data obtained by each participant, a parameter scale of the trained model is usually large, and this imposes a very high requirement on performance of a client device. However, in most cases, the client device does not need to perform accurate recognition for all scenarios, and only needs to perform accurate recognition for several scenarios. For example, a user A is a Guangdong person, lives in Guangdong Province, and usually uses Cantonese and Mandarin for communication. In this case, for the user A, the trained model is only required to be able to accurately recognize Cantonese and Mandarin, and is not required to be able to accurately recognize other dialect such as Northeastern dialect and Sichuan dialect. With reference to FIG. 24, it is assumed that a distribution feature of data obtained by a participant 1 is similar to a distribution feature of data obtained by a participant 2, and a distribution feature of data obtained by a participant 3 is similar to a distribution feature of data obtained by a participant 4. An edge server A sends a request to a cloud server based on the distribution feature of the data obtained by the participant 1 managed by the edge server A and the distribution feature of the data obtained by the participant 2 managed by the edge server A, and the cloud server sends, to the edge server A from a plurality of voice recognition models stored by the cloud server, a voice recognition model that the edge server A requests to send. An edge server B sends a request to the cloud server based on the distribution feature of the data obtained by the participant 3 managed by the edge server B and the distribution feature of the data obtained by the participant 4 managed by the edge server B, and the cloud server sends, to the edge server B from the plurality of voice recognition models stored by the cloud server, a voice recognition model that the edge server B requests to send. The edge server A sends the voice recognition model obtained from the cloud server to the participant 1 and the participant 2 that are managed by the edge server A. The participant 1 trains, by using locally obtained data, the voice recognition model obtained from the edge server A, to obtain an updated voice recognition model 1-1. The participant 2 trains, by using locally obtained data, the voice recognition model obtained from the edge server A, to obtain an updated voice recognition model 1-2. The edge server A fuses updated voice recognition models obtained from participants managed by the edge server A, for example, fuses the updated voice recognition model 1-1 and the updated voice recognition model 1-2, to obtain a fused voice model 1. The edge server A, the participant 1, and the participant 2 repeatedly perform a model delivery process and a model fusion process until a stop condition is met, for example, until the model is converged. In this case, the edge server A sends a converged model to the cloud server, for example, sends a fused voice model 3 to the cloud server. The edge server B sends the voice recognition model obtained from the cloud server to the participant 3 and the participant 4 that are managed by the edge server B. The participant 3 trains, by using locally obtained data, the voice recognition model obtained from the edge server B, to obtain an updated voice recognition model 2-1. The participant 4 trains, by using locally obtained data, the voice recognition model obtained from the edge server B, to obtain an updated voice recognition model 2-2. The edge server B fuses updated voice recognition models obtained from participants managed by the edge server B, for example, fuses the updated voice recognition model 2-1 and the updated voice recognition model 2-2, to obtain a fused voice model 2. The edge server B, the participant 3, and the participant 4 repeatedly perform a model delivery process and a model fusion process until a stop condition is met, for example, until the model is converged. In this case, the edge server B sends a converged model to the cloud server, for example, sends a fused voice model 4 to the cloud server. The cloud server may fuse the fused voice model 3 and the fused voice model 4, to obtain a voice recognition model that is applicable to a plurality of application scenarios.

It should be noted that in FIG. 24, the voice recognition scenario is used as an example to describe the solutions. In addition to the voice recognition scenario, the solutions provided in embodiments of this application are further applicable to any scenario to which horizontal federated learning is applicable, for example, are further applicable to an image classification scenario.

The foregoing describes machine learning model training methods provided in this application and how to perform an inference task by using a trained machine learning model. According to the solutions provided in embodiments of this application, training efficiency of a machine learning model can be improved in a training phase, and prediction efficiency of the machine learning model can be improved in an inference phase. It may be understood that, to implement the foregoing functions, the participant includes a corresponding hardware structure and/or software module for executing each function. A person skilled in the art should easily be aware that, in combination with modules and algorithm steps of the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

From a perspective of a hardware structure, the server or the client device in FIG. 2 to FIG. 24 may be implemented by one physical device, may be implemented jointly by a plurality of physical devices, or may be a logical functional module in a physical device. This is not specifically limited in embodiments of this application. The following describes, based on the foregoing machine learning model update systems and methods, apparatuses provided in this application. The apparatuses are configured to perform the steps of the methods corresponding to FIG. 2 to FIG. 24.

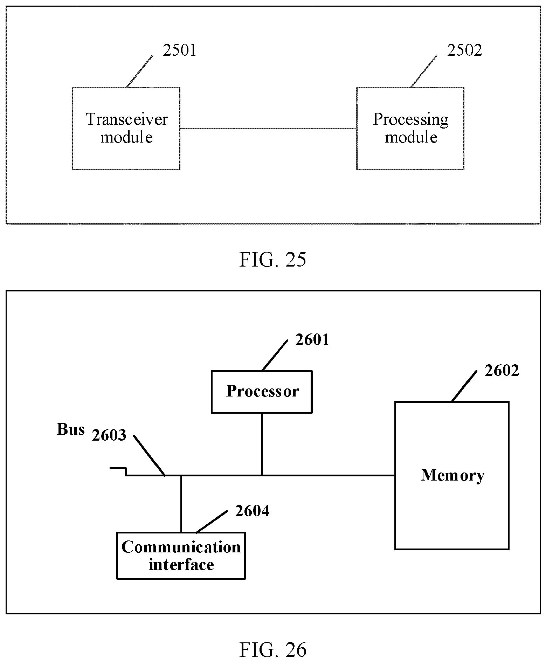

FIG. 25 is a diagram of a structure of an electronic device according to an embodiment of this application.

The device includes a transceiver module 2501 and a processing module 2502.

When the device is the first server described in the embodiments corresponding to FIG. 2 to FIG. 24:

The transceiver module 2501 is configured to perform step 201 and step 202 in the embodiment corresponding to FIG. 2 and another receiving and sending-related step in the embodiment corresponding to FIG. 2, and the processing module 2502 is configured to perform step 204 in the embodiment corresponding to FIG. 3 and another data processing-related step in the embodiment corresponding to FIG. 2.

In a possible implementation, the transceiver module 2501 is configured to perform step 401, step 403, and step 404 in the embodiment corresponding to FIG. 4 and another receiving and sending-related step in the embodiment corresponding to FIG. 4, and the processing module 2502 is configured to perform step 402 and step 406 in the embodiment corresponding to FIG. 4 and another data processing-related step in the embodiment corresponding to FIG. 4.

In a possible implementation, the transceiver module 2501 is configured to perform step 901, step 904, step 907, and step 908 in the embodiment corresponding to FIG. 11 and another receiving and sending-related step in the embodiment corresponding to FIG. 11, and the processing module 2502 is configured to perform step 903 and step 906 in the embodiment corresponding to FIG. 11 and another data processing-related step in the embodiment corresponding to FIG. 11.

In a possible implementation, the transceiver module 2501 is configured to perform a receiving and sending-related step performed by the edge server in the embodiment corresponding to FIG. 20, and the processing module 2502 is configured to perform a data processing-related step performed by the edge server in the embodiment corresponding to FIG. 20.

In a possible implementation, the transceiver module 2501 is configured to perform a receiving and sending-related step performed by the edge server in the embodiment corresponding to FIG. 21, and the processing module 2502 is configured to perform a data processing-related step performed by the edge server in the embodiment corresponding to FIG. 21.

In a possible implementation, the first server is also referred to as an edge server, and the edge server belongs to a management domain of a cloud server. The transceiver module is configured to obtain a first machine learning submodel from the cloud server, where the first machine learning submodel is applied to a management domain of the edge server, and the management domain of the edge server is a subset of the management domain of the cloud server. The processing module is configured to perform federated learning with a plurality of client devices in the management domain of the edge server based on the first machine learning submodel and local service data of the management domain of the edge server, to obtain a second machine learning submodel. The transceiver module is further configured to send the second machine learning submodel to the cloud server.

In a possible implementation, the first machine learning submodel is used to execute a set of sub-services in a user service.

In a possible implementation, the management domain of the cloud server is divided based on network area information or network slice information.

In a possible implementation, the transceiver module is specifically configured to: obtain a selector from the cloud server; send identifiers IDs of a plurality of task models to the cloud server, where the IDs of the plurality of task models are obtained after the processing module inputs the local service data of the management domain of the edge server into the selector; and receive the plurality of task models sent by the cloud server.

In a possible implementation, the processing module is specifically configured to: send the first machine learning submodel to the plurality of client devices through the transceiver module, to trigger the plurality of client devices to use respective local service data and the selector to obtain weights corresponding to outputs of all the task models, and trigger the plurality of client devices to use the respective local service data, the plurality of task models, and the weights separately obtained by the plurality of client devices to obtain feature vectors corresponding to the local service data of the plurality of client devices; receive, through the transceiver module, clustering features sent by the plurality of client devices, where the clustering features are obtained after the plurality of client devices cluster the feature vectors separately obtained by the plurality of client devices; fuse clustering features with a same label, to obtain a fused clustering feature; and send the fused clustering feature to the plurality of client devices through the transceiver module, to trigger the plurality of client devices to update parameters of the first machine learning submodel by using differences between the feature vectors and the fused clustering feature, where an updated first machine learning submodel is used to obtain the second machine learning submodel.

In a possible implementation, the fused clustering feature has a confidence interval, and the confidence interval of the fused clustering feature is obtained after confidence intervals of the clustering features that are with the same label and that are sent by the plurality of client devices are fused.

When the device is the second server described in the embodiments corresponding to FIG. 2 to FIG. 24:

The transceiver module 2501 is configured to perform step 201 and step 202 in the embodiment corresponding to FIG. 2 and another receiving and sending-related step in the embodiment corresponding to FIG. 2, and the processing module 2502 is configured to perform step 205 in the embodiment corresponding to FIG. 3 and another data processing-related step in the embodiment corresponding to FIG. 2.

In a possible implementation, the transceiver module 2501 is configured to perform step 403 and step 404 in the embodiment corresponding to FIG. 4 and another receiving and sending-related step in the embodiment corresponding to FIG. 4, and the processing module 2502 is configured to perform step 407 in the embodiment corresponding to FIG. 4 and another data processing-related step in the embodiment corresponding to FIG. 4.

In a possible implementation, the transceiver module 2501 is configured to perform step 908 in the embodiment corresponding to FIG. 11 and another receiving and sending-related step in the embodiment corresponding to FIG. 11, and the processing module 2502 is configured to perform a data processing-related step in the embodiment corresponding to FIG. 11.

In a possible implementation, the transceiver module 2501 is configured to perform a receiving and sending-related step performed by the cloud server in the embodiment corresponding to FIG. 20, and the processing module 2502 is configured to perform a data processing-related step performed by the cloud server in the embodiment corresponding to FIG. 20.

In a possible implementation, the second server is referred to as a cloud server, a management domain of a first edge server is a first subset of a management domain of the cloud server, a management domain of a second edge server is a second subset of the management domain of the cloud server, and the cloud server includes: the transceiver module, configured to send a first machine learning submodel to the first edge server and send a second machine learning submodel to the second edge server, where the transceiver module is further configured to receive a third machine learning submodel from the first edge server and receive a fourth machine learning submodel from the second edge server, where the third machine learning submodel is obtained by performing federated learning with a plurality of client devices in the management domain of the first edge server based on the first machine learning submodel and local service data of the management domain of the first edge server, and the fourth machine learning submodel is obtained by performing federated learning with a plurality of client devices in the management domain of the second edge server based on the second machine learning submodel and local service data of the management domain of the second edge server; and the processing module, configured to fuse the third machine learning submodel and the fourth machine learning submodel, to obtain a machine learning model.

In a possible implementation, the first machine learning submodel is used to execute a first set of sub-services in a user service.

In a possible implementation, the second machine learning submodel is used to execute a second set of sub-services in a user service.

In a possible implementation, the management domain of the cloud server is divided based on network area information or network slice information.

In a possible implementation, the first machine learning submodel includes a selector and a plurality of first task models, the second machine learning submodel includes a selector and a plurality of second task models, and the transceiver module is specifically configured to: send the selector to the first edge server and send the selector to the second edge server; receive identifiers IDs of the plurality of first task models from the first edge server and receive IDs of the plurality of second task models from the second edge server, where the IDs of the plurality of first task models are obtained by the first edge server by inputting the local service data of the management domain of the first edge server into the selector, and the IDs of the plurality of second task models are obtained by the second edge server by inputting the local service data of the management domain of the second edge server into the selector; and send the plurality of first task models to the first edge server and send the plurality of second task models to the second edge server.

In a possible implementation, the processing module is further configured to: train an initial selector by using local service data of the management domain of the cloud server as training data and using correspondingly outputting an ID of a target task model for target training data as a training target, to obtain the selector, where the target training data is service data with a same label in the local service data of the management domain of the cloud server, and the ID of the target task model includes an ID of at least one task model in a plurality of task models stored in the cloud server

In a possible implementation, the training data further includes auxiliary data, and the auxiliary data includes data with a same label as the local service data of the management domain of the cloud server

In a possible implementation, the processing module is specifically configured to: fix some parameters of the initial selector, and train the initial selector by using the local service data of the management domain of the cloud server as the training data and using correspondingly outputting the ID of the target task model for the target training data as the training target, to obtain the selector.

In a possible implementation, the selector is N autoencoders, the N autoencoders are bound to N task models stored in the cloud server in a one-to-one manner, N is a positive integer greater than 1, and the processing module is further configured to: train an initial autoencoder by using service data with a same label in local service data of the management domain of the cloud server as training data, to obtain one of the autoencoders, where labels of training data of any two of the autoencoders are different. When the device is the client device described in the embodiments corresponding to FIG. 2 to FIG. 24, the transceiver module 2501 is configured to perform a receiving and sending-related step in the embodiment corresponding to FIG. 2, and the processing module 2502 is configured to perform step 203 in the embodiment corresponding to FIG. 3 and another data processing-related step in the embodiment corresponding to FIG. 2.

In a possible implementation, the transceiver module 2501 is configured to perform a receiving and sending-related step in the embodiment corresponding to FIG. 4, and the processing module 2502 is configured to perform step 405 in the embodiment corresponding to FIG. 4 and another data processing-related step in the embodiment corresponding to FIG. 4.

In a possible implementation, the transceiver module 2501 is configured to perform step 901, step 904, and step 907 in the embodiment corresponding to FIG. 11 and another receiving and sending-related step in the embodiment corresponding to FIG. 11, and the processing module 2502 is configured to perform step 902 and step 905 in the embodiment corresponding to FIG. 11 and another data processing-related step in the embodiment corresponding to FIG. 11.

In a possible implementation, the transceiver module 2501 is configured to perform step 1401 in the embodiment corresponding to FIG. 16 and another receiving and sending-related step in the embodiment corresponding to FIG. 11, and the processing module 2502 is configured to perform step 1402 and step 1403 in the embodiment corresponding to FIG. 11 and another data processing-related step in the embodiment corresponding to FIG. 16.

In a possible implementation, the transceiver module 2501 is configured to perform step 1701 and step 1704 in the embodiment corresponding to FIG. 19 and another receiving and sending-related step in the embodiment corresponding to FIG. 11, and the processing module 2502 is configured to perform step 1702, step 1703, step 1705, and step 1706 in the embodiment corresponding to FIG. 11 and another data processing-related step in the embodiment corresponding to FIG. 19.

In a possible implementation, the transceiver module 2501 is configured to perform a receiving and sending-related step performed by the client device in the embodiment corresponding to FIG. 20, and the processing module 2502 is configured to perform a data processing-related step performed by the client device in the embodiment corresponding to FIG. 20.

In a possible implementation, the transceiver module 2501 is configured to perform a receiving and sending-related step performed by the client device in the embodiment corresponding to FIG. 21, and the processing module 2502 is configured to perform a data processing-related step performed by the client device in the embodiment corresponding to FIG. 21.

In a possible implementation, the client device belongs to a management domain of a cloud server, and includes: the transceiver module, configured to receive a first machine learning submodel sent by an edge server, where the first machine learning submodel is applied to a management domain of the edge server, and the management domain of the edge server is a subset of the management domain of the cloud server; and the processing module, configured to perform federated learning with the edge server and another client device in the management domain of the edge server based on the first machine learning submodel and local service data of the management domain of the edge server, to obtain a second machine learning submodel.

In a possible implementation, the first machine learning submodel is used to execute a set of sub-services in a user service.

In a possible implementation, the management domain of the cloud server is divided based on network area information or network slice information.

In a possible implementation, the processing module is specifically configured to: receive, through the transceiver module, the first machine learning submodel sent by the edge server; obtain a feature vector based on local service data of the client device and the first machine learning submodel; cluster the feature vector to obtain a clustering feature; send the clustering feature to the edge server through the transceiver module, to trigger the edge server to fuse clustering features with a same label to obtain a fused clustering feature; receive, through the transceiver module, the fused clustering feature sent by the edge server; and update a parameter of the first machine learning submodel by using a difference between the feature vector and the fused clustering feature, where an updated first machine learning submodel is used to obtain the second machine learning submodel.

In a possible implementation, the transceiver module is specifically configured to: send the clustering feature and a confidence interval of the clustering feature to the edge server, to trigger the edge server to: fuse the clustering features with the same label to obtain the fused clustering feature, and fuse confidence intervals of the clustering features with the same label to obtain a confidence interval of the fused clustering feature.

In a possible implementation, the transceiver module is further configured to: obtain target information, where the target information indicates proportions of service data with different labels in all service data of the management domain of the edge server; and the processing module is further configured to sample all service data of the client device based on the target information and proportions of service data with the different labels in all the service data of the client device, to obtain the local service data of the client device, where local service data of different client devices is used to obtain the local service data of the management domain of the edge server.

In a possible implementation, the client device belongs to a management domain of a cloud server, and the client device includes: the transceiver module, configured to obtain first service data; and the processing module, configured to input the first service data into a second machine learning submodel, to obtain a first feature vector, where the second machine learning submodel is obtained by the client device by performing federated learning with an edge server and another client device in a management domain of the edge server based on a first machine learning submodel and local service data of the management domain of the edge server, the first machine learning submodel is applied to the management domain of the edge server, and the management domain of the edge server is a subset of the management domain of the cloud server, where the processing module is further configured to obtain a prediction result for the first service data based on the first feature vector.

In a possible implementation, the second machine learning submodel includes a selector and a plurality of task models, and that the client device inputs the first service data into the second machine learning submodel, to obtain the first feature vector includes: The client device inputs the first service data into the selector and the plurality of task models. The client device obtains, based on an output of the selector, a weight corresponding to each task model. The client device weighs outputs of the plurality of task models based on the weight, to obtain the first feature vector.

In a possible implementation, that the client device obtains the prediction result for the first service data based on the first feature vector includes: The client device obtains the prediction result for the first service data based on a similarity between the first feature vector and at least one first fused clustering feature and a label of the at least one first fused clustering feature.

In a possible implementation, that the client device obtains the prediction result for the first service data based on the first feature vector includes: The client device obtains the prediction result for the first service data based on a similarity between the first feature vector and at least one first fused clustering feature, a confidence interval of the at least one first fused clustering feature, and a label of the at least one first fused clustering feature.

In a possible implementation, the similarity between the first feature vector and the at least one first fused clustering feature is less than a first threshold, or the first feature vector is not within a confidence interval of any first fused clustering feature, and the client device further includes: The client device broadcasts the first feature vector or the first service data in the management domain of the edge server.

In a possible implementation, the client device further includes: The client device obtains a second feature vector, where a similarity between the second feature vector and at least one first fused clustering feature is less than a first threshold, or the second feature vector is not within a confidence interval of any first fused clustering feature. That the client device obtains the prediction result for the first service data based on the first feature vector includes: The client device obtains the prediction result for the first service data based on a similarity between the first feature vector and the at least one first fused clustering feature, a similarity between the first feature vector and the second feature vector, a label of the at least one first fused clustering feature, and a label of the second feature vector.

In a possible implementation, the client device further includes: The client device receives a second fused clustering feature from the edge server, where a deviation between the second fused clustering feature and any first fused clustering feature exceeds a second threshold. That the client device obtains the prediction result for the first service data based on the first feature vector includes: The client device obtains the prediction result for the first service data based on a similarity between the first feature vector and at least one first fused clustering feature, a similarity between the first feature vector and the second fused clustering feature, a label of the at least one first fused clustering feature, and a label of the second fused clustering feature.

In a possible implementation, the client device further includes: The client device obtains a prediction result for a third feature vector when the second fused clustering feature uses different confidence intervals, where a similarity between the third feature vector and the at least one first fused clustering feature is less than a first threshold, or the third feature vector is not within a confidence interval of any first fused clustering feature. The client device obtains evaluation indicators for the different confidence intervals based on the prediction result. The client device sends the evaluation indicators of the different confidence intervals to the edge server, to trigger the edge server to obtain a confidence interval of the second fused clustering feature based on the obtained evaluation indicators of the different reference confidence intervals. The client device receives the confidence interval that is of the second clustering feature and that is sent by the edge server.

FIG. 26 is a diagram of a structure of another electronic device according to an embodiment of this application. The device is equivalent to any server or client device described in FIG. 2 to FIG. 24.

The apparatus shown in FIG. 26 may include a processor 2601, a memory 2602, a communication interface 2604, and a bus 2603. The processor 2601, the memory 2602, and the communication interface 2604 may be connected through the bus 2603.

The processor 2601 is a control center of a computer device, may be a general-purpose central processing unit (central processing unit, CPU), or may be another general-purpose processor or the like. The general-purpose processor may be a microprocessor, any conventional processor, or the like.

In an example, the processor 2601 may include one or more CPUs.

The memory 2602 may be a read-only memory (read-only memory, ROM) or another type of static storage device capable of storing static information and instructions, a random access memory (random access memory, RAM) or another type of dynamic storage device capable of storing information and instructions, an electrically erasable programmable read-only memory (electrically erasable programmable read-only memory, EEPROM), a magnetic disk storage medium or another magnetic storage device, or any other medium that can be used to carry or store expected program code in a form of instructions or a data structure and that can be accessed by a computer. However, the memory 2602 is not limited thereto.

In a possible implementation, the memory 2602 may be independent of the processor 2601. The memory 2602 may be connected to the processor 2601 through the bus 2603, and is configured to store data, instructions, or program code. When the processor 2601 invokes and executes the instructions or program code stored in the memory 2602, the method provided in embodiments of this application, for example, the method shown in any one of FIG. 2 to FIG. 24, can be implemented.

In another possible implementation, the memory 2602 may alternatively be integrated with the processor 2601.

The communication interface 2604 is configured to connect the apparatus to another device through a communication network. The communication network may be the Ethernet, a radio access network (radio access network, RAN), a wireless local area network (wireless local area network, WLAN), or the like. The communication interface 2604 may include a receiving unit configured to receive data and a sending unit configured to send data.

The bus 2603 may be an industry standard architecture (industry standard architecture, ISA) bus, a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, only one thick line is used to represent the bus in FIG. 26, but this does not mean that there is only one bus or only one type of bus.

It should be noted that, in addition to the components shown in FIG. 26, the electronic device may include more or fewer components than those shown in the figure, or some components may be combined, or different component arrangements may be used.

In addition, it should be noted that the described apparatus embodiments are merely examples. The units described as separate parts may or may not be physically separate, and parts displayed as units may or may not be physical units, that is, may be located at one position, or may be distributed on a plurality of network units. Some or all of the modules may be selected based on actual requirements to achieve the objectives of the solutions of embodiments. In addition, in the accompanying drawings of the apparatus embodiments provided in this application, connection relationships between modules indicate that the modules have communication connections with each other, which may be specifically implemented as one or more communication buses or signal cables.

Based on the descriptions of the foregoing implementations, a person skilled in the art may clearly understand that this application may be implemented by using software in addition to necessary universal hardware, or certainly by using dedicated hardware, including a dedicated integrated circuit, a dedicated CPU, a dedicated memory, a dedicated component, and the like. Generally, all functions completed by a computer program can be easily implemented by using corresponding hardware, and a specific hardware structure used to implement a same function may be in various forms, for example, in a form of an analog circuit, a digital circuit, or a dedicated circuit. However, in this application, a software program implementation is a better implementation in most cases. Based on such an understanding, the technical solutions of this application essentially or a part contributing to the conventional technology may be implemented in a form of a software product. The computer software product is stored in a readable storage medium, for example, a floppy disk, a USB flash drive, a removable hard disk, a read-only memory (read-only memory, ROM), a random access memory (random access memory, RAM), a magnetic disk, or an optical disc of a computer, and includes several instructions for instructing a computer device (which may be a personal computer, a server, a network device, or the like) to perform the method described in embodiments of this application.

All or some of the foregoing embodiments may be implemented by using software, hardware, firmware, or any combination thereof. When software is used to implement the embodiments, all or some of the embodiments may be implemented in a form of a computer program product.

An embodiment of this application further provides a computer-readable storage medium. The computer-readable storage medium stores a program used to train a model or execute an inference task. When the program is run on a computer, the computer is enabled to perform all or some of the steps in the method described in the embodiments shown in FIG. 2 to FIG. 14.

An embodiment of this application further provides a digital processing chip. A circuit and one or more interfaces that are configured to implement the processor or a function of the processor are integrated into the digital processing chip. When a memory is integrated into the digital processing chip, the digital processing chip may implement the method steps in any one or more embodiments in the foregoing embodiments. When a memory is not integrated into the digital processing chip, the digital processing chip may be connected to an external memory through a communication interface. The digital processing chip implements the method steps in any one or more embodiments in the foregoing embodiments based on program code stored in the external memory.

An embodiment of this application further provides a computer program product. The computer program product includes one or more computer instructions. When the computer program instructions are loaded and executed on a computer, the procedure or functions according to embodiments of this application are completely or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (Solid State Disk, SSD)), or the like.

A person of ordinary skill in the art may understand that all or some of the steps of the methods in embodiments may be implemented by a program instructing relevant hardware. The program may be stored in a computer-readable storage medium. The storage medium may include: a ROM, a RAM, a magnetic disk, an optical disc, or the like.

In the specification, claims, and accompanying drawings of this application, the terms "first", "second", and the like are intended to distinguish between similar objects but do not necessarily indicate a specific order or sequence. It should be understood that data termed in such a way may be interchangeable in proper circumstances, so that embodiments described herein can be implemented in an order other than the order illustrated or described herein. The term "and/or" in this application describes only an association relationship between associated objects and represents that three relationships may exist. For example, A and/or B may represent the following three cases: Only A exists, both A and B exist, and only B exists. In addition, the character "/" in this specification generally indicates an "or" relationship between the associated objects. In addition, the terms "include", "have", and any other variant thereof are intended to cover a non-exclusive inclusion. For example, a process, method, system, product, or device that includes a series of steps or modules is not necessarily limited to those steps or modules that are expressly listed, but may include other steps or modules that are not expressly listed or that are inherent to the process, method, product, or device. Names or numbers of steps in this application do not mean that the steps in the method procedure need to be performed in a time/logical sequence indicated by the names or numbers. An execution sequence of the steps in the procedure that have been named or numbered can be changed based on a technical objective to be achieved, provided that same or similar technical effects can be achieved. Division into the modules in this application is logical division. In actual application, there may be another division manner. For example, a plurality of modules may be combined or integrated into another system, or some features may be ignored or may not be performed. In addition, the displayed or discussed mutual couplings or direct couplings or communication connections may be implemented through some interfaces, and the indirect couplings or communication connections between modules may be implemented in an electrical form or another similar form. This is not limited in this application. In addition, modules or sub-modules described as separate parts may or may not be physically separate, or may or may not be physical modules, or may be distributed on a plurality of circuit modules. Some or all of the modules may be selected based on actual requirements to achieve the objectives of the solutions of this application.

**Claims**

1.  A machine learning model training method, applied to an edge server, wherein the edge server belongs to a management domain of a cloud server, and the method comprises:

    obtaining a first machine learning submodel from the cloud server, wherein the first machine learning submodel is applied to a management domain of the edge server, and the management domain of the edge server is a subset of the management domain of the cloud server;
    performing federated learning with a plurality of client devices in the management domain of the edge server based on the first machine learning submodel and local service data of the management domain of the edge server, to obtain a second machine learning submodel; and
    sending the second machine learning submodel to the cloud server

2.  The method according to claim 1, wherein the first machine learning submodel is used to execute a set of sub-services in a user service.

3.  The method according to claim 1 or 2, wherein the management domain of the cloud server is divided based on network area information or network slice information.

4.  The method according to any one of claims 1 to 3, wherein the first machine learning submodel comprises a selector and a plurality of task models, and the obtaining a first machine learning submodel from the cloud server comprises:

    obtaining the selector from the cloud server;
    inputting the local service data of the management domain of the edge server into the selector, to obtain identifiers IDs of the plurality of task models;
    sending the IDs of the plurality of task models to the cloud server; and

receiving the plurality of task models sent by the cloud server.

5. The method according to claim 4, wherein the performing federated learning with a plurality of client devices in the management domain of the edge server based on the first machine learning submodel and local service data of the management domain of the edge server, to obtain a second machine learning submodel comprises:

sending the first machine learning submodel to the plurality of client devices, to trigger the plurality of client devices to use respective local service data and the selector to obtain weights corresponding to outputs of all the task models, and trigger the plurality of client devices to use the respective local service data, the plurality of task models, and the weights separately obtained by the plurality of client devices to obtain feature vectors corresponding to the local service data of the plurality of client devices;

receiving clustering features sent by the plurality of client devices, wherein the clustering features are obtained after the plurality of client devices cluster the feature vectors separately obtained by the plurality of client devices;

fusing clustering features with a same label, to obtain a fused clustering feature; and

sending the fused clustering feature to the plurality of client devices, to trigger the plurality of client devices to update parameters of the first machine learning submodel by using differences between the feature vectors and the fused clustering feature, wherein an updated first machine learning submodel is used to obtain the second machine learning submodel.

6. The method according to claim 5, wherein the fused clustering feature has a confidence interval, and the confidence interval of the fused clustering feature is obtained after confidence intervals of the clustering features that are with the same label and that are sent by the plurality of client devices are fused.

7. A machine learning model training method, applied to a cloud server, wherein a management domain of a first edge server is a first subset of a management domain of the cloud server, a management domain of a second edge server is a second subset of the management domain of the cloud server, and the method comprises:

sending a first machine learning submodel to the first edge server and sending a second machine learning submodel to the second edge server;

receiving a third machine learning submodel from the first edge server and receiving a fourth machine learning submodel from the second edge server, wherein the third machine learning submodel is obtained by performing federated learning with a plurality of client devices in the management domain of the first edge server based on the first machine learning submodel and local service data of the management domain of the first edge server, and the fourth machine learning submodel is obtained by performing federated learning with a plurality of client devices in the management domain of the second edge server based on the second machine learning submodel and local service data of the management domain of the second edge server; and

fusing the third machine learning submodel and the fourth machine learning submodel, to obtain a machine learning model.

8. The method according to claim 7, wherein the first machine learning submodel is used to execute a first set of sub-services in a user service.

9. The method according to claim 7, wherein the second machine learning submodel is used to execute a second set of sub-services in a user service.

10. The method according to any one of claims 7 to 9, wherein the management domain of the cloud server is divided based on network area information or network slice information.

11. The method according to any one of claims 7 to 10, wherein the first machine learning submodel comprises a selector and a plurality of first task models, the second machine learning submodel comprises a selector and a plurality of second task models, and the sending a first machine learning submodel to the first edge server and sending a second machine learning submodel to the second edge server comprises:

sending the selector to the first edge server and sending the selector to the second edge server;

receiving identifiers IDs of the plurality of first task models from the first edge server and receiving IDs of the plurality of second task models from the second edge server, wherein the IDs of the plurality of first task models are obtained by the first edge server by inputting the local service data of the management domain of the first edge server into the selector, and the IDs of the plurality of second task models are obtained by the second edge server by inputting the local service data of the management domain of the second edge server into the selector; and

sending the plurality of first task models to the first edge server and sending the plurality of second task models to the second edge server.

12. The method according to claim 11, wherein the method further comprises:

training an initial selector by using local service data of the management domain of the cloud server as training data and using correspondingly outputting an ID of a target task model for target training data as a training target, to obtain the selector, wherein the target training data is service data with a same label in the local service data of the management domain of the cloud server, and the ID of the target task model comprises an ID of at least one task model in a plurality of task models stored in the cloud server

13. The method according to claim 12, wherein the training data further comprises auxiliary data, and the auxiliary data comprises data with a same label as the local service data of the management domain of the cloud server

14. The method according to claim 12 or 13, wherein the training an initial selector by using local service data of the management domain of the cloud server as training data and using correspondingly outputting an ID of a target task model for target training data as a training target, to obtain the selector comprises:

fixing some parameters of the initial selector, and training the initial selector by using the local service data of the management domain of the cloud server as the training data and using correspondingly outputting the ID of the target task model for the target training data as the training target, to obtain the selector

15. The method according to claim 11, wherein the selector is N autoencoders, the N autoencoders are bound to N task models stored in the cloud server in a one-to-one manner, N is a positive integer greater than 1, and the method further comprises:

training an initial autoencoder by using service data with a same label in local service data of the management domain of the cloud server as training data, to obtain one of the autoencoders, wherein labels of training data of any two of the autoencoders are different.

16. A machine learning model training method, applied to a client device, wherein the client device belongs to a management domain of a cloud server, and the method comprises:

receiving a first machine learning submodel sent by an edge server, wherein the first machine learning submodel is applied to a management domain of the edge server, and the management domain of the edge server is a subset of the management domain of the cloud server; and

performing federated learning with the edge server and another client device in the management domain of the edge server based on the first machine learning submodel and local service data of the management domain of the edge server, to obtain a second machine learning submodel.

17. The method according to claim 16, wherein the first machine learning submodel is used to execute a set of sub-services in a user service.

18. The method according to claim 16 or 17, wherein the management domain of the cloud server is divided based on network area information or network slice information.

19. The method according to any one of claims 16 to 18, wherein the performing federated learning with the edge server and another client device in the management domain of the edge server based on the first machine learning submodel and local service data of the management domain of the edge server, to obtain a second machine learning submodel comprises:

receiving the first machine learning submodel sent by the edge server;

obtaining a feature vector based on local service data of the client device and the first machine learning submodel;

clustering the feature vector to obtain a clustering feature;

sending the clustering feature to the edge server, to trigger the edge server to fuse clustering features with a same label to obtain a fused clustering feature;

receiving the fused clustering feature sent by the edge server; and

updating a parameter of the first machine learning submodel by using a difference between the feature vector and the fused clustering feature, wherein an updated first machine learning submodel is used to obtain the second machine learning submodel.

20. The method according to claim 19, wherein the sending the clustering feature to the edge server, to trigger the edge server to fuse clustering features with a same label, to obtain a fused clustering feature comprises:
sending the clustering feature and a confidence interval of the clustering feature to the edge server, to trigger the edge server to: fuse the clustering features with the same label to obtain the fused clustering feature, and fuse confidence intervals of the clustering features with the same label to obtain a confidence interval of the fused clustering feature.

21. The method according to any one of claims 16 to 20, wherein the method further comprises:

obtaining target information, wherein the target information indicates proportions of service data with different labels in all service data of the management domain of the edge server; and
sampling all service data of the client device based on the target information and proportions of service data with the different labels in all the service data of the client device, to obtain the local service data of the client device, wherein local service data of different client devices is used to obtain the local service data of the management domain of the edge server.

22. A service data processing method, comprising:

obtaining, by a client device, first service data, wherein the client device belongs to a management domain of a cloud server;
inputting, by the client device, the first service data into a second machine learning submodel, to obtain a first feature vector, wherein the second machine learning submodel is obtained by the client device by performing federated learning with an edge server and another client device in a management domain of the edge server based on a first machine learning submodel and local service data of the management domain of the edge server, the first machine learning submodel is applied to the management domain of the edge server, and the management domain of the edge server is a subset of the management domain of the cloud server; and
obtaining, by the client device, a prediction result for the first service data based on the first feature vector.

23. The method according to claim 22, wherein the second machine learning submodel comprises a selector and a plurality of task models, and the inputting, by the client device, the first service data into a second machine learning submodel, to obtain a first feature vector comprises:

inputting, by the client device, the first service data into the selector and the plurality of task models;
obtaining, by the client device based on an output of the selector, a weight corresponding to each task model; and
weighting, by the client device, outputs of the plurality of task models based on the weight, to obtain the first feature vector.

24. The method according to claim 22 or 23, wherein the obtaining, by the client device, a prediction result for the first service data based on the first feature vector comprises:
obtaining, by the client device, the prediction result for the first service data based on a similarity between the first feature vector and at least one first fused clustering feature and a label of the at least one first fused clustering feature.

25. The method according to claim 22 or 23, wherein the obtaining, by the client device, a prediction result for the first service data based on the first feature vector comprises:
obtaining, by the client device, the prediction result for the first service data based on a similarity between the first feature vector and at least one first fused clustering feature, a confidence interval of the at least one first fused clustering feature, and a label of the at least one first fused clustering feature.

26. The method according to claim 25, wherein the similarity between the first feature vector and the at least one first fused clustering feature is less than a first threshold, or the first feature vector is not within a confidence interval of any first fused clustering feature, and the method further comprises:
broadcasting, by the client device, the first feature vector or the first service data in the management domain of the edge server.

27. The method according to claim 22 or 23, wherein the method further comprises:

obtaining, by the client device, a second feature vector, wherein a similarity between the second feature vector and at least one first fused clustering feature is less than a first threshold, or the second feature vector is not within a confidence interval of any first fused clustering feature; and

the obtaining, by the client device, a prediction result for the first service data based on the first feature vector comprises:

obtaining, by the client device, the prediction result for the first service data based on a similarity between the first feature vector and the at least one first fused clustering feature, a similarity between the first feature vector and the second feature vector, a label of the at least one first fused clustering feature, and a label of the second feature vector.

28. The method according to claim 22 or 23, wherein the method further comprises:

receiving, by the client device, a second fused clustering feature from the edge server, wherein a deviation between the second fused clustering feature and any first fused clustering feature exceeds a second threshold; and

the obtaining, by the client device, a prediction result for the first service data based on the first feature vector comprises:

obtaining, by the client device, the prediction result for the first service data based on a similarity between the first feature vector and at least one first fused clustering feature, a similarity between the first feature vector and the second fused clustering feature, a label of the at least one first fused clustering feature, and a label of the second fused clustering feature.

29. The method according to claim 28, wherein the method further comprises:

obtaining, by the client device, a prediction result for a third feature vector when the second fused clustering feature uses different confidence intervals, wherein a similarity between the third feature vector and the at least one first fused clustering feature is less than a first threshold, or the third feature vector is not within a confidence interval of any first fused clustering feature;

obtaining, by the client device, evaluation indicators for the different confidence intervals based on the prediction result;

sending, by the client device, the evaluation indicators of the different confidence intervals to the edge server, to trigger the edge server to obtain a confidence interval of the second fused clustering feature based on the obtained evaluation indicators of the different reference confidence intervals; and

receiving, by the client device, the confidence interval that is of the second clustering feature and that is sent by the edge server.

30. An edge server, wherein the edge server belongs to a management domain of a cloud server, and comprises:

a transceiver module, configured to obtain a first machine learning submodel from the cloud server, wherein the first machine learning submodel is applied to a management domain of the edge server, and the management domain of the edge server is a subset of the management domain of the cloud server; and

a processing module, configured to perform federated learning with a plurality of client devices in the management domain of the edge server based on the first machine learning submodel and local service data of the management domain of the edge server, to obtain a second machine learning submodel, wherein

the transceiver module is further configured to send the second machine learning submodel to the cloud server

31. The edge server according to claim 30, wherein the first machine learning submodel is used to execute a set of sub-services in a user service.

32. The edge server according to claim 30 or 31, wherein the management domain of the cloud server is divided based on network area information or network slice information.

33. The edge server according to any one of claims 30 to 32, wherein the transceiver module is specifically configured to:

obtain a selector from the cloud server;

send identifiers IDs of a plurality of task models to the cloud server, wherein the IDs of the plurality of task models are obtained after the processing module inputs the local service data of the management domain of the edge server into the selector; and

receive the plurality of task models sent by the cloud server.

34. The edge server according to claim 33, wherein the processing module is specifically configured to:

send the first machine learning submodel to the plurality of client devices through the transceiver module, to trigger the plurality of client devices to use respective local service data and the selector to obtain weights corresponding to outputs of all the task models, and trigger the plurality of client devices to use the respective local service data, the plurality of task models, and the weights separately obtained by the plurality of client devices to obtain feature vectors corresponding to the local service data of the plurality of client devices;

receive, through the transceiver module, clustering features sent by the plurality of client devices, wherein the clustering features are obtained after the plurality of client devices cluster the feature vectors separately obtained by the plurality of client devices;

fuse clustering features with a same label, to obtain a fused clustering feature; and

send the fused clustering feature to the plurality of client devices through the transceiver module, to trigger the plurality of client devices to update parameters of the first machine learning submodel by using differences between the feature vectors and the fused clustering feature, wherein an updated first machine learning submodel is used to obtain the second machine learning submodel.

35. The edge server according to claim 34, wherein the fused clustering feature has a confidence interval, and the confidence interval of the fused clustering feature is obtained after confidence intervals of the clustering features that are with the same label and that are sent by the plurality of client devices are fused.

36. A cloud server, wherein a management domain of a first edge server is a first subset of a management domain of the cloud server, a management domain of a second edge server is a second subset of the management domain of the cloud server, and the cloud server comprises:

a transceiver module, configured to send a first machine learning submodel to the first edge server and send a second machine learning submodel to the second edge server, wherein

the transceiver module is further configured to receive a third machine learning submodel from the first edge server and receive a fourth machine learning submodel from the second edge server, wherein the third machine learning submodel is obtained by performing federated learning with a plurality of client devices in the management domain of the first edge server based on the first machine learning submodel and local service data of the management domain of the first edge server, and the fourth machine learning submodel is obtained by performing federated learning with a plurality of client devices in the management domain of the second edge server based on the second machine learning submodel and local service data of the management domain of the second edge server; and

a processing module, configured to fuse the third machine learning submodel and the fourth machine learning submodel, to obtain a machine learning model.

37. The cloud server according to claim 36, wherein the first machine learning submodel is used to execute a first set of sub-services in a user service.

38. The cloud server according to claim 36, wherein the second machine learning submodel is used to execute a second set of sub-services in a user service.

39. The cloud server according to any one of claims 36 to 38, wherein the management domain of the cloud server is divided based on network area information or network slice information.

40. The cloud server according to any one of claims 36 to 39, wherein the first machine learning submodel comprises a selector and a plurality of first task models, the second machine learning submodel comprises a selector and a plurality of second task models, and the transceiver module is specifically configured to:

send the selector to the first edge server and send the selector to the second edge server;

receive identifiers IDs of the plurality of first task models from the first edge server and receive IDs of the plurality of second task models from the second edge server, wherein the IDs of the plurality of first task models are obtained by the first edge server by inputting the local service data of the management domain of the first edge server into the selector, and the IDs of the plurality of second task models are obtained by the second edge server by inputting the local service data of the management domain of the second edge server into the selector;

and
send the plurality of first task models to the first edge server and send the plurality of second task models to the second edge server

41. The cloud server according to claim 40, wherein the processing module is further configured to:
train an initial selector by using local service data of the management domain of the cloud server as training data and using correspondingly outputting an ID of a target task model for target training data as a training target, to obtain the selector, wherein the target training data is service data with a same label in the local service data of the management domain of the cloud server, and the ID of the target task model comprises an ID of at least one task model in a plurality of task models stored in the cloud server

42. The cloud server according to claim 41, wherein the training data further comprises auxiliary data, and the auxiliary data comprises data with a same label as the local service data of the management domain of the cloud server.

43. The cloud server according to claim 41 or 42, wherein the processing module is specifically configured to:
fix some parameters of the initial selector, and train the initial selector by using the local service data of the management domain of the cloud server as the training data and using correspondingly outputting the ID of the target task model for the target training data as the training target, to obtain the selector.

44. The cloud server according to claim 40, wherein the selector is N autoencoders, the N autoencoders are bound to N task models stored in the cloud server in a one-to-one manner, N is a positive integer greater than 1, and the processing module is further configured to:
train an initial autoencoder by using service data with a same label in local service data of the management domain of the cloud server as training data, to obtain one of the autoencoders, wherein labels of training data of any two of the autoencoders are different.

45. A client device, wherein the client device belongs to a management domain of a cloud server, and comprises:

a transceiver module, configured to receive a first machine learning submodel sent by an edge server, wherein the first machine learning submodel is applied to a management domain of the edge server, and the management domain of the edge server is a subset of the management domain of the cloud server; and
a processing module, configured to perform federated learning with the edge server and another client device in the management domain of the edge server based on the first machine learning submodel and local service data of the management domain of the edge server, to obtain a second machine learning submodel.

46. The client device according to claim 45, wherein the first machine learning submodel is used to execute a set of sub-services in a user service.

47. The client device according to claim 45 or 46, wherein the management domain of the cloud server is divided based on network area information or network slice information.

48. The client device according to any one of claims 45 to 47, wherein the processing module is specifically configured to:

receive, through the transceiver module, the first machine learning submodel sent by the edge server;
obtain a feature vector based on local service data of the client device and the first machine learning submodel;
cluster the feature vector to obtain a clustering feature;
send the clustering feature to the edge server through the transceiver module, to trigger the edge server to fuse clustering features with a same label to obtain a fused clustering feature;
receive, through the transceiver module, the fused clustering feature sent by the edge server; and
update a parameter of the first machine learning submodel by using a difference between the feature vector and the fused clustering feature, wherein an updated first machine learning submodel is used to obtain the second machine learning submodel.

49. The client device according to claim 48, wherein the transceiver module is specifically configured to:
send the clustering feature and a confidence interval of the clustering feature to the edge server, to trigger the edge server to: fuse the clustering features with the same label to obtain the fused clustering feature, and fuse confidence intervals of the clustering features with the same label to obtain a confidence interval of the fused clustering feature.

50. The client device according to any one of claims 45 to 49, wherein the transceiver module is further configured to:

obtain target information, wherein the target information indicates proportions of service data with different labels in all service data of the management domain of the edge server; and
the processing module is further configured to sample all service data of the client device based on the target information and proportions of service data with the different labels in all the service data of the client device, to obtain the local service data of the client device, wherein local service data of different client devices is used to obtain the local service data of the management domain of the edge server

51. A client device, wherein the client device belongs to a management domain of a cloud server, and the client device comprises:

a transceiver module, configured to obtain first service data; and
a processing module, configured to input the first service data into a second machine learning submodel, to obtain a first feature vector, wherein the second machine learning submodel is obtained by the client device by performing federated learning with an edge server and another client device in a management domain of the edge server based on a first machine learning submodel and local service data of the management domain of the edge server, the first machine learning submodel is applied to the management domain of the edge server, and the management domain of the edge server is a subset of the management domain of the cloud server, wherein
the processing module is further configured to obtain a prediction result for the first service data based on the first feature vector.

52. The client device according to claim 51, wherein the second machine learning submodel comprises a selector and a plurality of task models, and that the client device inputs the first service data into the second machine learning submodel, to obtain the first feature vector comprises:

the client device inputs the first service data into the selector and the plurality of task models;
the client device obtains, based on an output of the selector, a weight corresponding to each task model; and
the client device weights outputs of the plurality of task models based on the weight, to obtain the first feature vector.

53. The client device according to claim 51 or 52, wherein that the client device obtains the prediction result for the first service data based on the first feature vector comprises:
the client device obtains the prediction result for the first service data based on a similarity between the first feature vector and at least one first fused clustering feature and a label of the at least one first fused clustering feature.

54. The client device according to claim 51 or 52, wherein that the client device obtains the prediction result for the first service data based on the first feature vector comprises:
the client device obtains the prediction result for the first service data based on a similarity between the first feature vector and at least one first fused clustering feature, a confidence interval of the at least one first fused clustering feature, and a label of the at least one first fused clustering feature.

55. The client device according to claim 54, wherein the similarity between the first feature vector and the at least one first fused clustering feature is less than a first threshold, or the first feature vector is not within a confidence interval of any first fused clustering feature, and the client device further comprises:
the client device broadcasts the first feature vector or the first service data in the management domain of the edge server

56. The client device according to claim 51 or 52, wherein the client device further comprises:

the client device obtains a second feature vector, wherein a similarity between the second feature vector and at least one first fused clustering feature is less than a first threshold, or the second feature vector is not within a confidence interval of any first fused clustering feature; and
that the client device obtains the prediction result for the first service data based on the first feature vector comprises:
the client device obtains the prediction result for the first service data based on a similarity between the first feature vector and the at least one first fused clustering feature, a similarity between the first feature vector and the second feature vector, a label of the at least one first fused clustering feature, and a label of the second feature vector.

57. The client device according to claim 51 or 52, wherein the client device further comprises:

the client device receives a second fused clustering feature from the edge server, wherein a deviation between the second fused clustering feature and any first fused clustering feature exceeds a second threshold; and that the client device obtains the prediction result for the first service data based on the first feature vector comprises:

the client device obtains the prediction result for the first service data based on a similarity between the first feature vector and at least one first fused clustering feature, a similarity between the first feature vector and the second fused clustering feature, a label of the at least one first fused clustering feature, and a label of the second fused clustering feature.

58. The client device according to claim 57, wherein the client device further comprises:

the client device obtains a prediction result for a third feature vector when the second fused clustering feature uses different confidence intervals, wherein a similarity between the third feature vector and the at least one first fused clustering feature is less than a first threshold, or the third feature vector is not within a confidence interval of any first fused clustering feature;

the client device obtains evaluation indicators for the different confidence intervals based on the prediction result; the client device sends the evaluation indicators of the different confidence intervals to the edge server, to trigger the edge server to obtain a confidence interval of the second fused clustering feature based on the obtained evaluation indicators of the different reference confidence intervals; and

the client device receives the confidence interval that is of the second clustering feature and that is sent by the edge server

59. An edge server, comprising:

a memory, wherein the memory stores executable program instructions; and a processor, wherein the processor is configured to: be coupled to the memory, and read and execute instructions in the memory to trigger the edge server to implement the method according to any one of claims 1 to 6.

60. A cloud server, comprising:

a memory, wherein the memory stores executable program instructions; and a processor, wherein the processor is configured to: be coupled to the memory, and read and execute instructions in the memory to trigger the cloud server to implement the method according to any one of claims 7 to 15.

61. A client device, comprising:

a memory, wherein the memory stores executable program instructions; and a processor, wherein the processor is configured to: be coupled to the memory, and read and execute instructions in the memory to trigger the client device to implement the method according to any one of claims 16 to 21 or the method according to any one of claims 22 to 29.

62. A computer-readable storage medium, comprising instructions, wherein when the instructions are run on a computer, the computer is enabled to perform the method according to any one of claims 1 to 6, the method according to any one of claims 7 to 15, or the method according to any one of claims 16 to 29.

63. A machine learning model obtaining system, wherein the system comprises a cloud server, a first edge server, a second edge server, and client devices, a management domain of the first edge server is a first subset of a management domain of the cloud server, and a management domain of the second edge server is a second subset of the management domain of the cloud server;

the first edge server is configured to: receive a first machine learning submodel from the cloud server; and perform federated learning with a plurality of client devices in the management domain of the first edge server based on the first machine learning submodel and local service data of the management domain of the first edge server, to obtain a third machine learning submodel, wherein the first machine learning submodel is applied to the management domain of the first edge server;

the second edge server is configured to: receive a second machine learning submodel from the cloud server; and perform federated learning with a plurality of client devices in the management domain of the second edge server based on the second machine learning submodel and local service data of the management domain of the second edge server, to obtain a fourth machine learning submodel, wherein the second machine learning submodel is applied to the management domain of the second edge server; and

the cloud server is configured to: receive the third machine learning submodel from the first edge server and receive the fourth machine learning submodel from the second edge server; and fuse the third machine learning submodel and the fourth machine learning submodel, to obtain a machine learning model.

FIG. 1a

**Cloud server**

Fused model 1 — Model fusion → Fused model 3 — Fused model 2

Send the fused model 1 / Send the fused model 3

Send the fused model 3 / Send the fused model 2

**Edge server A**

Local model 1 — Model fusion → Fused model 1 — Local model 2

Send the local model 1 / Send the fused model 3

Send the local model 2 / Send the fused model 3

**Client device A**

Local data 1 → Local model 1

**Client device B**

Local data 2 → Local model 2

**Edge server B**

Local model 3 — Model fusion → Fused model 2 — Local model 4

Send the local model 3 / Send the fused model 3

Send the local model 4 / Send the fused model 3

**Client device C**

Local data 3 → Local model 3

**Client device D**

Local data 4 → Local model 4

```
            ┌──────────┐
            │ NWDAF/   │
            │ RDAF     │
            └────┬─────┘
         ┌───────┴───────┐
    ┌────┴─────┐     ┌────┴─────┐
    │ NWDAF/   │ ... │ NWDAF/   │
    │ RDAF     │     │ RDAF     │
    └──┬────┬──┘     └──┬────┬──┘
  ┌────┴┐ ┌─┴────┐   ┌──┴──┐ ┌─┴────┐
  │UE/  │ │UE/   │   │UE/  │ │UE/   │
  │5GS  │..│5GS  │   │5GS  │..│5GS  │
  └─────┘ └──────┘   └─────┘ └──────┘
```

FIG. 1b

```
┌──────────────┐   ┌──────────────┐   ┌──────────────┐
│ Second server│   │ First server │   │ Client device│
└──────┬───────┘   └──────┬───────┘   └──────┬───────┘
       │                  │                  │
       │   201: Identifier of a              │
       │◄─────── target task model ──────────│
       │                  │                  │
       │                  │           ┌──────┴───────────┐
       │                  │           │203: Train the target│
       │── 202: Target task model ──►│           │task model based on│
       │                  │           │data obtained by the│
       │                  │─ Target task model ─►│client device, to  │
       │                  │           │obtain a trained   │
       │                  │           │target task model  │
       │                  │           └──────┬───────────┘
       │          ┌───────┴────────┐         │
       │          │204: Fuse trained target task│
       │          │models from different client │
       │          │devices, to obtain a first fused│
       │          │task model      │         │
       │          └───────┬────────┘         │
┌──────┴───────┐          │                  │
│205: Fuse first fused│   │                  │
│task models from│◄─ First fused task model ─│
│different first servers,│ │                  │
│to obtain a second│      │                  │
│fused task model│        │                  │
└──────┬───────┘          │                  │
       │                  │                  │
```

FIG. 2

Data of a client has a
similar distribution
feature as the data A

↓

ID of a target
task model    Task model 1

Have good feature extraction effect for the data A | Have good feature extraction effect for the data B | Have good feature extraction effect for the data C | Have good feature extraction effect for the data D

Task model 1 | Task model 2 | Task model 3 | ··· | Task model t

One type of data or several types of data: data A

One type of data or several types of data: data B

One type of data or several types of data: data C

One type of data or several types of data: data D

Data of all types in a system

FIG. 3

EP 4 455 951 A1

```
┌─────────────────┐      ┌─────────────────┐      ┌─────────────────┐
│  Second server  │      │   First server  │      │   Client device │
└─────────────────┘      └─────────────────┘      └─────────────────┘
         │                        │                        │
         │              ┌───────────────────────┐          │
         │              │ 401: Obtain a selector │          │
         │              └───────────────────────┘          │
         │                        │                        │
         │     ┌──────────────────────────────────────┐    │
         │     │ 402: Obtain an ID of a target task     │    │
         │     │ model based on a first ID whose        │    │
         │     │ quantity exceeds a first threshold in  │    │
         │     │ a plurality of first IDs               │    │
         │     └──────────────────────────────────────┘    │
         │   403: Identifier of the                         │
         │◄── target task model ──                          │
         │                        │                        │
         │                        │              ┌────────────────────┐
         │── 404: Target task model ──►          │ 405: Train the     │
         │                        │              │ target task model  │
         │                ─ Target task model ──►│ based on data      │
         │                        │              │ obtained by the    │
         │                        │              │ client device, to  │
         │                        │              │ obtain a trained   │
         │                        │              │ target task model  │
         │                        │              └────────────────────┘
         │         ┌──────────────────────────────┐
         │         │ 406: Fuse trained target task │
         │         │ models from different client  │
         │         │ devices, to obtain a first    │
         │         │ fused task model              │
         │         └──────────────────────────────┘
  ┌────────────────┐
  │ 407: Fuse first│
  │ fused task     │◄─ First fused task model ─
  │ models from    │
  │ different first│
  │ servers, to    │
  │ obtain a second│
  │ fused task model│
  └────────────────┘
```

FIG. 4

FIG. 5a

FIG. 5b

FIG. 5c

FIG. 6

Autoencoder

x

Encoder

y

Decoder

X"

Reduce a difference
between X" and x

FIG. 7

Task
model 1

Task
model 2

Task
model 3

...

Task
model 4

Selector

Autoencoder
1

Autoencoder
2

Autoencoder
3

...

Autoencoder
N

Have good
coding effect on
data with one
type of label or
several types of
labels

FIG. 8

FIG. 9

EP 4 455 951 A1

Input data

Autoencoder

Primary autoencoder

1st neural network layer

2nd neural network layer

Evolved version of the primary autoencoder

1st neural network layer

2nd neural network layer

Task model

Primary task model

1st neural network layer

2nd neural network layer

Evolved version of the primary task model

1st neural network layer

2nd neural network layer

Output selector

Feature vector

FIG. 10

| Second server | First server | Client device |
|---|---|---|

901: Feature extraction model

902: Input obtained data into the feature extraction model, to obtain at least one clustering center

903: Fuse obtained anchor feature vector sets, to obtain at least one first fused clustering center

Anchor feature vector set

904: At least one first fused clustering center

905: Update the feature extraction model by using the first fused clustering center

906: Fuse updated feature extraction models from different client devices

Updated feature extraction model

907: Fused feature extraction model

908: Trained feature extraction model

FIG. 11

FIG. 12

Input data

1st layer: feature
extraction model

Selector

Target
task
model
1-1

Target
task
model
1-2

...

Target
task
model
1-N

Weighted
summator

2nd layer: feature
extraction model

Selector

Target
task
model
2-1

Target
task
model
2-2

...

Target
task
model
2-N

Weighted
summator

Feature vector

FIG. 13

Feature vectors

Clustering

Anchor feature vector set

● (Label 1)　　　　● (Label 1)　　　　● (Label 2)

FIG. 14

Feature vector whose
confidence of a label of the
clustering center is greater
than a threshold

Feature vector whose
confidence of the label of the
clustering center is less than
the threshold

Clustering center

Confidence interval

FIG. 15

A client device obtains to-be-processed data — 1401

The client device inputs the to-be-processed data into a target model, to obtain a feature vector — 1402

The client device obtains a prediction result for the to-be-processed data based on a similarity between the feature vector and at least one second fused clustering center — 1403

FIG. 16

Feature vectors

Measure similarities with second fused clustering centers

(Label 2)

(Label 1)

(Label 4)

(Label 3)

(Label 5)

Prediction result (determined based on a label of a second fused clustering center with a high similarity, for example, the label 2)

FIG. 17

Feature vectors

(Second fused clustering center 1)

(Second fused clustering center 3)

(Second fused clustering center 4)

(Second fused clustering center 2)

Prediction result (falling within a confidence interval of the second fused clustering center 3 and a confidence interval of the second fused clustering center 4, and having a higher similarity with the second fused clustering center 3)

FIG. 18

A client device obtains first to-be-processed data — 1701

The client device inputs the first to-be-processed data into a target model, to obtain a first feature vector — 1702

If a similarity between the first feature vector and any second fused clustering center is less than a threshold, or the first feature vector is not within a confidence interval of any second fused clustering center, the client device stores the first to-be-processed data — 1703

The client device obtains second to-be-processed data — 1704

The client device inputs the second to-be-processed data into the target model, to obtain a second feature vector — 1705

The client device obtains a prediction result for the to-be-processed data based on a similarity between the second feature vector and at least one second fused clustering center and a similarity between the second feature vector and the first feature vector — 1706

FIG. 19

```
┌─────────────┐      ┌─────────────┐      ┌──────────────┐
│ Cloud server│      │ Edge server │      │ Client device│
└──────┬──────┘      └──────┬──────┘      └──────┬───────┘
       │──── Selector ──────▶│  Calculate IDs of         │
       │                    │   K task models           │
       │                    │   with highest            │
       │                    │   usage by using          │
       │◀──── IDs of the K ──│   local data              │
       │      task models   │                           │
       │─── K task models ──▶│                           │
       │                    │                           │
       │         ┌──────────────────────────┐           │
       │         │ Obtain a feature extraction│         │
       │         │ model by combining the K  │          │
       │         │ task models and the selector│        │
       │         └──────────────────────────┘           │
       │                    │                           │   Repeatedly
       │                    │─── Feature extraction ───▶│   perform until
       │                    │       model               │   a preset stop
       │                    │                           │   condition is
       │                    │◀── Anchor feature ────────│   met
       │                    │     vector set            │
       │         ┌──────────────────┐                   │
       │         │ Calculate an edge │                  │
       │         │ server–level anchor│                 │
       │         │ feature vector set │                 │
       │         └──────────────────┘                   │
       │                    │── Edge server–level ─────▶│
       │                    │   anchor feature          │  Update the
       │                    │   vector set              │   feature
       │                    │                           │  extraction
       │                    │◀── Updated feature ───────│   model
       │                    │    extraction model       │
       │         ┌──────────────────┐                   │
       │         │ Calculate an edge │                  │
       │         │ server–level feature│                │
       │         │ extraction model  │                  │
       │         └──────────────────┘                   │
       │                    │── Edge server–level ─────▶│
       │                    │   feature extraction      │
       │                    │   model                   │
       │◀──── Trained feature │                         │
       │      extraction model│                         │
┌──────────────────┐        │                           │
│ Calculate a cloud │       │                           │
│ server–level feature│     │                           │
│ extraction model  │       │                           │
└──────────────────┘        │                           │
```

FIG. 20

Edge server | Client device

—————— Error case ——————

Obtain an error
case–generated anchor
feature vector set

Calculate evaluation
indicators corresponding
to different confidence
intervals

Different confidence
intervals and evaluation
indicators corresponding
to the different
confidence intervals

Calculate a confidence
interval, and delete an
error case in the
confidence interval

Error case–generated
anchor feature vector set

Output an inference
result by using a
feature extraction
model and a classifier

**FIG. 21**

Input data

Feature
extraction model

Classifier

Output result

Anchor feature
vector set
generated in a
training phase

Error case–
generated anchor
feature vector set

Error case feature
vector set

Anchor feature
vector sets

**FIG. 22**

Input data

Feature
extraction
model

Selector

Target
task
model
1-1

Target
task
model
1-2

...

Target
task
model
1-N

Weighted summator

Feature vector

Classifier

Similarity
measurement
model

Similarity
measurement
result

Weighted
summator

| Anchor feature vector 1, confidence | Anchor label 1 | Anchor feature vector set |
| Anchor feature vector 2, confidence | Anchor label 2 | |
| Anchor feature vector 3, confidence | Anchor label 3 | |
| Anchor feature vector 4, confidence | Anchor label 4 | |

| Error case feature vector 1, confidence | Error case label 1 | Error case feature vector set |
| Error case feature vector 2, confidence | Error case label 2 | |
| Error case feature vector 3, confidence | Error case label 3 | |

Output result

FIG. 23

EP 4 455 951 A1

Cloud server

| Voice recognition model 1 | Voice recognition model 2 | Voice recognition model 3 | ... |

Fused voice model 3 / Voice recognition model 1

Fused voice model 4 / Voice recognition model 2

Edge server A    Fused voice model 1

Model fusion

| Updated voice recognition model 1-1 | Updated voice recognition model 1-2 |

Edge server B    Fused voice model 2

Model fusion

| Updated voice recognition model 2-1 | Updated voice recognition model 2-2 |

Updated voice recognition model 1-1 / Voice recognition model 1

Updated voice recognition model 1-2 / Voice recognition model 1

Updated voice recognition model 2-1 / Voice recognition model 2

Updated voice recognition model 2-2 / Voice recognition model 2

16:02

Voice recognition

(Participant 1: mainly uses Cantonese)

16:02

Voice recognition

(Participant 2: mainly uses Cantonese)

16:02

Voice recognition

(Participant 3: mainly uses Northeastern dialect)

16:02

Voice recognition

(Participant 4: mainly uses Northeastern dialect)

FIG. 24

FIG. 25

FIG. 26

## INTERNATIONAL SEARCH REPORT

| International application No. |
|---|
| **PCT/CN2023/082652** |

**A.    CLASSIFICATION OF SUBJECT MATTER**

G06N 20/00(2019.01)i

According to International Patent Classification (IPC) or to both national classification and IPC

**B.    FIELDS SEARCHED**

Minimum documentation searched (classification system followed by classification symbols)

G06N

Documentation searched other than minimum documentation to the extent that such documents are included in the fields searched

Electronic data base consulted during the international search (name of data base and, where practicable, search terms used)

VEN, CNABS, CNTXT, WOTXT, USTXT, EPTXT, CNKI, IEEE: 模型, 训练, 联邦, 云, 边侧, 边缘, 服务器, 客户端, 区域, 片, 选择, 任务, ID, 融合, 聚类, 聚合, model, train+, federal, cloud, side, edge, server, client, region, slice, selection, task, fusion, cluster, aggregation

**C.    DOCUMENTS CONSIDERED TO BE RELEVANT**

| Category* | Citation of document, with indication, where appropriate, of the relevant passages | Relevant to claim No. |
|---|---|---|
| X | CN 112532451 A (ANHUI UNIVERSITY OF TECHNOLOGY) 19 March 2021 (2021-03-19) description, paragraphs 7-45 | 1-3, 7-10, 16-22, 24-32, 36-39, 45-51, 53-63 |
| Y | CN 112532451 A (ANHUI UNIVERSITY OF TECHNOLOGY) 19 March 2021 (2021-03-19) description, paragraphs 7-45 | 4-6, 11-15, 23, 33-35, 40-44, 52 |
| Y | CN 111241850 A (ALIPAY (HANGZHOU) INFORMATION TECHNOLOGY CO., LTD.) 05 June 2020 (2020-06-05) description, paragraphs 19-42 | 4-6, 11-15, 23, 33-35, 40-44, 52 |
| A | CN 112181666 A (HUAQIAO UNIVERSITY) 05 January 2021 (2021-01-05) entire document | 1-63 |
| A | CN 114154643 A (ZHEJIANG NORMAL UNIVERSITY) 08 March 2022 (2022-03-08) entire document | 1-63 |

☐ Further documents are listed in the continuation of Box C.    ☑ See patent family annex.

| | |
|---|---|
| \*    Special categories of cited documents:<br>"A"    document defining the general state of the art which is not considered to be of particular relevance<br>"D"    document cited by the applicant in the international application<br>"E"    earlier application or patent but published on or after the international filing date<br>"L"    document which may throw doubts on priority claim(s) or which is cited to establish the publication date of another citation or other special reason (as specified)<br>"O"    document referring to an oral disclosure, use, exhibition or other means<br>"P"    document published prior to the international filing date but later than the priority date claimed | "T"    later document published after the international filing date or priority date and not in conflict with the application but cited to understand the principle or theory underlying the invention<br>"X"    document of particular relevance; the claimed invention cannot be considered novel or cannot be considered to involve an inventive step when the document is taken alone<br>"Y"    document of particular relevance; the claimed invention cannot be considered to involve an inventive step when the document is combined with one or more other such documents, such combination being obvious to a person skilled in the art<br>"&"    document member of the same patent family |

| Date of the actual completion of the international search | Date of mailing of the international search report |
|---|---|
| **27 April 2023** | **22 May 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/082652**

| Patent document cited in search report | | | Publication date (day/month/year) | Patent family member(s) | | | Publication date (day/month/year) |
|---|---|---|---|---|---|---|---|
| CN | 112532451 | A | 19 March 2021 | None | | | |
| CN | 111241850 | A | 05 June 2020 | HK | 40030603 | A0 | 05 March 2021 |
| CN | 112181666 | A | 05 January 2021 | None | | | |
| CN | 114154643 | A | 08 March 2022 | None | | | |

Form PCT/ISA/210 (patent family annex) (July 2022)

**EP 4 455 951 A1**

**Patent documents cited in the description**

- CN 202210311612